(19) Europäisches Patentamt / European Patent Office / Office européen des brevets

(11) **EP 3 667 983 B1**

## (12) EUROPEAN PATENT SPECIFICATION

(45) Date of publication and mention
of the grant of the patent:
**06.09.2023 Bulletin 2023/36**

(21) Application number: **18843729.7**

(22) Date of filing: **21.06.2018**

(51) International Patent Classification (IPC):
**H04L 5/00** (2006.01)    **H04W 72/04** (2023.01)
**H04L 27/26** (2006.01)

(52) Cooperative Patent Classification (CPC):
**H04L 5/0048; H04L 5/0053; H04L 27/2602;
H04W 72/04; H04L 5/0012**

(86) International application number:
**PCT/CN2018/092244**

(87) International publication number:
**WO 2019/029280 (14.02.2019 Gazette 2019/07)**

(54) **PUCCH TRANSMISSION METHOD, USER EQUIPMENT AND DEVICE**

PUCCH-ÜBERTRAGUNGSVERFAHREN, BENUTZERGERÄT UND VORRICHTUNG

PROCÉDÉ DE TRANSMISSION DE PUCCH, ÉQUIPEMENT UTILISATEUR ET DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.08.2017 CN 201710687285**

(43) Date of publication of application:
**17.06.2020 Bulletin 2020/25**

(73) Proprietor: **Datang Mobile Communications
Equipment Co., Ltd.
Beijing 100085 (CN)**

(72) Inventor: **GAO, Xuejuan
Beijing 100191 (CN)**

(74) Representative: **Cabinet Nony
11 rue Saint-Georges
75009 Paris (FR)**

(56) References cited:
EP-A1- 3 641 200    CN-A- 103 026 677
CN-A- 106 559 198    US-A1- 2017 164 352

- **CATT: "Long PUCCH for small UCI payloads",
3GPP DRAFT; R1-1710085, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Qingdao,
P.R. China; 20170627 - 20170630 26 June 2017
(2017-06-26), XP051299309, Retrieved from the
Internet:
URL:http://www.3gpp.org/ftp/Meetings_3GPP_
SYNC/RAN1/Docs/ [retrieved on 2017-06-26]**
- **CATT: "Long PUCCH for moderate and large UCI
payloads", 3GPP DRAFT; R1-1710086, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG1, no. Qingdao,
P.R. China; 20170627 - 20170630 26 June 2017
(2017-06-26), XP051299310, Retrieved from the
Internet:
URL:http://www.3gpp.org/ftp/Meetings_3GPP_
SYNC/RAN1/Docs/ [retrieved on 2017-06-26]**
- **Intel Corporation: "Long PUCCH formats", 3GPP
TSG RAN WG1 Meeting #88b, R1-1704752, 25
March 2017 (2017-03-25), XP051242890,**

**Description**

This application claims the benefit of Chinese Patent Application No. 201710687285.4, filed with the Chinese Patent Office on August 11, 2017, and entitled "PUCCH TRANSMISSION METHOD, USER EQUIPMENT AND DEVICE".

**Field**

The present application relates to the technical field of communications, and particular to a physical uplink control channel (PUCCH) transmission method, a user equipment, a device and a computer-readable storage medium.

**Background**

In an LTE (Long Term Evolution) system, PUCCH (Physical Uplink Control Channel) transmission is performed with a subframe as a unit, the number of resource symbols occupied by a PUCCH in one slot is fixed, and only one PUCCH structure is defined in the LTE system. Therefore, when PUCCH transmission is performed in the LTE system, the PUCCH transmission can be directly realized by the defined unique PUCCH structure.

With the development and change of mobile communication service requirements, organizations such as the ITU (International Telecommunication Union) and the 3rd generation partnership project (3GPP) take up research on a new wireless communication system such as 5G NR (5 Generation New RAT (Radio Access Technology)).

Two PUCCHs, namely a long PUCCH and a short PUCCH performing transmission in one slot, are defined in the new wireless communication system. The number of resource symbols occupied by the long PUCCH in the slot is not fixed, and the PUCCH structure adopted in the system is not fixed either, so that an existing PUCCH transmission way is incapable of adapting to the new wireless communication system.

Based on the above, no related method or device supports PUCCH transmission in the new wireless communication system.

The article in the name of CATT entitled: "Long PUCCH for small UCI payloads", 3GPP DRAFT, R1-1710085 discloses a design of the NR long duration PUCCH format for small UCI payloads, and discloses the following proposals:

Proposal 1: The UCI-RS structure for long NR-PUCCH format can be defined in the specification for each length including at least the following aspect:

UCI and RS position
Length of time domain OCC
Frequency hopping point when frequency hopping is configured

Proposal 2: Further evaluation is required for length of 4-7 symbols to select one suitable structure for each length of long NR-PUCCH and also to see if a unified structure can be used for long NR-PUCCH with and without frequency hopping for each length.

Proposal 3: A unified UCI and RS structure should be used for the same length of NR-PUCCH with and without frequency hopping when the length is no less than 7 symbols.

Proposal 4: Frequency hopping should be configurable at least for the length of 4-7 symbols NR-PUCCH.

Proposal 5: Frequency hopping can be mandatory for the length of 8-14 symbols NR-PUCCH.

Proposal 6: When unified UCI and RS structure is used for the same length of NR-PUCCH with and without frequency hopping, frequency hopping point can be decided by partitioning the to ω llength N into two groups as the following method:

the number of symbols is group 1 is $N_{symbol\text{-}group1} = \lfloor N/2 \rfloor$ and the number of symbols in group 2 is $N_{symbol\text{-}group2} = N - \lfloor N/2 \rfloor$ or, the number of symbols in group 1 is $N_{symbol\text{-}group1} = \lceil N/2 \rceil$ and the number of symbols in group 2 is $N_{symbol\text{-}group2} = N - \lceil N/2 \rceil$.

The article in the name of CATT entitled: "Long PUCCH for moderate and large UCI payloads", 3GPP DRAFT, R1-1710086 discloses a design of the NR long duration PUCCH format for moderate and large UCI payloads, and discloses the following proposals:

Proposal 1: For UC1 payload of more than 2 bits the long duration PUCCH format can reuse some design principles of LTE PUCCH formats 4 structure such as RS overhead, channel coding and rate matching according to the available resource.

Proposal 2: UCI can RS structure for long NR-PUCCH format for more than 2 bits UC1 can be pre-defined in specification for each length including at least the following aspects:

UCI and RS position
Frequency hopping point when frequency hopping is configured

Proposal 3: A unified UCI and RS structure should be used for the same length of NR-PUCCH with and without frequency hopping when the length is no less than 7 symbols.

Proposal 4: Frequency hopping should be configurable at least for the length of 4-7 symbols NR-PUCCH.

Proposal 5: Frequency hopping can be mandatory for the length of 8-14 symbols NR-PUCCH.

Proposal6: When unified UCI and RS structure is used for the same length of NR-PUCCH with and without frequency hopping, frequency hopping point can be decided by partitioning the toωllength N into two groups as the following method:

the number of symbols is group 1 is $N_{symbol\text{-}group1}=\lfloor N/2 \rfloor$ and the number of symbols in group 2 is $N_{symbol\text{-}group2}=N-\lfloor N/2 \rfloor$ or, the number of symbols in group 1 is $N_{symbol\text{-}group1}=\lceil N/2 \rceil$ and the number of symbols in group 2 is $N_{symbol\text{-}group2}=N-\lceil N/2 \rceil$.

Proposal 7: To support UC1 multiplexing from multiple LTEs on the same resource, frequency domain OCC can be considered for user separation.

## Summary

Provided by the embodiments of the present application are a PUCCH transmission method, a user equipment, a device and a computer-readable storage medium, used to solve the technical problem in the prior art wherein no related method or device supports PUCCH transmission in a new wireless communication system. The present invention is defined by the appended independent claims. Specific embodiments are as defined in the dependent claims.

During implementation of the present application, firstly, the number A of symbols occupied by a PUCCH needing transmission is determined, then, a corresponding PUCCH structure set is determined according to the number A of the symbols, a PUCCH structure corresponding to the PUCCH is determined from the PUCCH structure set, and PUCCH transmission is performed on the basis of the PUCCH structure corresponding to the PUCCH.

The PUCCH structure set corresponds to the number of the symbols, and any one of the PUCCH structures includes symbol locations, the number of which is same as that of the symbols, and therefore, the PUCCH transmission method in the embodiment of the present application can meet the demand for the unfixed number of the symbols occupied by the PUCCH and support the PUCCH transmission in the new wireless communication system.

Further, in the embodiment of the present application, by determining a PUCCH structure from the PUCCH structure set after determining the PUCCH structure set, it is guaranteed that the PUCCH transmission can still be normally performed when the number of resource symbols corresponds to multiple PUCCH structures.

Further, the distribution rules for the symbol locations of different PUCCH structures in the PUCCH structure set and/or the number of the symbol locations used for transmitting RS are different, and therefore, the PUCCH transmission method in the embodiment of the present application can support different PUCCH transmission demands in scenes such as frequency hopping or not and different movement speeds.

## Brief Description of the Drawings

In order to more clearly describe technical schemes in the embodiments of the present application or the prior art, accompanying drawings required in the description of the emboidments and the prior art are simply introduced below, obviously, the accompanying drawings in the following description are used for illustrating some embodiments of the present application, and other accompanying drawings can also be obtained by those ordinarily skilled in the art without crative work according to the following ones.

Fig. 1 is a flow diagram of a PUCCH transmission method in an embodiment of the present application;
Fig. 2 is a flow diagram of another PUCCH transmission method in an embodiment of the present application;
Fig. 3 is a structural block diagram of a user equipment in an embodiment of the present application;

Fig. 4 is a structural block diagram of a device in an embodiment of the present embodiment;
Fig. 5 is a schematic structural diagram of a user equipment in an embodiment of the present application;
Fig. 6 is a schematic structural diagram of a device in an embodiment of the present invention.

## Detailed Description of the Embodiments

In order to make the objectives, technical schemes and advantages of the present application clearer, the technical schemes in the embodiments of the present application will be clearly and competely described below in conjunction with the accompanying drawings in the embodiments of the present application, and obviously, the described embodiments are only illustrative ones, and are not all possible ones of the present application.

The embodiments of the present application and feactures in the embodiments can be arbitrarily combined under the condition that no conflicts exist. Moreover, although a logic order is shown in the flow diagrams, the shown or described operations can be performed in an order different from the order given herein under some conditions.

In addition, items "and/or" used herein only represent an association relationship for describing associated objects and may refer to three relationships, for example, A and/or B can represent three situations that A exists alone, A and B exist at the same time, and B exists alone. In addition, unless otherwise specifically stated, the character "/" used herein generally shows that the front and back associated objects are in an "or" relationship.

For the sake of a better understanding of the above-mentioned technical schemes, the above-mentioned technical schemes will be described in detail below in conjunction with the accompanying drawings of the specification and specific implemtnations.

Firstly, the application scene of the present application is introduced.

A new frame structure supporting different baseband parameters (numerology including parameters such as a subcarrier spacing) is defined in a new wireless communication system. For different baseband parameters, the length of one subframe is defined to be 1 ms all the time, one subframe contains the number A of slots. Corresponding to different baseband parameters, the number A may be different so as to meet the demand that the length of one subframe is 1 ms. For different baseband parameters, one slot may contain 7 or 14 symbols (symbols such as OFDM (Orthogonal Frequency Division Multiplexing) or DFT-S-OFDM (Discrete Fourier Transform-Spreading-OFDM)). One slot may have various slot structures/formats, and different slot structures/formats correspond to different uplink and downlink resource partitioning, for example, all of the plurality of symbols in one slot may be used for downlink transmission, namely DL only slot; all of the plurality of symbols in one slot may also be used for uplink transmission, namely LTL only slot; or part of symbols in one slot may be used for uplink transmission and part of symbols in the one slot may be used for downlink transmission, namely DL+UL, slot. A terminal may be informed of the slot structures/formats semi-staticaly by RRC signaling or dynamically by group common signaling (Group Common PDCCH), so that dynamic changes to the slot structures are realized.

The number of uplink symbols contained in one slot may be changed, and therefore, two NR-PUCCHs, namely a long NR-PUCCH (Physical Uplink Control Channel) and a short NR-PUCCH, are defined in a 5G NR system, wherein the long NR-PUCCH may be transmitted by occupying 4 to 14 symbols in one slot, and uplink control information (UCI) and pilots ( a reference signal (RS)) are transmitted in a time division multiplexing (TDM) way, namely UCI and RS are transmitted by respectively occupying different symbols. In order to improve the uplink transmission performance, a frequency hopping structure may be used in the multiple symbols occuplied by the long NR-PUCCH to obtain frequency domain diversity gains; of course, in order to increase the multiplexing capacity of users, the frequency hopping structure may not be used.

The core concept of the embodiments of the present application lies in that at least two UCI and RS structures are defined for each or parts of multiple transmission lengths supported by the long PUCHH, wherein the number of RS symbols of the different UCI and RS structures is different, or only one UCI and RS structure is defined for each of the multiple transmission lengths supported by the long PUCCH.

In order to better understand the above-mentioned technical schemes, the above-mentioned technical schemes will be described in detail below in conjunction with the accompanying drawings of the specification and the specific implemtnations.

It should be noted that the undermentioned embodiments are based on the same inventive concept, and contents recorded in other embodiments can be referred when the content of one of the embodiments is understood or explained.

Embodiment 1

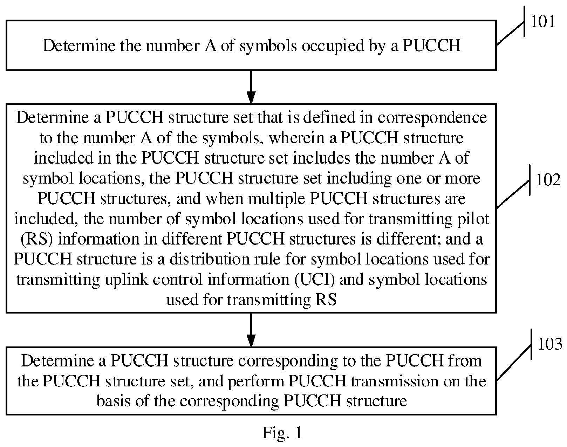

Referring to Fig. 1, provided by an embodiment of the present application is a PUCCH transmission method which can be used for performing PUCCH transmission among equipments, such as PUCCH transmission from a user equipment (UE) to a base station, wherein the UE may be a personal computer (PC), a notebook computer, a mobile phone, Internet of things equipment, wearable equipment and the like, and the specific type of the UE is not limited in the embodiments of the present application.

The process of the PUCCH transmission method in the embodiment of the present application is described as follows.

Operation 101: the number A of symbols occupied by a PUCCH is determined, wherein the number A is a positive integer.

Operation 102: a PUCCH structure set that is defined in correspondence to the number A of the symbols is determined, a PUCCH structure included in the PUCCH structure set includes the number A of symbol locations, the PUCCH structure set includes one or more PUCCH structures, and when multiple PUCCH structures are included, the number of symbol locations used for transmitting pilot (RS) information in different PUCCH structures is different, wherein a PUCCH structure is a distribution rule for symbol locations used for transmitting uplink control information (UCI) and symbol locations used for transmitting RS.

Operation 103: a PUCCH structure corresponding to the PUCCH is determined from the PUCCH structure set, and PUCCH transmission is performed on the basis of the corresponding PUCCH structure.

In one possible implementation, the operation that a PUCCH structure corresponding to the PUCCH is determined from the PUCCH structure set when the PUCCH structure set includes one PUCCH structure includes: the PUCCH structure included in the PUCCH structure set is taken as the corresponding PUCCH structure; or

the operation that a PUCCH structure corresponding to the PUCCH is determined from the PUCCH structure set when the PUCCH structure set includes multiple PUCCH structures includes:
one PUCCH structure is selected as the corresponding PUCCH structure from the PUCCH structure set according to an acquired configuration instruction; and/or
the PUCCH structure with most symbol locations used for transmitting RS is selected as the corresponding PUCCH structure from the PUCCH structure set when it is determined that frequency hopping is performed during PUCCH transmission.

In one possible implementation, the PUCCH structure set including one or more PUCCH structures includes:

this alternative is not covered by the subject-matter of the claims, when the value of the number A of the symbols is X1 to X2, for each number A of the symbols within X1 to X2, at least two PUCCH structures are defined in the PUCCH structure set; when the value of the number A of the symbols is (X2+1) to X4, for each number A of the symbols within (X2+1) to X4, one PUCCH structure is defined in the PUCCH structure set; or
when the value of the number A of the symbols is X1 to X2 and X3 to X4, for each number A of the symbols within X1 to X2 and X3 to X4, at least two PUCCH structures are defined in the PUCCH structure set; when the value of the number A of the symbols is (X2+1) to (X3-1), for each number A of the symbols within (X2+1) to (X3-1), one PUCCH structure is defined in the PUCCH structure set; or
with regard to the value of each number A of the symbols supported by the PUCCH, at least two PUCCH structures are defined in the PUCCH structure set; or
with regard to the value of each number A of the symbols supported by the PUCCH, one PUCCH structure is defined in the PUCCH structure set;
wherein X1, X2, X3 and X4 are positive integers, and X1<X2<X3<X4.

In one possible implementation, when at least two UCI and RS structures are defined, a first structure includes the number Y1 of pilot symbols, and a second structure includes the number Y2 of pilot symbols, wherein Y1<Y2; for example, Y1=1, Y2=2, of course, other values are not excluded; when only one UCI and RS structure is defined, the number of Y3 pilot symbols are included, 1<Y3 <{(rounding up or down (transmission length/X)), X is 2, 3 or 4, and Y3 can be the same or different for different transmission lengths; for example, Y3 is defined to be 4 for PUCCHs of which the transmission lengths are (X2+1) to X4 symbols, or Y3 is defined to be equal to 3 for parts of the transmission lengths in the PUCCHs of which the transmission lengths are (X2+1) to X4 symbols, Y3 is defined to be equal to 4 for parts of the transmission lengths in the PUCCHs of which the transmission lengths are (X2+1) to X4 symbols, or Y3 is defined to be equal to 5 for parts of the transmission lengths in the PUCCHs of which the transmission lengths are (X2+1) to X4 symbols.

In one possible implementation, the operation that a PUCCH structure corresponding to the PUCCH is determined from the PUCCH structure set when it is determined that frequency hopping is performed during PUCCH transmission, and PUCCH transmission is performed on the basis of the corresponding PUCCH structure, includes:

information carried in a first symbol group and information carried in a second symbol group are respectively transmitted at different frequency domain positions by taking first $\left\lfloor \dfrac{A}{2} \right\rfloor$ symbols included by the PUCCH as the first symbol group and last $\left(A - \left\lfloor \dfrac{A}{2} \right\rfloor\right)$ symbols included by the PUCCH as the second symbol group; or information carried in a first symbol group and information carried in a second symbol group are respectively transmitted at different frequency domain positions by taking first $\left\lceil \dfrac{A}{2} \right\rceil$ symbols included by the PUCCH as the first symbol group and last ($A - \left\lceil \dfrac{A}{2} \right\rceil$)symbols included by the PUCCH as the second symbol group.

In one possible implementation, a terminal judges whether frequency hopping is performed or not during PUCCH transmission according to configuration signaling; in another possible implementation, the terminal judges whether frequency hopping is performed or not during PUCCH transmission according to preliminary definition, for example, it is preliminarily defined that frequency hopping is used all the time for one or multiple PUCCH structures or transmission lengths of the PUCCH, it is preliminarily defined that frequency hopping is not used all the time for one or multiple PUCCH structures or transmission lengths of the PUCCHs, or it is preliminarily defined that frequency hopping is used or not used all the time for any one of the PUCCH structures or the transmission lengths of the PUCCH.

In the embodiment of the present application, the symbol groups include at least one symbol and are used for representing time domain resources, each symbol location is partitioned by time division, while different symbol groups can transmit resources carried by the different symbol groups in different frequency domains on the premise of time division when it is determined that frequency hopping is required during PUCCH transmission after the time domain resources are determined.

In one possible implementation, when the number A of the symbols occupied by the PUCCH is 4:

the PUCCH structure set includes one PUCCH structure, and the PUCCH structure included in the PUCCH structure set includes one symbol location used for transmitting RS and is one of the following PUCCH structures: URUU, UURU and RUUU; or
the PUCCH structure set includes one PUCCH structure, and the PUCCH structure included in the PUCCH structure set includes two symbol locations used for transmitting RS and is one of the following PUCCH structures: URRU, RURU, RUUR and URUR; or
the PUCCH structure set includes two PUCCH structures, wherein a first PUCCH structure includes one symbol location used for transmitting RS and is one of the following PUCCH structures: URUU, UURU and RUUU; and a second PUCCH structure includes two symbol locations used for transmitting RS and is one of the following PUCCH structures: URRU, RURU, RUUR and URUR;
wherein in the PUCCH structure, U represents a symbol location used for transmitting UCI, and R represents a symbol location used for transmitting RS.

In one possible implementation, when the number A of the symbols occupied by the PUCCH is 5:

the PUCCH structure set includes one PUCCH structure, and the PUCCH structure included in the PUCCH structure set includes one symbol location used for transmitting RS and is one of the following PUCCH structures: UURUU, URUUU and RUUUU; or
the PUCCH structure set includes one PUCCH structure, and the PUCCH structure included in the PUCCH structure set includes two symbol locations used for transmitting RS and is one of the following PUCCH structures: URRUU, UURRU, RUURU, RURUU and URURU; or
the PUCCH structure set includes two PUCCH structures, wherein a first PUCCH structure includes one symbol location used for transmitting RS and is one of the following PUCCH structures: UURUU, URUUU and RUUUU; and a second PUCCH structure includes two symbol locations used for transmitting RS and is one of the following PUCCH structures: URRUU, UURRU, RUURU, RURUU and URURU;
wherein in the PUCCH structure, U represents a symbol location used for transmitting UCI, and R represents a symbol location used for transmitting RS.

In one possible implementation, when the number A of the symbols occupied by the PUCCH is 6:

the PUCCH structure set includes one PUCCH structure, and the PUCCH structure included in the PUCCH structure set includes one symbol location used for transmitting RS and is one of the following PUCCH structures: URUUUU, UURUUU, UUURUU and RUUUUU; or

the PUCCH structure set includes one PUCCH structure, and the PUCCH structure included in the PUCCH structure set includes two symbol locations used for transmitting RS and is one of the following PUCCH structures: URURUU, URUURU, RUUUUR, URUUUR, RUUURU and UURRUU; or

the PUCCH structure set includes two PUCCH structures, wherein a first PUCCH structure includes one symbol location used for transmitting RS and is one of the following PUCCH structures: URUUUU, UURUUU, UUURUU and RUUUUU; and a second PUCCH structure includes two symbol locations used for transmitting RS and is one of the following PUCCH structures: URURUU, URUURU, RLTUUUR, URUUUR, RUUURU and UURRUU;

wherein in the PUCCH structure, U represents a symbol location used for transmitting UCI, and R represents a symbol location used for transmitting RS.

In one possible implementation, when the number A of the symbols occupied by the PUCCH is 7:

the PUCCH structure set includes one PUCCH structure, and the PUCCH structure included in the PUCCH structure set includes one symbol location used for transmitting RS and is one of the following PUCCH structures: URUUUUU, UURUUUU, UUURUUU and RUUUUUU; or

the PUCCH structure set includes one PUCCH structure, and the PUCCH structure included in the PUCCH structure set includes two symbol locations used for transmitting RS and is one of the following PUCCH structures: RUUUUUR, URUUUUR, RUUUURU, URUUURU, URUURUU, UURURUU, LTURRUUU and UUURRUU; or

the PUCCH structure set includes two PUCCH structures, wherein a first PUCCH structure includes one symbol location used for transmitting RS and is one of the following PUCCH structures: URUUUUU, UURUUUU, UUURUUU and RUUUUUU; and a second PUCCH structure includes two symbol locations used for transmitting RS and is one of the following PUCCH structures: RUUUUUR, URUUUUR, RUUUURU, URUUURU, URUURUU, UURURUU, UURRUUU and UUURRUU;

wherein in the PUCCH structure, U represents a symbol location used for transmitting UCI, and R represents a symbol location used for transmitting RS.

In one possible implementation, when the number A of the symbols occupied by the PUCCH is 8:

the PUCCH structure set includes one PUCCH structure, and the PUCCH structure included in the PUCCH structure set includes two symbol locations used for transmitting RS and is one of the following PUCCH structures: URUUUURU, URUUURUU, RUUUUUUR, RUUUUURU, RUUUURUU, RUUURUUU, LTUURRLTUU and UURUURUU; or

the PUCCH structure set includes one PUCCH structure, and the PUCCH structure included in the PUCCH structure set includes three or four symbol locations used for transmitting RS and is one of the following PUCCH structures: URRUURRU, URURURUR, RURURURU, RUURRUUR, RURUURUR, RUURUURU, RUURUUUR, RUUURUUR, URURUURU and URURURUU; or

the PUCCH structure set includes two PUCCH structures, wherein a first PUCCH structure includes one or two symbol locations used for transmitting RS and is one of the following PUCCH structures: URUUUURU, URUUURUU, RUUUUUUR, RUUUUURU, RUUUURUU, RUUURUUU, UUURRUUU, UURUURUU, UUURUUUU and RUUUUUUU; and a second PUCCH structure includes three or four symbol locations used for transmitting RS and is one of the following PUCCH structures: URRUURRU, URURURUR, RURURURU, RURUURUR, RUURRUUR, RUURUURU, RUURUUUR, RUUURUUR, URURUURU and URURURUU;

wherein in the PUCCH structure, U represents a symbol location used for transmitting UCI, and R represents a symbol location used for transmitting RS.

In one possible implementation, when the number A of the symbols occupied by the PUCCH is 9:

the PUCCH structure set includes one PUCCH structure, and the PUCCH structure included in the PUCCH structure set includes two symbol locations used for transmitting RS and is one of the following PUCCH structures: UURU-UURUU, URUUUURUU, URUUUURU, URUURUUU, RUUURUUUU, RUUUUUUR, RUUUUURUU, RUUUU-UURU, RLTUUURUUU, UURUUUURU, UUUURRUUU and UUURRUUUU; or

the PUCCH structure set includes one PUCCH structure, and the PUCCH structure included in the PUCCH structure set includes three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU; or

the PUCCH structure set includes two PUCCH structures, wherein a first PUCCH structure includes one or two symbol locations used for transmitting RS and is one of the following PUCCH structures: UURUUURUU, URUUUURUU, URUUUUURU, URUUURUUU, RUUURUUUU, RUUUUUUUR, RULTUUURUU, RUUUUUURU, RLTUUURUUU, UURUUUURU, UUUURRUUU, UUURRUUUU, RUUUUUUUU and UUUURUUUU; and a second PUCCH structure includes three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU;

wherein in the PUCCH structure, U represents a symbol location used for transmitting UCI, and R represents a symbol location used for transmitting RS.

In one possible implementation, when the number A of the symbols occupied by the PUCCH is 10:

the PUCCH structure set includes one PUCCH structure, and the PUCCH structure included in the PUCCH structure set includes two symbol locations used for transmitting RS and is one of the following PUCCH structures: UURUUUURUU, URUUUURUUU, URUUUUUURU, RUUUURUUUU, UURUUURUUU, URUUURUUUU, URUUUUUR-UU, RUUUUUUUR, RUUUUUURUU, RUUUURUUUU and UUUURRUUUU; or
the PUCCH structure set includes one PUCCH structure, and the PUCCH structure included in the PUCCH structure set includes three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURLTUUUR, URUURUURUU and URUUURUUUR; or
the PUCCH structure set includes two PUCCH structures, wherein a first PUCCH structure includes one or two symbol locations used for transmitting RS and is one of the following PUCCH structures: UURUUUURUU, URUUUURUUU, URUUUUUURU, RUUUURUUUU, UURUUURUUU, URUUURUUUU, URUUUUURUU, RUUUUUUU-UR, RUUUUUURUU, RUUUURUUUU, UUUURRUUUU, RUUUUUUUUU and UUUURUUUUU; and a second PUCCH structure includes three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURUUUUR, URUURUURUU and URUUURUUUR;
wherein in the PUCCH structure, U represents a symbol location used for transmitting UCI, and R represents a symbol location used for transmitting RS.

In one possible implementation, when the number A of the symbols occupied by the PUCCH is 11:

the PUCCH structure set includes one PUCCH structure, and the PUCCH structure included in the PUCCH structure set includes two symbol locations used for transmitting RS and is one of the following PUCCH structures: UURUUUURUUU, UURUUUUURUU, URUUUUURUUU, URUUUUUUURU, RUUUURUUUUU, RUUUUURUUUU, UU-URUUURUUU, URUUURUUUU, RUUUUUUUURU, URUUUUUUUR, URUUUUUURUU, UUUURRUUUUU and RUUUUUUUUUR; or
the PUCCH structure set includes one PUCCH structure, and the PUCCH structure included in the PUCCH structure set includes three or four symbol locations used for transmitting RS and is one of the following PUCCH structures: UURURURURUU, URURUURURUU, URURUURUURU, URURUUURURU, URUURURUURU, URRUUUUURRU, URRUUUURRUU, UURRUUURRUU, RUURUUUURUUR, RUUURURUUUR, RUUURRLTUUUR, RUUUURRUU-UR, URUUURUUURU, RLTUUURLTUUU, UURUURUURLTU and URUUURUUURU; or
the PUCCH structure set includes two PUCCH structures, wherein a first PUCCH structure includes one or two symbol locations used for transmitting RS and is one of the following PUCCH structures: UURUUUURUUU, UURUUUUURUU, URUUUUURUUU, URUUUUUUURU, RUUUURUUUUU, RUUUUURUUUU, UUURUUURUUU, UR-UUURUUUU, RUUUUUUUURU, URUUUUUUUR, URUUUUUURUU, UUUURRUUUUU, RUUUUUUUUUU and UUUUURUUUUU; and a second PUCCH structure includes three or four symbol locations used for transmitting RS and is one of the following PUCCH structures: UURURURURUU, URURUURURUU, URURUURUURU, URURUUURURU, URUURURUURU, URRUUUUURRU, URRUUUURRUU, UURRUUURRUU, RUU-RUUUURUUR, RUUURURUUUR, RUUURRUUUUR, RUUUURRUUUR, URUUURUUURU, RLTUUURLTUUUR, UURUURUURLTU and URUUURUUURU;
wherein in the PUCCH structure, U represents a symbol location used for transmitting UCI, and R represents a symbol location used for transmitting RS.

In one possible implementation, when the number A of the symbols occupied by the PUCCH is 12:

the PUCCH structure set includes one PUCCH structure, and the PUCCH structure included in the PUCCH structure set includes two symbol locations used for transmitting RS and is one of the following PUCCH structures: UUUR-UUUUURUUU, UURUUUUUURUU, UURUUUUURUUU, URUUUUUUUURU, RUUUURUUUUU, UURUUURUU-

UU, UUUUURRUUUUU and RUUUUUUUUUUR; or

the PUCCH structure set includes one PUCCH structure, and the PUCCH structure included in the PUCCH structure set includes three or four symbol locations used for transmitting RS and is one of the following PUCCH structures: UURURUURURUU, URUURUURUURU, URURUUURURUU, URURUUURURURU, UURRUUUURRUU, UURRUUURRUUU, RUURUUUURUUR, RUUURUURUUUR, RUUUURRUUUUR, RUUURURUUURU, URUUURUUURUU, URUUURUUURU, RUUUURLTUUURU, RUUUURUUUUR, RUUURUUUUR, UURUURUUURUU, UURUUURUURUU and UURUURUURUUU; or

the PUCCH structure set includes two PUCCH structures, wherein a first PUCCH structure includes one or two symbol locations used for transmitting RS and is one of the following PUCCH structures: UUURUUUURUUU, UURUUUUUURUU, UURUUUUURUUU, URUUUUUUUURU, RUUUUURUUUUU, UURUUURUUUU, UUULTURRUUUUU, RUUUUUUUUUUR, RUUUUUUUUUUU and UUUUURUUUUUU; and a second PUCCH structure includes three or four symbol locations used for transmitting RS and is one of the following PUCCH structures: UURURUURURUU, URUURUURUURU, URURUUURURUU, URURUUURURURU, UURRUUUURRUU, UURRUUURRUUU, RUURUUUURUUR, RUUURUURUUUR, RUUUURRUUUUR, RUUURURUUURU, URUUURUUURUU, URUUURUUURU, RUUUURLTUUURU, RULTUUURUUUR, RUUUURUUUUR, UURUURUUURUU, UURUUURUURUU and UURUURUURUUU;

wherein in the PUCCH structure, U represents a symbol location used for transmitting UCI, and R represents a symbol location used for transmitting RS.

In one possible implementation, when the number A of the symbols occupied by the PUCCH is 13:

the PUCCH structure set includes one PUCCH structure, and the PUCCH structure included in the PUCCH structure set includes two symbol locations used for transmitting RS and is one of the following PUCCH structures: UURUUUUUUURUU, UUURUUUURUUU, URUUUUUUUURU, RUUUUURUUUUU, RUUUUUURUUUUU, UURUUUUUURUUU, UUUUURRUUUUUU and RUUUUUUUUUUR; or

the PUCCH structure set includes one PUCCH structure, and the PUCCH structure included in the PUCCH structure set includes three or four symbol locations used for transmitting RS and is one of the following PUCCH structures: UURURUUURURUU, URUURUUURUURU, URURUUUURURURU, URUURUURUURUU, URUURUURUUURU, UURRUUUUURRUU, UUURRUUURRUUU, RUURUURUURUUU, RUURUUUURUUR, RUUURUUURUUUR, RUUUURRUUUUUR, URUUURURUUURU, RUUURUURUUURU, UURUUURUUURUU, URUUUURUUUURU, RUUUURUUUUUR, UUURUURUURUUU and UURUUUURUURUU; or

the PUCCH structure set includes two PUCCH structures, wherein a first PUCCH structure includes one or two symbol locations used for transmitting RS and is one of the following PUCCH structures: UURUUUUUUURUU, UUURUUUURUUU, URUUUUUUUURU, RUUUUURUUUTTUU, RUUUUUURUUUUU, UURUUUUUURUUU, UUUUURRUUUUUU, RUUUUUUUUUUUR, RUUUUUUUUUUUU and UUUUUURUUUUUU; and a second PUCCH structure includes three or four symbol locations used for transmitting RS and is one of the following PUCCH structures: UURURUUURURUU, URUURUUURUURU, URURUUUURURURU, URUURUURUURUU, URUURUURUUURU, UURRUUUUURRUU, UUURRUUURRUUU, RUURUURUURUUU, RUURUUUURUUR, RUUURUUURUUUR, RUUUURRUUUUUR, URUUURURUUURU, RUUURUURUUURU, UURUUURUUURUU, URUUUURUUUURU, RUUUURUUUUUR, UUURUURUURUUU and UURUUUURUURUU;

wherein in the PUCCH structure, U represents a symbol location used for transmitting UCI, and R represents a symbol location used for transmitting RS.

In one possible implementation, when the number A of the symbols occupied by the PUCCH is 14:

the PUCCH structure set includes one PUCCH structure, and the PUCCH structure included in the PUCCH structure set includes two symbol locations used for transmitting RS and is one of the following PUCCH structures: UURUUUUUUUURUU, UUUURUUUURUUUU, URUUUUUUUUUURU, RUUUUUURUUUUUU, UUURUUUUUURUUU, UUUUUURRUUUUUU and RUUUUUUUUUUUUR; or

the PUCCH structure set includes one PUCCH structure, and the PUCCH structure included in the PUCCH structure set includes three or four symbol locations used for transmitting RS and is one of the following PUCCH structures: URUUURUURUUURU, UURURUUURURUU, URUURLTUUURUURU, URUURUUURUURUU, URURUUUUURURU, UURUURUURUURUU, UURRUUUUURRUU, UUURRUUUURRUUU, RUURUUURUURUUU, RUURUUUUURUUR, RUUURLTUUURUUUR, RUUUURRUUUUUR, UURUURUUURUURU, URUUUURLTUUURUU, URUUUURUUUURU, URULTUUURUUUURU, RUUUURUUUUUUR, RUUUUURUUUUUR, RUUUURUUUUUURU, URULTUUURUUUUR, UUURUUURUURUUU, UUURUURUURUUU, UURUUURUUURUUU and UURUUUURUUURUU; or

the PUCCH structure set includes two PUCCH structures, wherein a first PUCCH structure includes one or two symbol locations used for transmitting RS and is one of the following PUCCH structures: UURUUUUUUURUU, UUUURUUURUUUU, URUUUUUUUUURU, RUUUUURUUUUUU, UUURUUUUURUUU, UUUUUURRUU-UUUU, RUUUUUUUUUUUR, RUUUUUUUUUUUU and UUUUURUUUUUUU; and a second PUCCH structure includes three or four symbol locations used for transmitting RS and is one of the following PUCCH structures: URUUURUUURUUURU, UURURLTUUURURUU, URUURLTUUURUURU, URUURUUURUURURU, URURUUUU-URURU, UURUURUURUURUU, UURRUUUUURRUU, UUURRLJWURRUUU, RUURUUURUURUUU, RUUR-UUUUUURUUR, RUUURLTUUURUUUR, RUUUUURRUUUUUR, UURUURUUURUURU, URLTUUURUUUR-UU, URUUURUUUUURU, URUUUUURUUUURU, RUUUUURUUUUUUR, RUUUUURUUUUUR, RUUUUUR-UUUUURU, URUUUUURUUUUUR, UUURUUURUURUUU, UUURUURUUURUUU, UURUUURUUURUUU and UURUUUURUUURUU;

wherein in the PUCCH structure, U represents a symbol location used for transmitting UCI, and R represents a symbol location used for transmitting RS.

Embodiment 2

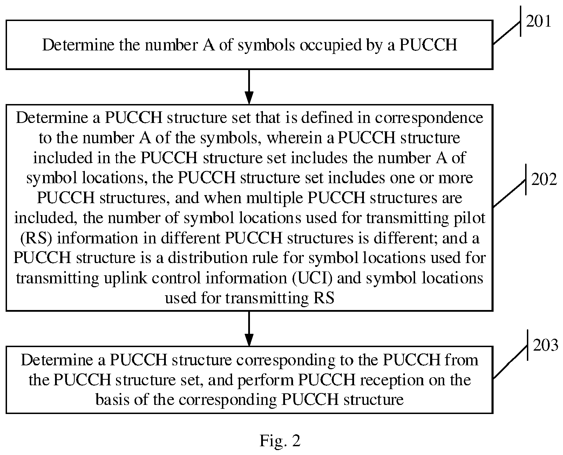

Referring to Fig. 2, based on the same inventive concept of Embodiment 1, provided by an embodiment of the present application is another PUCCH transmission method including the following operations.

Operation 201: the number A of symbols occupied by a PUCCH is determined, wherein the number A is a positive integer.

Operation 202: a PUCCH structure set that is defined in correspondence to the number A of the symbols is determined, a PUCCH structure included in the PUCCH structure set includes the number A of symbol locations, the PUCCH structure set includes one or more PUCCH structures, and when multiple PUCCH structures are included, the number of symbol locations used for transmitting pilot (RS) information in different PUCCH structures is different, wherein a PUCCH structure is a distribution rule for symbol locations used for transmitting uplink control information (UCI) and symbol locations used for transmitting RS.

Operation 203: a PUCCH structure corresponding to the PUCCH is determined from the PUCCH structure set, and PUCCH reception is performed on the basis of the corresponding PUCCH structure.

In one possible implementation, the operation that a PUCCH structure corresponding to the PUCCH is determined from the PUCCH structure set when the PUCCH structure set includes one PUCCH structure includes: the PUCCH structure included in the PUCCH structure set is taken as the corresponding PUCCH structure; or

the operation that a PUCCH structure corresponding to the PUCCH is determined from the PUCCH structure set when the PUCCH structure set includes multiple PUCCH structures includes:
one PUCCH structure is selected as the corresponding PUCCH structure from the PUCCH structure set, and a selection result is informed to a terminal through a configuration instruction; and/or
the PUCCH structure with most symbol locations used for transmitting RS is selected as the corresponding PUCCH structure from the PUCCH structure set when it is determined that frequency hopping is performed during PUCCH transmission, and the terminal is informed of a demand for frequency hopping through the configuration instruction.

In one possible implementation, the PUCCH structure set including one or more PUCCH structures includes:

this alternative is not covered by the subject-matter of the claims, when the value of the number A of the symbols is X1 to X2, for each number A of the symbols within X1 to X2, at least two PUCCH structures are defined in the PUCCH structure set; when the value of the number A of the symbols is (X2+1) to X4, for each number A of the symbols within (X2+1) to X4, one PUCCH structure is defined in the PUCCH structure set; or
when the value of the number A of the symbols is X1 to X2 and X3 toX4, for each number A of the symbols within X1 to X2 and X3 to X4, at least two PUCCH structures are defined in the PUCCH structure set; when the value of the number A of the symbols is (X2+1) to (X3-1), for each number A of the symbols within (X2+1) to (X3-1), one PUCCH structure is defined in the PUCCH structure set; or
with regard to the value of each number A of the symbols supported by the PUCCH, at least two PUCCH structures are defined in the PUCCH structure set; or
with regard to the value of each number A of the symbols supported by the PUCCH, one PUCCH structure is defined in the PUCCH structure set;
wherein X1, X2, X3 and X4 are positive integers, and X1<X2<X3<X4.

In one possible implementation, the operation that a PUCCH structure corresponding to the PUCCH is determined from the PUCCH structure set when it is determined that frequency hopping is performed during PUCCH transmission, and PUCCH reception is performed on the basis of the corresponding PUCCH structure, includes:

information carried in a first symbol group and information carried in a second symbol group are respectively received at different frequency domain positions by taking first $\left\lfloor \dfrac{A}{2} \right\rfloor$ symbols included by the PUCCH as the first symbol group and last ( $A - \left\lfloor \dfrac{A}{2} \right\rfloor$ ) symbols included by the PUCCH as the second symbol group; or
information carried in a first symbol group and information carried in a second symbol group are respectively received at different frequency domain positions by taking first $\left\lceil \dfrac{A}{2} \right\rceil$ symbols included by the PUCCH as the first symbol group and last ( $A - \left\lceil \dfrac{A}{2} \right\rceil$ ) symbols included by the PUCCH as the second symbol group.

In one possible implementation, when the number A is 4:

the PUCCH structure set includes one PUCCH structure, and the PUCCH structure included in the PUCCH structure set includes one symbol location used for transmitting RS and is one of the following PUCCH structures: URUU, UURU and RUUU; or
the PUCCH structure set includes one PUCCH structure, and the PUCCH structure included in the PUCCH structure set includes two symbol locations used for transmitting RS and is one of the following PUCCH structures: URRU, RURU, RUUR and URUR; or
the PUCCH structure set includes two PUCCH structures, wherein a first PUCCH structure includes one symbol location used for transmitting RS and is one of the following PUCCH structures: URUU, UURU and RUUU; and a second PUCCH structure includes two symbol locations used for transmitting RS and is one of the following PUCCH structures: URRU, RURU, RUUR and URUR;
wherein in the PUCCH structure, U represents a symbol location used for transmitting UCI, and R represents a symbol location used for transmitting RS.

In one possible implementation, when the number A is 5:

the PUCCH structure set includes one PUCCH structure, and the PUCCH structure included in the PUCCH structure set includes one symbol location used for transmitting RS and is one of the following PUCCH structures: UURUU, URUUU and RUUUU; or
the PUCCH structure set includes one PUCCH structure, and the PUCCH structure included in the PUCCH structure set includes two symbol locations used for transmitting RS and is one of the following PUCCH structures: URRUU, UURRU, RUURU, RURUU and URURU; or
the PUCCH structure set includes two PUCCH structures, wherein a first PUCCH structure includes one symbol location used for transmitting RS and is one of the following PUCCH structures: UURUU, URUUU and RUUUU; and a second PUCCH structure includes two symbol locations used for transmitting RS and is one of the following PUCCH structures: URRUU, UURRU, RUURU, RURUU and URURU;
wherein in the PUCCH structure, U represents a symbol location used for transmitting UCI, and R represents a symbol location used for transmitting RS.

In one possible implementation, when the number A is 6:

the PUCCH structure set includes one PUCCH structure, and the PUCCH structure included in the PUCCH structure set includes one symbol location used for transmitting RS and is one of the following PUCCH structures: URUUUU, UURUUU, UUURUU and RUUUUU; or
the PUCCH structure set includes one PUCCH structure, and the PUCCH structure included in the PUCCH structure set includes two symbol locations used for transmitting RS and is one of the following PUCCH structures: URURUU, URUURU, RUUUUR, URUUUR, RUUURU and UURRUU; or
the PUCCH structure set includes two PUCCH structures, wherein a first PUCCH structure includes one symbol location used for transmitting RS and is one of the following PUCCH structures: URUUUU, UURUUU, UUURUU and RUUUUU; and a second PUCCH structure includes two symbol locations used for transmitting RS and is one of the following PUCCH structures: URURUU, URUURU, RLTUUUR, URUUUR, RUUURU and UURRUU;

wherein in the PUCCH structure, U represents a symbol location used for transmitting UCI, and R represents a symbol location used for transmitting RS.

In one possible implementation, when the number A is 7:

the PUCCH structure set includes one PUCCH structure, and the PUCCH structure included in the PUCCH structure set includes one symbol location used for transmitting RS and is one of the following PUCCH structures: URUUUUU, UURUUUU, UUURUUU and RUUUUUU; or

the PUCCH structure set includes one PUCCH structure, and the PUCCH structure included in the PUCCH structure set includes two symbol locations used for transmitting RS and is one of the following PUCCH structures: RUUUUUR, URUUUUR, RUUUURU, URUUURU, URUURUU, UURURUU, LTURRUUU and UUURRUU; or

the PUCCH structure set includes two PUCCH structures, wherein a first PUCCH structure includes one symbol location used for transmitting RS and is one of the following PUCCH structures: URUUUUU, UURUUUU, UUURUUU and RUUUUUU; and a second PUCCH structure includes two symbol locations used for transmitting RS and is one of the following PUCCH structures: RUUUUUR, URUUUUR, RUUUURU, URUUURU, URUURUU, UURURUU, UURRUUU and UUURRUU;

wherein in the PUCCH structure, U represents a symbol location used for transmitting UCI, and R represents a symbol location used for transmitting RS.

In one possible implementation, when the number A is 8:

the PUCCH structure set includes one PUCCH structure, and the PUCCH structure included in the PUCCH structure set includes two symbol locations used for transmitting RS and is one of the following PUCCH structures: URUU-UURU, URUUURUU, RUUUUUR, RUUUUURU, RUUUURUU, RUUURUUU, LTUURRLTUU and UURUURUU; or

the PUCCH structure set includes one PUCCH structure, and the PUCCH structure included in the PUCCH structure set includes three or four symbol locations used for transmitting RS and is one of the following PUCCH structures: URRUURRU, URURURUR, RURURURU, RUURRUUR, RURUURUR, RUURUURU, RUURUUUR, RUUURUUR, URURUURU and URURURUU; or

the PUCCH structure set includes two PUCCH structures, wherein a first PUCCH structure includes one or two symbol locations used for transmitting RS and is one of the following PUCCH structures: URUUUURU, URUUURUU, RUUUUUUR, RUUUUURU, RUUUURUU, RUUURUUU, UUURRUUU, UURUURUU, UUURUUUU and RUUUUUUU; and a second PUCCH structure includes three or four symbol locations used for transmitting RS and is one of the following PUCCH structures: URRUURRU, URURURUR, RURURURU, RURUURUR, RUURRUUR, RUURUURU, RUURUUUR, RUUURUUR, URURUURU and URURURUU;

wherein in the PUCCH structure, U represents a symbol location used for transmitting UCI, and R represents a symbol location used for transmitting RS.

In one possible implementation, when the number A is 9:

the PUCCH structure set includes one PUCCH structure, and the PUCCH structure included in the PUCCH structure set includes two symbol locations used for transmitting RS and is one of the following PUCCH structures: UURUUURUU, URUUUURUU, URUUUUURU, URUUURUUU, RUUURUUUU, RUUUUUUUR, RUUUUURUU, RUUUUUURU, RLTUUURUUU, , UURUUUURU, UUUURRUUU and UUURRUUUU; or

the PUCCH structure set includes one PUCCH structure, and the PUCCH structure included in the PUCCH structure set includes three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU; or

the PUCCH structure set includes two PUCCH structures, wherein a first PUCCH structure includes one or two symbol locations used for transmitting RS and is one of the following PUCCH structures: UURUUURUU, URUUUURUU, URUUUUURU, URUUURUUU, RUUURUUUU, RUUUUUUUR, RULTUUURUUU, RUUUUUURU, RUUUU-RUUU, UURUUUURU, UUUURRUUU, UUURRUUUU, RUUUUUUUU and UUUURUUUU; and a second PUCCH structure includes three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU;

wherein in the PUCCH structure, U represents a symbol location used for transmitting UCI, and R represents a symbol location used for transmitting RS.

In one possible implementation, when the number A is 10:

the PUCCH structure set includes one PUCCH structure, and the PUCCH structure included in the PUCCH structure set includes two symbol locations used for transmitting RS and is one of the following PUCCH structures: UURU-UUURUU, URUUUURUUU, URUUUUURU, RUUUURUUUU, UURUUURUUU, URUUURUUUU, URUUUURUU, RUUUUUUUR, RUUUUUURUU, RUUUUURUUU and UUUURRUUUU; or

the PUCCH structure set includes one PUCCH structure, and the PUCCH structure included in the PUCCH structure set includes three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURLTUUUR, URUURUURUU and URUUURUUUR; or

the PUCCH structure set includes two PUCCH structures, wherein a first PUCCH structure includes one or two symbol locations used for transmitting RS and is one of the following PUCCH structures: UURUUUURUU, URUU-UUURUUU, URUUUUURU, RUUUURUUUU, UURUUURUUU, URUUURUUUU, URUUUURUU, RUUUUUUU-UR, RUUUTTUURUU, RUUUUURUUU, UUUURRUUUU, RUUUUUUUUU and UUUURUUUUU; and a second PUCCH structure includes three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURUUUUR, URUURUURUU and URUUURUUUR; wherein in the PUCCH structure, U represents a symbol location used for transmitting UCI, and R represents a symbol location used for transmitting RS.

In one possible implementation, when the number A is 11:

the PUCCH structure set includes one PUCCH structure, and the PUCCH structure included in the PUCCH structure set includes two symbol locations used for transmitting RS and is one of the following PUCCH structures: UURUUUURUUU, UURUUUUURUU, URUUUUURUUU, URUUUUUUURU, RUUUURUUUUU, RUUUUURUUUU, UU-URUUURUUU, URUUURUUUU, RUUUUUUUURU, URUUUUUUUR, URUUUUUURUU, UUUURRUUUUU and RUUUUUUUUUR; or

the PUCCH structure set includes one PUCCH structure, and the PUCCH structure included in the PUCCH structure set includes three or four symbol locations used for transmitting RS and is one of the following PUCCH structures: UUURURURURUU, URURUURURUU, URURUURUURU, URURUUURURU, URUURURUURU, URRUUUUURRU, URRUUUURRUU, UURRUUURRUU, RUURUUURUUR, RUUURURUUUR, RUUURRLTUUUR, RUUUURRUUUR, URUUURUUURU, RLTUUURLTUUUR, UURUURUURLTU and URUUURUUURU; or

the PUCCH structure set includes two PUCCH structures, wherein a first PUCCH structure includes one or two symbol locations used for transmitting RS and is one of the following PUCCH structures: UURUUUURUUU, UURUUUUURUU, URUUUUURUUU, URUUUUUUURU, RUUUURUUUUU, RUUUUURUUTTU, UUURUUURUUU, URUUURUUUUU, RUUUUUUUURU, URUUUUUUUUR, URUUUUUURUU, UUUURRUUUUU, RUUUUUUUUUU, RUUUUUUUUUU and UUUUURUUUUU; and a second PUCCH structure includes three or four symbol locations used for transmitting RS and is one of the following PUCCH structures: UURURURURUU, URURUURURUU, URURUURUURU, URURUUURURU, URUURURUURU, URRUUUUURRU, URRUUUURRUU, UURRUUURRUU, RUURUUURUUR, RUUURURUUUR, RUUURRUUUUR, RUUUURRUUUR, URUUURUUURU, RLTUUURLTUUUR, UURUURUURLTU and URUUURUUURU; wherein in the PUCCH structure, U represents a symbol location used for transmitting UCI, and R represents a symbol location used for transmitting RS.

In one possible implementation, when the number A is 12:

the PUCCH structure set includes one PUCCH structure, and the PUCCH structure included in the PUCCH structure set includes two symbol locations used for transmitting RS and is one of the following PUCCH structures: UUURUUUURUUU, UURUUUUUURUU, UURUUUUURUUU, URUUUUUUUURU, RUUUUURUUUUU, UURUUURUUUU, UUUUURRUUUUU and RUUUUUUUUUUR; or

the PUCCH structure set includes one PUCCH structure, and the PUCCH structure included in the PUCCH structure set includes three or four symbol locations used for transmitting RS and is one of the following PUCCH structures: UURURUURURURUU, URUURUURUURU, URURUUURURUU, URURUUUURURU, UURRUUUURRUU, UURRU-UURRUU, RUURUUUURUUR, RUUURUURUUUR, RUUUURRUUUUR, RUUURURUUUURU, URUUURUUUR-UU, URUUURUUUURU, URUUUURUUURU, RUUUURLTUUUURU, RUUUUURUUUUR, RUUUURUUUUUR, UU-RUURUUURUU, UURUUURUURUU and UURUURUURUUU; or

the PUCCH structure set includes two PUCCH structures, wherein a first PUCCH structure includes one or two symbol locations used for transmitting RS and is one of the following PUCCH structures: UUURUUUURUUU, UURUUUUUURUU, UURUUUUURUUU, URUUUUUUUURU, RUUUUURUUUUU, UURUUURUUUU, UUULTUR-RUUUUU, RUUUUUUUUUUR, RUUUUUUUUUUUU and UUUUURUUUUUU; and a second PUCCH structure in-

**EP 3 667 983 B1**

cludes three or four symbol locations used for transmitting RS and is one of the following PUCCH structures: UURURUURURUU, URUURUURUURU, URURUUURURUU, URURUUUURURU, UURRUUUURRUU, UURRU-UURRUU, RUURUUUURUUR, RUUURUURUUUR, RUUUURRUUUUR, RUUURURUUURU, URUUURUUR-UU, URUUURUUUURU, URUUUURUUURU, RUUUURLTUUURU, RULTUUURUUUUR, RUUUURUUUUUR, UU-RUURUUURUU, UURUUURUURUU and UURURUURUURUU;

wherein in the PUCCH structure, U represents a symbol location used for transmitting UCI, and R represents a symbol location used for transmitting RS.

In one possible implementation, when the number A is 13:

the PUCCH structure set includes one PUCCH structure, and the PUCCH structure included in the PUCCH structure set includes two symbol locations used for transmitting RS and is one of the following PUCCH structures: UURUUUUUUURUU, UUURUUUUURUUU, URUUUUUUUUURU, RUUUUURUUUUUU, RUUUUUURUUUUU, UURUUUUUURUUU, UUUUURRUUUUUU and RUUUUUUUUUUUR; or

the PUCCH structure set includes one PUCCH structure, and the PUCCH structure included in the PUCCH structure set includes three or four symbol locations used for transmitting RS and is one of the following PUCCH structures: UURURUUURURUU, URUURUUURUURU, URURUUUUURURU, URUURUURUURUU, URUURUURUUURU, UURRUUUURRUU, UUURRUUURRUU, RUURUURUURUU, RUURUUUURUUR, RUUURUUURUUUR, RUUUURRUUUUR, URUUURURUUURU, RUUURUURUUURU, UURUURUUURUU, URUUUURUUURU, RUUUURUUUUUR, UUURUURUURUU and UURUUUURUURUU; or

the PUCCH structure set includes two PUCCH structures, wherein a first PUCCH structure includes one or two symbol locations used for transmitting RS and is one of the following PUCCH structures: UURUUUUUUURUU, UUURUUUUURUUU, URUUUUUUUUURU, RUUUUURUUUTTUU, RUUUUUURUUUUU, UURUUUUUURUUU, UUUUURRUUUUUU, RUUUUUUUUUUUR, RUUUUUUUUUUUU and UUUUUURUUUUUU; and a second PUCCH structure includes three or four symbol locations used for transmitting RS and is one of the following PUCCH structures: UURURUUURURUU, URUURUUURUURU, URURUUUUURURU, URUURUURUURUU, URUURUU-RUUURU, UURRUUUURRUU, UUURRUUURRUU, RUURUURUURUU, RUURUUUURUUR, RUUURUU-URUUUR, RUUURRUUUUR, URUUURURUUURU, RUUURUURUUURU, UURUUURUUURUU, URUUUUR-UUUURU, RUUUURUUUUUR, UUURUURUURUU and UURUUUURUURUU;

wherein in the PUCCH structure, U represents a symbol location used for transmitting UCI, and R represents a symbol location used for transmitting RS.

In one possible implementation, when the number A is 14:

the PUCCH structure set includes one PUCCH structure, and the PUCCH structure included in the PUCCH structure set includes two symbol locations used for transmitting RS and is one of the following PUCCH structures: UURUUUUUUUURUU, UUUURUUUURUUUU, URUUUUUUUUUURU, RUUUUUURUUUUUU, UUURUUUUUURUUU, UUUUUURRUUUUUU and RUUUUUUUUUUUUR; or

the PUCCH structure set includes one PUCCH structure, and the PUCCH structure included in the PUCCH structure set includes three or four symbol locations used for transmitting RS and is one of the following PUCCH structures: URUUURUURUUURU, UURURUUUURURUU, URUURLTUUURUURU, URUURUUURUURUU, URURUUUU-URURU, UURUURUURUURUU, UURRUUUUURRUU, UUUURRUUUURRUU, RUURUUURUURUU, RUUR-UUUUUURUUR, RUUURLTUUURUUUR, RUUUUURRUUUUUR, UURUURUUURUURU, URUUUURLTUUUR-UU, URUUUURUUUURU, URULTUUURUUUURU, RUUUURUUUUUUR, RUUUUUURUUUUUR, RUUUUR-UUUUURU, URULTUUURUUUUUR, UUURUUURUURUUU, UUURUURUUURUUU, UURUUURUUURUUU and UURUUUURUUURUU; or

the PUCCH structure set includes two PUCCH structures, wherein a first PUCCH structure includes one or two symbol locations used for transmitting RS and is one of the following PUCCH structures: UURUUUUUUUURUU, UUUURUUUURUUUU, URUUUUUUUUUURU, RUUUUUURUUtTUtTU, UUURUUUUUURUUU, UUUUUURRU-UUUUU, RUUUUUUUUUUUUR, RUUUUUUUUUUUUUU and UUUUUURUUUUUUU; and a second PUCCH structure includes three or four symbol locations used for transmitting RS and is one of the following PUCCH structures:, URUUURUURUUURU, UURURLTUUURURUU, URUURLTUUURUURU, URUURUUURUURUU, URURUUUU-URURU, UURUURUURUURUU, UURRUUUUURRUU, UUURRLJWURRUUU, RUURUUURUURUU, RUUR-UUUUUURUUR, RUUURLTUUURUUUR, RUUUUURRUUUUUR, UURUURUUURUURU, URLTUUURUUUUR-UU, URUUUURUUUURU, URUUUUURUUUURU, RUUUUURUUUUUUR, RUUUUUURUUUUUR, RUUUUR-UUUUURU, URUUUUURUUUUUR, UUURUUURUURUUU, UUURUURUUURUUU, UURUUURUUURUUU and UURUUUURUUURUU;

wherein in the PUCCH structure, U represents a symbol location used for transmitting UCI, and R represents a

14

symbol location used for transmitting RS.

Embodiment 3

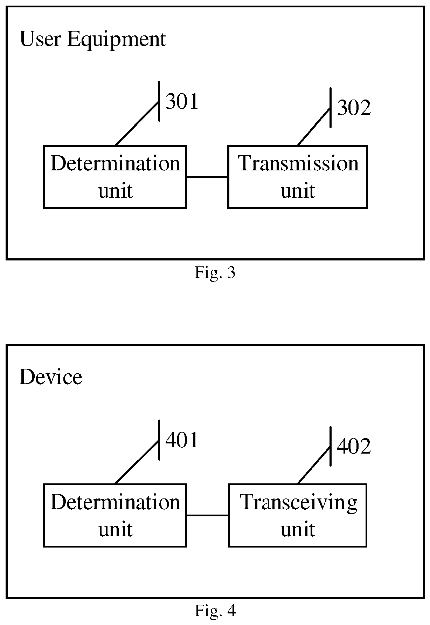

Referring to Fig. 3, provided by an embodiment of the present application is a user equipment including a determination unit 301 and a transmission unit 302, wherein:

the determination unit 301 is configured for determining the number A of symbols occupied by a PUCCH, the number A being a positive integer; determining a PUCCH structure set that is defined in correspondence to the number A of the symbols, a PUCCH structure included in the PUCCH structure set including the number A of symbol locations, the PUCCH structure set including one or more PUCCH structures, and when multiple PUCCH structures are included, the number of symbol locations used for transmitting pilot (RS) information in different PUCCH structures being different, wherein a PUCCH structure is a distribution rule for symbol locations used for transmitting uplink control information (UCI) and symbol locations used for transmitting RS; and determining a PUCCH structure corresponding to the PUCCH from the PUCCH structure set; and
the transmission unit 302 is configured for performing PUCCH transmission on the basis of the corresponding PUCCH structure.

In one possible implementation, the determination unit 301 is configured for:

taking a PUCCH structure included in the PUCCH structure set as the corresponding PUCCH structure when the PUCCH structure set includes one PUCCH structure; or
selecting one PUCCH structure as the corresponding PUCCH structure from the PUCCH structure set according to an acquired configuration instruction when the PUCCH structure set includes multiple PUCCH structures; and/or
selecting the PUCCH structure with most symbol locations used for transmitting RS as the corresponding PUCCH structure from the PUCCH structure set when it is determined that frequency hopping is performed during PUCCH transmission.

In one possible implementation, the PUCCH structure set including one or more PUCCH structures includes:

this alternative is not covered by the subject-matter of the claims, when the value of the number A of the symbols is X1 to X2, for each number A of the symbols within X1 to X2, at least two PUCCH structures are defined in the PUCCH structure set; when the value of the number A of the symbols is (X2+1) to X4, for each number A of the symbols within (X2+1) to X4, one PUCCH structure is defined in the PUCCH structure set; or
when the value of the number A of the symbols is X1 to X2 and X3 to X4, for each number A of the symbols within X1 to X2 and X3 to X4, at least two PUCCH structures are defined in the PUCCH structure set; when the value of the number A of the symbols is (X2+1) to (X3-1), for each number A of the symbols within (X2+1) to (X3-1), one PUCCH structure is defined in the PUCCH structure set; or
with regard to the value of each number A of the symbols supported by the PUCCH, at least two PUCCH structures are defined in the PUCCH structure set; or
with regard to the value of each number A of the symbols supported by the PUCCH, one PUCCH structure is defined in the PUCCH structure set;
wherein X1, X2, X3 and X4 are positive integers, and X1<X2<X3<X4.

In one possible implementation, when it is determined that frequency hopping is performed during PUCCH transmission, the transmission unit 302 is configured for:

respectively transmitting information carried in a first symbol group and information carried in a second symbol group at different frequency domain positions by taking first symbols included by the PUCCH as the first symbol group

and last ( $A - \left\lfloor \dfrac{A}{2} \right\rfloor$ ) symbols included by the PUCCH as the second symbol group; or

respectively transmitting information carried in a first symbol group and information carried in a second symbol group at different frequency domain positions by taking first $\left\lceil \dfrac{A}{2} \right\rceil$ symbols included by the PUCCH as the first symbol group and last ( $A - \left\lceil \dfrac{A}{2} \right\rceil$ ) symbols included by the PUCCH as the second symbol group.

In one possible implementation, when the number A is 4:

the PUCCH structure set includes one PUCCH structure, and the PUCCH structure included in the PUCCH structure set includes one symbol location used for transmitting RS and is one of the following PUCCH structures: URUU, UURU and RUUU; or
the PUCCH structure set includes one PUCCH structure, and the PUCCH structure included in the PUCCH structure set includes two symbol locations used for transmitting RS and is one of the following PUCCH structures: URRU, RURU, RUUR and URUR; or
the PUCCH structure set includes two PUCCH structures, wherein a first PUCCH structure includes one symbol location used for transmitting RS and is one of the following PUCCH structures: URUU, UURU and RUUU; and a second PUCCH structure includes two symbol locations used for transmitting RS and is one of the following PUCCH structures: URRU, RURU, RUUR and URUR;
wherein in the PUCCH structure, U represents a symbol location used for transmitting UCI, and R represents a symbol location used for transmitting RS.

In one possible implementation, when the number A is 5:

the PUCCH structure set includes one PUCCH structure, and the PUCCH structure included in the PUCCH structure set includes one symbol location used for transmitting RS and is one of the following PUCCH structures: UURUU, URUUU and RUUUU; or
the PUCCH structure set includes one PUCCH structure, and the PUCCH structure included in the PUCCH structure set includes two symbol locations used for transmitting RS and is one of the following PUCCH structures: URRUU, UURRU, RUURU, RURUU and URURU; or
the PUCCH structure set includes two PUCCH structures, wherein a first PUCCH structure includes one symbol location used for transmitting RS and is one of the following PUCCH structures: UURUU, URUUU and RUUUU; and a second PUCCH structure includes two symbol locations used for transmitting RS and is one of the following PUCCH structures: URRUU, UURRU, RUURU, RURUU and URURU;
wherein in the PUCCH structure, U represents a symbol location used for transmitting UCI, and R represents a symbol location used for transmitting RS.

In one possible implementation, when the number A is 6:

the PUCCH structure set includes one PUCCH structure, and the PUCCH structure included in the PUCCH structure set includes one symbol location used for transmitting RS and is one of the following PUCCH structures: URUUUU, UURUUU, UUURUU and RUUUUU; or
the PUCCH structure set includes one PUCCH structure, and the PUCCH structure included in the PUCCH structure set includes two symbol locations used for transmitting RS and is one of the following PUCCH structures: URURUU, URUURU, RUUUUR, URUUUR, RUUURU and UURRUU; or
the PUCCH structure set includes two PUCCH structures, wherein a first PUCCH structure includes one symbol location used for transmitting RS and is one of the following PUCCH structures: URUUUU, UURUUU, UUURUU and RUUUUU; and a second PUCCH structure includes two symbol locations used for transmitting RS and is one of the following PUCCH structures: URURUU, URUURU, RLTUUUR, URUUUR, RUUURU and UURRUU;
wherein in the PUCCH structure, U represents a symbol location used for transmitting UCI, and R represents a symbol location used for transmitting RS.

In one possible implementation, when the number A is 7:

the PUCCH structure set includes one PUCCH structure, and the PUCCH structure included in the PUCCH structure set includes one symbol location used for transmitting RS and is one of the following PUCCH structures: URUUUUU, UURUUUU, UUURUUU and RUUUUUU; or
the PUCCH structure set includes one PUCCH structure, and the PUCCH structure included in the PUCCH structure set includes two symbol locations used for transmitting RS and is one of the following PUCCH structures: RUUUUUR, URUUUUR, RUUUURU, URUUURU, URUURUU, UURURUU, LTURRUUU and UUURRUU; or
the PUCCH structure set includes two PUCCH structures, wherein a first PUCCH structure includes one symbol location used for transmitting RS and is one of the following PUCCH structures: URUUUUU, UURUUUU, UUURUUU and RUUUUUU; and a second PUCCH structure includes two symbol locations used for transmitting RS and is one of the following PUCCH structures: RUUUUUR, URUUUUR, RUUUURU, URUUURU, URUURUU, UURURUU, UURRUUU and UUURRUU;
wherein in the PUCCH structure, U represents a symbol location used for transmitting UCI, and R represents a symbol location used for transmitting RS.

In one possible implementation, when the number A is 8:

the PUCCH structure set includes one PUCCH structure, and the PUCCH structure included in the PUCCH structure set includes two symbol locations used for transmitting RS and is one of the following PUCCH structures: URUUUURU, URUUURUU, RUUUUUUR, RUUUUURU, RUUUURUU, RUUURUUU, LTUURRLTUU and UURUURUU; or
the PUCCH structure set includes one PUCCH structure, and the PUCCH structure included in the PUCCH structure set includes three or four symbol locations used for transmitting RS and is one of the following PUCCH structures: URRUURRU, URURURUR, RURURURU, RUURRUUR, RURUURUR, RUURUURU, RUURUUUR, RUUURUUR, URURUURU and URURURUU; or
the PUCCH structure set includes two PUCCH structures, wherein a first PUCCH structure includes one or two symbol locations used for transmitting RS and is one of the following PUCCH structures: URUUUURU, URUUURUU, RUUUUUUR, RUUUUURU, RUUUURUU, RUUURUUU, UUURRUUU, UURUURUU, UUURUUUU and RUUUUUUU; and a second PUCCH structure includes three or four symbol locations used for transmitting RS and is one of the following PUCCH structures: URRUURRU, URURURUR, RURURURU, RUURUURR, RUURRUUR, RUU-RUURU, RUURUUUR, RUUURUUR, URURUURU and URURURUU;
wherein in the PUCCH structure, U represents a symbol location used for transmitting UCI, and R represents a symbol location used for transmitting RS.

In one possible implementation, when the number A is 9:

the PUCCH structure set includes one PUCCH structure, and the PUCCH structure included in the PUCCH structure set includes two symbol locations used for transmitting RS and is one of the following PUCCH structures: UURUUURUU, URUUUURUU, URUUUUURU, URUUURUUU, RUUURUUUU, RUUUUUUUR, RUUUUURUU, RUUUUUURU, RLTUUURUUU, UURUUUURU, UUUURRUUU and UUURRUUUU; or
the PUCCH structure set includes one PUCCH structure, and the PUCCH structure included in the PUCCH structure set includes three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU; or
the PUCCH structure set includes two PUCCH structures, wherein a first PUCCH structure includes one or two symbol locations used for transmitting RS and is one of the following PUCCH structures: UURUUURUU, URUUUURUU, URUUUUURU, URUUURUUU, RUUURUUUU, RUUUUUUUR, RULTUUURUU, RUUUUUURU, RUUUURUUU, UURUUUURU, UUUURRUUU, UUURRUUUU, RUUUUUUUU and UUUURUUUU; and a second PUCCH structure includes three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU;
wherein in the PUCCH structure, U represents a symbol location used for transmitting UCI, and R represents a symbol location used for transmitting RS.

In one possible implementation, when the number A is 10:

the PUCCH structure set includes one PUCCH structure, and the PUCCH structure included in the PUCCH structure set includes two symbol locations used for transmitting RS and is one of the following PUCCH structures: UURUUUURUU, URUUUURUUU, URUUUUUURU, RUUUURUUUU, UURUUURUUU, URUUURUUUU, URUUUUURUU, RUUUUUUUUR, RUUUUUURUU, RUUUUURUUU and UUUURRUUUU; or
the PUCCH structure set includes one PUCCH structure, and the PUCCH structure included in the PUCCH structure set includes three or four symbol locations used for transmitting RS and is one of the following PUCCH structures:

URURURURUU, URURUURURU, URUURRUURU, URRUUUURRU, UURRUURRUU, RUUURUURUUR, RUUUR-RUUUR, URURURUURU, RUUURUUURU, RUUURLTUUUR, URUURUURUU and URUUURUUUR; or
the PUCCH structure set includes two PUCCH structures, wherein a first PUCCH structure includes one or two symbol locations used for transmitting RS and is one of the following PUCCH structures: UURUUUURUU, URUUUURUUU, URUUUUUURU, RUUUURUUUU, UURUUURUUU, URUUURUUUU, URUUUUURUU, RUUUUUUUUR, RUUUTTUURUU, RUUUUURUUU, UUUURRUUUU, RUUUUUUUUU and UUUURUUUUU; and a second PUCCH structure includes three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURUUUUR, URUURUURUU and URUUURUUUR;
wherein in the PUCCH structure, U represents a symbol location used for transmitting UCI, and R represents a symbol location used for transmitting RS.

In one possible implementation, when the number A is 11:

the PUCCH structure set includes one PUCCH structure, and the PUCCH structure included in the PUCCH structure set includes two symbol locations used for transmitting RS and is one of the following PUCCH structures: UURUUUURUUU, UURUUUUURUU, URUUUUURUUU, URUUUUUUURU, RUUUURUUUUU, RUUUUURUUUU, UUURUUURUUU, URUUURUUUU, RUUUUUUUURU, URUUUUUUUUR, URUUUUUURUU, UUUURRUUUUU and RUUUUUUUUUR; or
the PUCCH structure set includes one PUCCH structure, and the PUCCH structure included in the PUCCH structure set includes three or four symbol locations used for transmitting RS and is one of the following PUCCH structures: UUURURURUUU, URURUURURUU, URURUURUURU, URURUUUURURU, URUURURUURU, URRUUUUURRU, URRUUUURRUU, UURRUURRUU, RUURUUURUUR, RUUURURUUUR, RUUURRLTUUUR, RUUUURRUU-UR, URUUURUUURU, RLTUUUURLTUUUR, UURUURUUURLTU and URUUURUUURU; or
the PUCCH structure set includes two PUCCH structures, wherein a first PUCCH structure includes one or two symbol locations used for transmitting RS and is one of the following PUCCH structures: UURUUUURUUU, UURUUUUURUU, URUUUUURUUU, URUUUUUUURU, RUUUURUUUUU, RUUUUURUUTTU, UUUURUUURUUU, URUUURUUUU, RUUUUUUUURU, URUUUUUUUUR, URUUUUUURUU, UUUURRUUUUU, RUUUUUUUUUR, RUUUUUUUUUU and UUUUURUUUUU; and a second PUCCH structure includes three or four symbol locations used for transmitting RS and is one of the following PUCCH structures: UURURURURUU, URURUURURUU, URURUURUURU, URURUUURURU, URUURURUURU, URRUUUUURRU, URRUUUURRUU, UURRUURRUU, RU-URUUURUUR, RUUURURUUUR, RUUURRUUUUR, RUUUURRUUUR, URUUURUUURU, RUUUURUUUUR, UURUURUURUU and URUUURUUURU;
wherein in the PUCCH structure, U represents a symbol location used for transmitting UCI, and R represents a symbol location used for transmitting RS.

In one possible implementation, when the number A is 12:

the PUCCH structure set includes one PUCCH structure, and the PUCCH structure included in the PUCCH structure set includes two symbol locations used for transmitting RS and is one of the following PUCCH structures: UUUR-UUUUURUUU, UURUUUUUURUU, UURUUUUURUUU, URUUUUUUUURU, RUUUUURUUUUU, UURUUURUUUU, UUUUURRUUUUU and RUUUUUUUUUUR; or
the PUCCH structure set includes one PUCCH structure, and the PUCCH structure included in the PUCCH structure set includes three or four symbol locations used for transmitting RS and is one of the following PUCCH structures: UURURUURURUU, URUURUURUURU, URURUUURURUU, URURUUUURURU, UURRUUUURRUU, UURRUUURRUUU, RUURUUUURUUR, RUUURUURUUUR, RUUUURRUUUUR, RUUURURUUURU, URUUURUUUR-UU, URUUURUUUURU, URUUUURUUURU, RUUUURLTUUUURU, RUUUUURUUUUR, RUUUURUUUUUR, UU-RUURUUURUU, UURUUURUURUU and UURUURUURUUU; or
the PUCCH structure set includes two PUCCH structures, wherein a first PUCCH structure includes one or two symbol locations used for transmitting RS and is one of the following PUCCH structures: UUURUUUUURUUU, UURUUUUUURUU, UURUUUUURUUU, URUUUUUUUURU, RUUUUURUUUUU, UURUUURUUUU, UUULTURRUUUUU, RUUUUUUUUUUR, RUUUUUUUUUUU and UUUUURUUUUUU; and a second PUCCH structure includes three or four symbol locations used for transmitting RS and is one of the following PUCCH structures: UURURUURURUU, URUURUURUURU, URURUUURURUU, URURUUUURURU, UURRUUUURRUU, UURRUUURRUUU, RUURUUUURUUR, RUUURUURUUUR, RUUUURRUUUUR, RUUURURUUURU, URUUURUUUR-UU, URUUURUUUURU, URUUUURUUURU, RUUUURLTUUUURU, RULTUUUURUUUUR, RUUUURUUUUUR, UU-RUURUUURUU, UURUUURUURUU and UURUURUURUUU;
wherein in the PUCCH structure, U represents a symbol location used for transmitting UCI, and R represents a symbol location used for transmitting RS.

In one possible implementation, when the number A is 13:

the PUCCH structure set includes one PUCCH structure, and the PUCCH structure included in the PUCCH structure set includes two symbol locations used for transmitting RS and is one of the following PUCCH structures: UURUUUUUUURUU, UUURUUUUURUUU, URUUUUUUUUURU, RUUUUURUUUUUU, RUUUUUURUUUUU, UURUUUUUURUUU, UUUUURRUUUUUU and RUUUUUUUUUUUR; or
the PUCCH structure set includes one PUCCH structure, and the PUCCH structure included in the PUCCH structure set includes three or four symbol locations used for transmitting RS and is one of the following PUCCH structures: UURURUUURURUU, URUURUUURUURU, URURUUUURURU, URUURUURUURUU, URUURUURUURU, UURRUUUURRUU, UUURRUUURRUUU, RUURUURUURUUU, RUURUUUURUUR, RUUURUURUUUR, RUUUURRUUUUR, URUUURURUUURU, RUUURUURUUURU, UURUUURUUURUU, URUUUURUUURU, RUUUURUUUUUR, UUURUURUURUUU and UUURUUURUURUU; or
the PUCCH structure set includes two PUCCH structures, wherein a first PUCCH structure includes one or two symbol locations used for transmitting RS and is one of the following PUCCH structures: UURUUUUUUURUU, UUURUUUUURUUU, URUUUUUUUUURU, RUUUUURUUUUUU, RUUUUUURUUUUU, UURUUUUUURUUU, UUUUURRUUUUUU, RUUUUUUUUUUUR, RUUUUUUUUUUUU and UUUUUURUUUUUU; and a second PUCCH structure includes three or four symbol locations used for transmitting RS and is one of the following PUCCH structures: UURURUUURURUU, URUURUUURUURU, URURUUUURURU, URUURUURUURUU, URUURUU-RUUURU, UURRUUUURRUU, UUURRUUURRUUU, RUURUURUURUUU, RUURUUUURUUR, RUUURUU-URUUUR, RUUUURRUUUUR, URUUURURUUURU, RUUURUURUUURU, UURUUURUUURUU, URUUUR-UUUURU, RUUUURUUUUUR, UUURUURUURUUU and UUURUUURUURUU;
wherein in the PUCCH structure, U represents a symbol location used for transmitting UCI, and R represents a symbol location used for transmitting RS.

In one possible implementation, when the number A is 14:

the PUCCH structure set includes one PUCCH structure, and the PUCCH structure included in the PUCCH structure set includes two symbol locations used for transmitting RS and is one of the following PUCCH structures: UURU-UUUUUURUU, UUUURUUUURUUU, URUUUUUUUUURU, RUUUUUURUUUUUU, UUURUUUUUURUUU, UUUUUURRUUUUUU and RUUUUUUUUUUUUR; or
the PUCCH structure set includes one PUCCH structure, and the PUCCH structure included in the PUCCH structure set includes three or four symbol locations used for transmitting RS and is one of the following PUCCH structures: URUUURUURUUURU, UURURUUURURUU, URUURLTUUURUURU, URUURUUURUURUU, URURUUUU-URURU, UURUURUURUURUU, UURRUUUUURRUU, UUURRUUUURRUU, RUURUUURUURUUU, RUUR-UUUUUURUUR, RUUURLTUUURUUR, RUUUUURRUUUUUR, UURUURUUURUURU, URUUURLTUUUR-UU, URUUUURUUUUURU, URULTUUURUUUURU, RUUUURUUUUUUR, RUUUUURUUUUUR, RUUUUR-UUUUURU, URULTUUURUUUUUR, UUURUUURUURUUU, UUURUURUUURUUU, UURUUURUUURUUU and UURUUUURUUURUU; or
the PUCCH structure set includes two PUCCH structures, wherein a first PUCCH structure includes one or two symbol locations used for transmitting RS and is one of the following PUCCH structures: UURUUUUUUURUU, UUUUURUUUURUUU, URUUUUUUUUURU, RUUUUUURUUtTUtTU, UUURUUUUUURUUU, UUUUUURRU-UUUUU, RUUUUUUUUUUUUR, RUUUUUUUUUUUUU and UUUUUURUUUUUUU; and a second PUCCH structure includes three or four symbol locations used for transmitting RS and is one of the following PUCCH structures: URUUURUURUUURU, UURURLTUUURURUU, URUURLTUUURUURU, URUURUUURUURUU, URURUUUU-URURU, UURUURUURUURUU, UURRUUUUURRUU, UUURRLJWURRUUU, RUURUUURUURUUU, RUUR-UUUUUURUUR, RUUURLTUUURUUUR, RUUUUURRUUUUUR, UURUURUUURUURU, URLTUUURUUUUR-UU, URUUURUUUUURU, URUUUURUUUUURU, RUUUURUUUUUUR, RUUUUURUUUUUR, RUUUUR-UUUUURU, URUUUUURUUUUUR, UUURUUURUURUUU, UUURUURUUURUUU, UURUUURUUURUUU and UURUUUURUUURUU;
wherein in the PUCCH structure, U represents a symbol location used for transmitting UCI, and R represents a symbol location used for transmitting RS.

Embodiment 4

Referring to Fig. 4, provided by an embodiment of the present application is a device including a determination unit 401 and a transceiving unit 402.

The determination unit 401 is configured for determining the number A of symbols occupied by a PUCCH, the number A being a positive integer; determining a PUCCH structure set that is defined in correspondence to the number A of the symbols, a PUCCH structure included in the PUCCH structure set including the number A of symbol locations, the PUCCH structure set including one or more PUCCH structures, and when multiple PUCCH structures are included, the number of symbol locations used for transmitting pilot (RS) information in different PUCCH structures being different, wherein a PUCCH structure is a distribution rule for symbol locations used for transmitting uplink control information (UCI) and symbol locations used for transmitting RS; and determining a PUCCH structure corresponding to the PUCCH from the PUCCH structure set;

The transceiving unit 402 is configured for performing PUCCH reception on the basis of the corresponding PUCCH structure.

In one possible implementation, the determination unit 401 is configured for:

taking a PUCCH structure included in the PUCCH structure set as the corresponding PUCCH structure when the PUCCH structure set includes one PUCCH structure; or

selecting one PUCCH structure as the corresponding PUCCH structure from the PUCCH structure set when the PUCCH structure set includes multiple PUCCH structures;

the transceiving unit 402 is further configured for informing a selection result to a terminal through a configuration instruction;

the determination unit 401 is configured for selecting the PUCCH structure with most symbol locations used for transmitting RS as the corresponding PUCCH structure from the PUCCH structure set when it is determined that frequency hopping is performed during PUCCH transmission; and

the transceiving unit 402 is further configured for informing the terminal of a demand for frequency hopping through a configuration instruction.

In one possible implementation, the PUCCH structure set including one or more PUCCH structures includes:

this alternative is not covered by the subject-matter of the claims, when the value of the number A of the symbols is X1 to X2, for each number A of the symbols within X1 to X2, at least two PUCCH structures are defined in the PUCCH structure set; when the value of the number A of the symbols is (X2+1) to X4, for each number A of the symbols within (X2+1) to X4, one PUCCH structure is defined in the PUCCH structure set; or

when the value of the number A of the symbols is X1 to X2 and X3 to X4, for each number A of the symbols within X1 to X2 and X3 to X4, at least two PUCCH structures are defined in the PUCCH structure set; when the value of the number A of the symbols is (X2+1) to (X3-1), for each number A of the symbols within (X2+1) to (X3-1), one PUCCH structure is defined in the PUCCH structure set; or

with regard to the value of each number A of the symbols supported by the PUCCH, at least two PUCCH structures are defined in the PUCCH structure set; or

with regard to the value of each number A of the symbols supported by the PUCCH, one PUCCH structure is defined in the PUCCH structure set;

wherein X1, X2, X3 and X4 are positive integers, and X1<X2<X3<X4.

In one possible implementation, the transceiving unit 402 is configured for:

respectively receiving information carried in a first symbol group and information carried in a second symbol group at different frequency domain positions by taking first $\left\lfloor \frac{A}{2} \right\rfloor$ symbols included by the PUCCH as the first symbol group and last ( $A - \left\lfloor \frac{A}{2} \right\rfloor$ ) symbols included by the PUCCH as the second symbol group when it is determined that frequency hopping is performed during PUCCH transmission; or

respectively receiving information carried in a first symbol group and information carried in a second symbol group at different frequency domain positions by taking first $\left\lceil \frac{A}{2} \right\rceil$ symbols included by the PUCCH as the first symbol group and last ( $A - \left\lceil \dfrac{A}{2} \right\rceil$ ) symbols included by the PUCCH as the second symbol group.

In one possible implementation, when the number A is 4:

the PUCCH structure set includes one PUCCH structure, and the PUCCH structure included in the PUCCH structure set includes one symbol location used for transmitting RS and is one of the following PUCCH structures: URUU, UURU and RUUU; or
the PUCCH structure set includes one PUCCH structure, and the PUCCH structure included in the PUCCH structure set includes two symbol locations used for transmitting RS and is one of the following PUCCH structures: URRU, RURU, RUUR and URUR; or
the PUCCH structure set includes two PUCCH structures, wherein a first PUCCH structure includes one symbol location used for transmitting RS and is one of the following PUCCH structures: URUU, UURU and RUUU; and a second PUCCH structure includes two symbol locations used for transmitting RS and is one of the following PUCCH structures: URRU, RURU, RUUR and URUR;
wherein in the PUCCH structure, U represents a symbol location used for transmitting UCI, and R represents a symbol location used for transmitting RS.

In one possible implementation, when the number A is 5:

the PUCCH structure set includes one PUCCH structure, and the PUCCH structure included in the PUCCH structure set includes one symbol location used for transmitting RS and is one of the following PUCCH structures: UURUU, URUUU and RUUUU; or
the PUCCH structure set includes one PUCCH structure, and the PUCCH structure included in the PUCCH structure set includes two symbol locations used for transmitting RS and is one of the following PUCCH structures: URRUU, UURRU, RUURU, RURUU and URURU; or
the PUCCH structure set includes two PUCCH structures, wherein a first PUCCH structure includes one symbol location used for transmitting RS and is one of the following PUCCH structures: UURUU, URUUU and RUUUU; and a second PUCCH structure includes two symbol locations used for transmitting RS and is one of the following PUCCH structures: URRUU, UURRU, RUURU, RURUU and URURU;
wherein in the PUCCH structure, U represents a symbol location used for transmitting UCI, and R represents a symbol location used for transmitting RS.

In one possible implementation, when the number A is 6:

the PUCCH structure set includes one PUCCH structure, and the PUCCH structure included in the PUCCH structure set includes one symbol location used for transmitting RS and is one of the following PUCCH structures: URUUUU, UURUUU, UUURUU and RUUUUU; or
the PUCCH structure set includes one PUCCH structure, and the PUCCH structure included in the PUCCH structure set includes two symbol locations used for transmitting RS and is one of the following PUCCH structures: URURUU, URUURU, RUUUUR, URUUUR, RUUURU and UURRUU; or
the PUCCH structure set includes two PUCCH structures, wherein a first PUCCH structure includes one symbol location used for transmitting RS and is one of the following PUCCH structures: URUUUU, UURUUU, UUURUU and RUUUUU; and a second PUCCH structure includes two symbol locations used for transmitting RS and is one of the following PUCCH structures: URURUU, URUURU, RLTUUUR, URUUUR, RUUURU and UURRUU;
wherein in the PUCCH structure, U represents a symbol location used for transmitting UCI, and R represents a symbol location used for transmitting RS.

In one possible implementation, when the number A is 7:

the PUCCH structure set includes one PUCCH structure, and the PUCCH structure included in the PUCCH structure set includes one symbol location used for transmitting RS and is one of the following PUCCH structures: URUUUUU, UURUUUU, UUURUUU and RUUUUUU; or
the PUCCH structure set includes one PUCCH structure, and the PUCCH structure included in the PUCCH structure set includes two symbol locations used for transmitting RS and is one of the following PUCCH structures: RUUUUUR, URUUUUR, RUUUURU, URUUURU, URUURUU, UURURUU, UURRUUU and UUURRUU; or

the PUCCH structure set includes two PUCCH structures, wherein a first PUCCH structure includes one symbol location used for transmitting RS and is one of the following PUCCH structures: URUUUUU, UURUUUU, UUURUUU and RUUUUUU; and a second PUCCH structure includes two symbol locations used for transmitting RS and is one of the following PUCCH structures: RUUUUUR, URUUUUR, RUUUURU, URUUURU, URUURUU, UURURUU, UURRUUU and UUURRUU;

wherein in the PUCCH structure, U represents a symbol location used for transmitting UCI, and R represents a symbol location used for transmitting RS.

In one possible implementation, when the number A is 8:

the PUCCH structure set includes one PUCCH structure, and the PUCCH structure included in the PUCCH structure set includes two symbol locations used for transmitting RS and is one of the following PUCCH structures: URUUUURU, URUUURUU, RUUUUUUR, RUUUUURU, RUUUURUU, RUUURUUU, LTUURRLTUU and UURUURUU; or

the PUCCH structure set includes one PUCCH structure, and the PUCCH structure included in the PUCCH structure set includes three or four symbol locations used for transmitting RS and is one of the following PUCCH structures: URRUURRU, URURURUR, RURURURU, RUURRUUR, RURUURUR, RUURUURU, RUURUUUR, RUUURUUR, URURUURU and URURURUU; or

the PUCCH structure set includes two PUCCH structures, wherein a first PUCCH structure includes one or two symbol locations used for transmitting RS and is one of the following PUCCH structures: URUUUURU, URUUURUU, RUUUUUUR, RUUUUURU, RUUUURUU, RUUURUUU, UUURRUUU, UURUURUU, UUURUUUU and RUUUUUUU; and a second PUCCH structure includes three or four symbol locations used for transmitting RS and is one of the following PUCCH structures: URRUURRU, URURURUR, RURURURU, RURUURUR, RUURRUUR, RUURUURU, RUURUUUR, RUUURUUR, URURUURU and URURURUU;

wherein in the PUCCH structure, U represents a symbol location used for transmitting UCI, and R represents a symbol location used for transmitting RS.

In one possible implementation, when the number A is 9:

the PUCCH structure set includes one PUCCH structure, and the PUCCH structure included in the PUCCH structure set includes two symbol locations used for transmitting RS and is one of the following PUCCH structures: UURUUURUU, URUUUURUU, URUUUUURU, URUUURUUU, RUUURUUUU, RUUUUUUUR, RUUUUURUU, RUUUUUURU, RLTUUURUUU, UURUUUURU, UUUURRUUU and UUURRUUUU; or

the PUCCH structure set includes one PUCCH structure, and the PUCCH structure included in the PUCCH structure set includes three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU; or

the PUCCH structure set includes two PUCCH structures, wherein a first PUCCH structure includes one or two symbol locations used for transmitting RS and is one of the following PUCCH structures: UURUUURUU, URUUUURUU, URUUUUURU, URUUURUUU, RUUURUUUU, RUUUUUUUR, RULTUUURUU, RUUUUUURU, RUUUURUUU, UURUUUURU, UUUURRUUU, UUURRUUUU, RUUUUUUUU and UUUURUUUU; and a second PUCCH structure includes three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU;

wherein in the PUCCH structure, U represents a symbol location used for transmitting UCI, and R represents a symbol location used for transmitting RS.

In one possible implementation, when the number A is 10:

the PUCCH structure set includes one PUCCH structure, and the PUCCH structure included in the PUCCH structure set includes two symbol locations used for transmitting RS and is one of the following PUCCH structures: UURUUUURUU, URUUUURUUU, URUUUUUURU, RUUUURUUUU, UURUUURUUU, URUUURUUUU, URUUUUR-UU, RUUUUUUUUR, RUUUUUURUU, RUUUUURUUU and UUUURRUUUU; or

the PUCCH structure set includes one PUCCH structure, and the PUCCH structure included in the PUCCH structure set includes three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURLTUUUR, URUURUURUU and URUUURUURU; or

the PUCCH structure set includes two PUCCH structures, wherein a first PUCCH structure includes one or two symbol locations used for transmitting RS and is one of the following PUCCH structures: UURUUUURUU, URUUUURUUU, URUUUUUURU, RUUUURUUUU, UURUUURUUU, URUUURUUUU, URUUUUURUU, RUUUUUUUUR, RUUUTTUURUU, RUUUUURUUU, UUUURRUUUU, RUUUUUUUUU and UUUURUUUUU; and a second PUCCH structure includes three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURUUUUR, URUURUURUU and URUUURUUUR; wherein in the PUCCH structure, U represents a symbol location used for transmitting UCI, and R represents a symbol location used for transmitting RS.

In one possible implementation, when the number A is 11:

the PUCCH structure set includes one PUCCH structure, and the PUCCH structure included in the PUCCH structure set includes two symbol locations used for transmitting RS and is one of the following PUCCH structures: UURU-UUURUUU, UURUUUUURUU, URUUUUURUUU, URUUUUUURU, RUUUURUUUUU, RUUUUURUUUU, UU-URUUURUUU, URUUURUUUU, RUUUUUUUURU, URUUUUUUUR, URUUUUURUU, UUUURRUUUUU and RUUUUUUUUUR; or
the PUCCH structure set includes one PUCCH structure, and the PUCCH structure included in the PUCCH structure set includes three or four symbol locations used for transmitting RS and is one of the following PUCCH structures: UURURURURUU, URURUURURUU, URURUURUURU, URURUUUURURU, URUURURUURU, URRUUUUURRU, URRUUUURRUU, UURRUUURRUU, RUURUUURUUR, RUUURURUUUR, RUUURRLTUUUR, RUUUURRUUUR, URUUURUUURU, RLTUUURLTUUUR, UURUURUURLTU and URUUURUUURU; or
the PUCCH structure set includes two PUCCH structures, wherein a first PUCCH structure includes one or two symbol locations used for transmitting RS and is one of the following PUCCH structures: UURUUUURUUU, UUR-UUUUURUU, URUUUUURUUU, URUUUUUURU, RUUUURUUUUU, RUUUUURUUTTU, UUUURUUURUUU, URUUURUUUU, RUUUUUUUURU, URUUUUUUUR, URUUUUURUU, UUUURRUUUUU, RUUUUUUUUUR, RUUUUUUUUUU and UUUUURUUUUU; and a second PUCCH structure includes three or four symbol locations used for transmitting RS and is one of the following PUCCH structures: UURURURURUU, URURUURURUU, URURUURUURU, URURUUURURU, URUURURUURU, URRUUUUURRU, URRUUUURRUU, UURRUURRUU, RU-URUUUURUUR, RUUURURUUUR, RUUURRUUUUR, RUUUURRUUUR, URUUURUUURU, RLTUUURLTUUUR, UURUURUURLTU and URUUURUUURU;
wherein in the PUCCH structure, U represents a symbol location used for transmitting UCI, and R represents a symbol location used for transmitting RS.

In one possible implementation, when the number A is 12:

the PUCCH structure set includes one PUCCH structure, and the PUCCH structure included in the PUCCH structure set includes two symbol locations used for transmitting RS and is one of the following PUCCH structures: UUUR-UUUUURUUU, UURUUUUUURUU, UURUUUUURUUU, URUUUUUUUURU, RUUUUURUUUUU, UURUUURUUUU, UUUUURRUUUUU and RUUUUUUUUUUR; or
the PUCCH structure set includes one PUCCH structure, and the PUCCH structure included in the PUCCH structure set includes three or four symbol locations used for transmitting RS and is one of the following PUCCH structures: UURURUURURUU, URUUURUURUUR, URURUUURURUU, URURUUUURURU, UURRUUUURRUU, UURRU-UURRUU, RUURUUUURUUR, RUUURUURUUUR, RUUUURRUUUUR, RUUURURUUUURU, URUUURUUUR-UU, URUUURUUUURU, URUUUURUUURU, RUUUURLTUUUURU, RUUUUURUUUUR, RUUURUUUUUR, UU-RUURUUURUU, UURUUURUURUU and UURRUURUURUUU; or
the PUCCH structure set includes two PUCCH structures, wherein a first PUCCH structure includes one or two symbol locations used for transmitting RS and is one of the following PUCCH structures: UUURUUUURUUU, UURUUUUUURUU, UURUUUUURUUU, URUUUUUUUURU, RUUUUURUUUUU, UURUUURUUUU, UUULTURRUUUUU, RUUUUUUUUUUR, RUUUUUUUUUUU and UUUUURUUUUUU; and a second PUCCH structure includes three or four symbol locations used for transmitting RS and is one of the following PUCCH structures: UURURUURURUU, URUUURUURUUR, URURUUURURUU, URURUUUURURU, UURRUUUURRUU, UURRU-UURRUU, RUURUUUURUUR, RUUURUURUUUR, RUUUURRUUUUR, RUUURURUUUURU, URUUURUUUR-UU, URUUURUUUURU, URUUUURUUURU, RUUUURLTUUUURU, RULTUUURUUUUR, RUUUURUUUUUR, UU-RUURUUURUU, UURUUURUURUU and UURRUURUURUUU;
wherein in the PUCCH structure, U represents a symbol location used for transmitting UCI, and R represents a symbol location used for transmitting RS.

In one possible implementation, when the number A is 13:

the PUCCH structure set includes one PUCCH structure, and the PUCCH structure included in the PUCCH structure set includes two symbol locations used for transmitting RS and is one of the following PUCCH structures: UURU-UUUUUURUU, UUURUUUURUUU, URUUUUUUUURU, RUUUURUUUUUU, RUUUUURUUUUU, UURU-UUUUURUUU, UUUUURRUUUUU and RUUUUUUUUUUR; or

the PUCCH structure set includes one PUCCH structure, and the PUCCH structure included in the PUCCH structure set includes three or four symbol locations used for transmitting RS and is one of the following PUCCH structures: UURURUUURURUU, URUURUUURUURU, URURUUUURURU, URUURUURUURUU, URUURUURUUURU, UURRUUUURRUU, UUURRUUURRUUU, RUURUURUURUU, RUURUUUURUUR, RUUURUURUUUR, RUUUURRUUUUR, URUUURURUUURU, RUUURUURUUURU, UURUUURUUURUU, URLTUUURUUUURU, RUUUUURUUUUR, UUURUURUURUUU and UURUUUURUURUU; or

the PUCCH structure set includes two PUCCH structures, wherein a first PUCCH structure includes one or two symbol locations used for transmitting RS and is one of the following PUCCH structures: UURUUUUUUURUU, UUURUUUURUUU, URUUUUUUUURU, RUUUURUUUUUU, RUUUUURUUUUU, UURUUUUUURUUU, UUUUURRUUUUU, RUUUUUUUUUUR, RUUUUUUUUUUU and UUUUUURUUUUUU; and a second PUCCH structure includes three or four symbol locations used for transmitting RS and is one of the following PUCCH structures: UURURUUURURUU, URUURUUURUURU, URURUUUURURU, URUURUURUURUU, URUURUU-RUUURU, UURRUUUURRUU, UUURRUUURRUUU, RUURUURUURUUU, RUURUUUURUUR, RUUURUU-URUUUR, RUUUURRUUUUR, URUUURURUUURU, RUUURUURUUURU, UURUUURUUURUU, URLTUUUR-UUUURU, RUUUUURUUUUR, UUURUURUURUUU and UURUUUURUURUU;

wherein in the PUCCH structure, U represents a symbol location used for transmitting UCI, and R represents a symbol location used for transmitting RS.

In one possible implementation, when the number A is 14:

the PUCCH structure set includes one PUCCH structure, and the PUCCH structure included in the PUCCH structure set includes two symbol locations used for transmitting RS and is one of the following PUCCH structures: UURU-UUUUUURUU, UUUURUUUURUUUU, URUUUUUUUUURU, RUUUUUURUUUUUU, UUURUUUUUURUUU, UUUUUURRUUUUUU and RUUUUUUUUUUUUR; or

the PUCCH structure set includes one PUCCH structure, and the PUCCH structure included in the PUCCH structure set includes three or four symbol locations used for transmitting RS and is one of the following PUCCH structures: URUUURUURUUURU, UURURUUUURURUU, URUURLTUUURUURU, URUURUUURUURUU, URURUUUU-URURU, UURUURUURUURUU, UUURRUUUUURRUU, UUUURRUUUURRUUU, RUURUUURUURUUU, RUUR-UUUUUURUUR, RUUURUUUURUUUR, RUUUUURRUUUUUR, UURUURUUURUURU, URUUUURUUUURUU, URUUUURUUUURU, URUUUURUUUURU, RUUUUURUUUUUUR, RUUUUUURUUUUUR, RUUUUURUUU-UURU, URUUUUURUUUUUR, UUURUURUURUUU, UUURUURUURUUU, UURUUURUUURUUU and UUR-UUUUURUUURUU; or

the PUCCH structure set includes two PUCCH structures, wherein a first PUCCH structure includes one or two symbol locations used for transmitting RS and is one of the following PUCCH structures: UURUUUUUUUURUU, UUUURUUUURUUU, URUUUUUUUUUURU, RUUUUUURUUUUUU, UUURUUUUUURUUU, UUUUUURRUU-UUUU, RUUUUUUUUUUUUR, RUUUUUUUUUUUUU and UUUUUUURUUUUUUU; and a second PUCCH structure includes three or four symbol locations used for transmitting RS and is one of the following PUCCH structures: URUUURUURUUURU, UURURLTUUURURUU, URUURLTUUURUURU, URUURUUURUURUU, URURUUUU-URURU, UURUURUURUURUU, UUURRUUUUURRUU, UUUURRUUUURRUUU, RUURUUURUURUUU, RUUR-UUUUUURUUR, RUUURUUUURUUUR, RUUUUURRUUUUUR, UURUURUUURUURU, URUUUURUUUURUU, URUUUURUUUURU, URUUUURUUUURU, RUUUUURUUUUUUR, RUUUUUURUUUUUR, RUUUUURUUU-UURU, URUUUUURUUUUUR, UUURUURUURUUU, UUURUURUURUUU, UURUUURUUURUUU and UUR-UUUUURUUURUU;

wherein in the PUCCH structure, U represents a symbol location used for transmitting UCI, and R represents a symbol location used for transmitting RS.

Embodiment 5

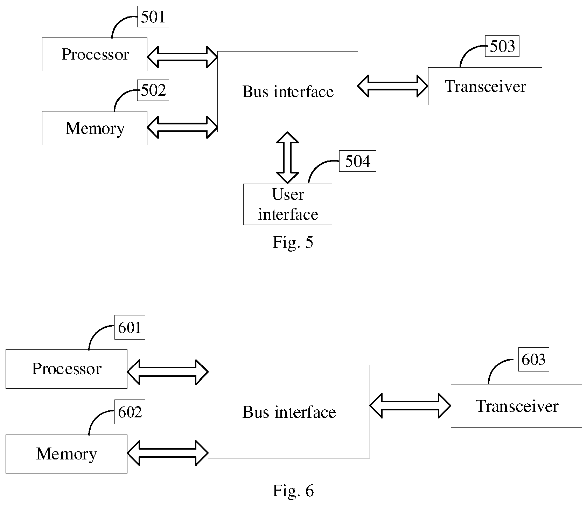

Referring to Fig. 5, provided by an embodiment of the present application is another user equipment including a processor 501 as well as a memory 502 and a transceiver 503 connected with the processor 501. The processor 501 is configured for reading a program in the memory 502 to execute the following process.

In Fig. 5, a bus structure can include any number of interconnected buses and bridges and can specifically link various circuits of one or more processors represented by the processor 501 and a memory represented by the memory 502 together. The bus structure can also link various other circuits such as peripheral equipment, a voltage stabilizer and a power management circuit together, which are publically known by those skilled in the art and will not be further described herein. A bus interface is provided with an interface. The transceiver 503 can be multiple elements, namely a transmitter and a receiver, and is provided with units for communication with various other devices on a transmission medium. For different user equipments, the user interface 504 can also be an interface which can be externally or internally connected with required equipment, and the connected equipment includes, but is not limited, to a keypad, a display, a loudspeaker, a microphone, an operating lever and the like.

The processor 501 takes charge of managing the bus structure and ordinary processing, and the memory 502 can store data used when the processor 501 performs operations.

The processor 501 is configured for reading a program in the memory 502 to execute the following process:

the number A of symbols occupied by a PUCCH is determined, and the number A is a positive integer; a PUCCH structure set that is defined in correspondence to the number A of the symbols is determined, a PUCCH structure included in the PUCCH structure set includes the number A of symbol locations, the PUCCH structure set includes one or more PUCCH structures, and when multiple PUCCH structures are included, the number of symbol locations used for transmitting pilot (RS) information in different PUCCH structures is different, wherein a PUCCH structure is a distribution rule for symbol locations used for transmitting uplink control information (UCI) and symbol locations used for transmitting RS; and a PUCCH structure corresponding to the PUCCH is determined from the PUCCH structure set, and PUCCH transmission is performed through the transceiver 503 on the basis of the corresponding PUCCH structure.

In one possible implementation, the operation that a PUCCH structure corresponding to the PUCCH is determined from the PUCCH structure set when the PUCCH structure set includes one PUCCH structure includes: a PUCCH structure included in the PUCCH structure set is taken as the corresponding PUCCH structure; or

the operation that a PUCCH structure corresponding to the PUCCH is determined from the PUCCH structure set when the PUCCH structure set includes multiple PUCCH structures includes: one PUCCH structure is selected as the corresponding PUCCH structure from the PUCCH structure set according to an acquired configuration instruction; and/or the PUCCH structure with most symbol locations used for transmitting RS is selected as the corresponding PUCCH structure from the PUCCH structure set when it is determined that frequency hopping is performed during PUCCH transmission.

In one possible implementation, the PUCCH structure set including one or more PUCCH structures includes:

this alternative is not covered by the subject-matter of the claims, when the value of the number A of the symbols is X1 to X2, for each number A of the symbols within X1 to X2, at least two PUCCH structures are defined in the PUCCH structure set; when the value of the number A of the symbols is (X2+1) to X4, for each number A of the symbols within (X2+1) to X4, one PUCCH structure is defined in the PUCCH structure set; or when the value of the number A of the symbols is X1 to X2 and X3 to X4, for each number A of the symbols within X1 to X2 and X3 to X4, at least two PUCCH structures are defined in the PUCCH structure set; when the value of the number A of the symbols is (X2+1) to (X3-1), for each number A of the symbols within (X2+1) to (X3-1), one PUCCH structure is defined in the PUCCH structure set; or with regard to the value of each number A of the symbols supported by the PUCCH, at least two PUCCH structures are defined in the PUCCH structure set; or with regard to the value of each number A of the symbols supported by the PUCCH, one PUCCH structure is defined in the PUCCH structure set; wherein X1, X2, X3 and X4 are positive integers, and X1<X2<X3<X4.

In one possible implementation, the operation that a PUCCH structure corresponding to the PUCCH is determined from the PUCCH structure set when it is determined that frequency hopping is performed during PUCCH transmission, and the transceiver 503 is controlled to perform PUCCH transmission on the basis of the corresponding PUCCH structure, includes:

the transceiver 503 is controlled to respectively transmit information carried in a first symbol group and information carried in a second symbol group at different frequency domain positions by taking first symbols included by the PUCCH as the first symbol group and last ( $A-\left\lfloor\dfrac{A}{2}\right\rfloor$ ) symbols included by the PUCCH as the second symbol group; or

the transceiver 503 is controlled to respectively transmit information carried in a first symbol group and information carried in a second symbol group at different frequency domain positions by taking first $\left\lceil\dfrac{A}{2}\right\rceil$ symbols included by the PUCCH as the first symbol group and last ( $A-\left\lceil\dfrac{A}{2}\right\rceil$ ) symbols included by the PUCCH as the second symbol group.

In one possible implementation, when the number A is 4:

the PUCCH structure set includes one PUCCH structure, and the PUCCH structure included in the PUCCH structure set includes one symbol location used for transmitting RS and is one of the following PUCCH structures: URUU, UURU and RUUU; or
the PUCCH structure set includes one PUCCH structure, and the PUCCH structure included in the PUCCH structure set includes two symbol locations used for transmitting RS and is one of the following PUCCH structures: URRU, RURU, RUUR and URUR; or
the PUCCH structure set includes two PUCCH structures, wherein a first PUCCH structure includes one symbol location used for transmitting RS and is one of the following PUCCH structures: URUU, UURU and RUUU; and a second PUCCH structure includes two symbol locations used for transmitting RS and is one of the following PUCCH structures: URRU, RURU, RUUR and URUR;
wherein in the PUCCH structure, U represents a symbol location used for transmitting UCI, and R represents a symbol location used for transmitting RS.

In one possible implementation, when the number A is 5:

the PUCCH structure set includes one PUCCH structure, and the PUCCH structure included in the PUCCH structure set includes one symbol location used for transmitting RS and is one of the following PUCCH structures: UURUU, URUUU and RUUUU; or
the PUCCH structure set includes one PUCCH structure, and the PUCCH structure included in the PUCCH structure set includes two symbol locations used for transmitting RS and is one of the following PUCCH structures: URRUU, UURRU, RUURU, RURUU and URURU; or
the PUCCH structure set includes two PUCCH structures, wherein a first PUCCH structure includes one symbol location used for transmitting RS and is one of the following PUCCH structures: UURUU, URUUU and RUUUU; and a second PUCCH structure includes two symbol locations used for transmitting RS and is one of the following PUCCH structures: URRUU, UURRU, RUURU, RURUU and URURU;
wherein in the PUCCH structure, U represents a symbol location used for transmitting UCI, and R represents a symbol location used for transmitting RS.

In one possible implementation, when the number A is 6:

the PUCCH structure set includes one PUCCH structure, and the PUCCH structure included in the PUCCH structure set includes one symbol location used for transmitting RS and is one of the following PUCCH structures: URUUUU, UURUUU, UUURUU and RUUUUU; or
the PUCCH structure set includes one PUCCH structure, and the PUCCH structure included in the PUCCH structure set includes two symbol locations used for transmitting RS and is one of the following PUCCH structures: URURUU, URUURU, RUUUUR, URUUUR, RUUURU and UURRUU; or
the PUCCH structure set includes two PUCCH structures, wherein a first PUCCH structure includes one symbol location used for transmitting RS and is one of the following PUCCH structures: URUUUU, UURUUU, UUURUU and RUUUUU; and a second PUCCH structure includes two symbol locations used for transmitting RS and is one of the following PUCCH structures: URURUU, URUURU, RLTUUUR, URUUUR, RUUURU and UURRUU;
wherein in the PUCCH structure, U represents a symbol location used for transmitting UCI, and R represents a symbol location used for transmitting RS.

In one possible implementation, when the number A is 7:

the PUCCH structure set includes one PUCCH structure, and the PUCCH structure included in the PUCCH structure set includes one symbol location used for transmitting RS and is one of the following PUCCH structures: URUUUUU, UURUUUU, UUURUUU and RUUUUUU; or

the PUCCH structure set includes one PUCCH structure, and the PUCCH structure included in the PUCCH structure set includes two symbol locations used for transmitting RS and is one of the following PUCCH structures: RUUUUUR, URUUUUR, RUUUURU, URUUURU, URUURUU, UURURUU, UURRUUU and UUURRUU; or

the PUCCH structure set includes two PUCCH structures, wherein a first PUCCH structure includes one symbol location used for transmitting RS and is one of the following PUCCH structures: URUUUUU, UURUUUU, UUURUUU and RUUUUUU; and a second PUCCH structure includes two symbol locations used for transmitting RS and is one of the following PUCCH structures: RUUUUUR, URUUUUR, RUUUURU, URUUURU, URUURUU, UURURUU, UURRUUU and UUURRUU;

wherein in the PUCCH structure, U represents a symbol location used for transmitting UCI, and R represents a symbol location used for transmitting RS.

In one possible implementation, when the number A is 8:

the PUCCH structure set includes one PUCCH structure, and the PUCCH structure included in the PUCCH structure set includes two symbol locations used for transmitting RS and is one of the following PUCCH structures: URUU-UURU, URUUURUU, RUUUUUR, RUUUURU, RUUUURUU, RUUURUUU, LTUURRLTUU and UURUURUU; or

the PUCCH structure set includes one PUCCH structure, and the PUCCH structure included in the PUCCH structure set includes three or four symbol locations used for transmitting RS and is one of the following PUCCH structures: URRUURRU, URURURUR, RURURURU, RUURRUUR, RURUURUR, RUURUURU, RUURUUUR, RUUURUUR, URURUURU and URURURUU; or

the PUCCH structure set includes two PUCCH structures, wherein a first PUCCH structure includes one or two symbol locations used for transmitting RS and is one of the following PUCCH structures: URUUUURU, URUUURUU, RUUUUUUR, RUUUUURU, RUUUURUU, RUUURUUU, UUURRUUU, UURUURUU, UUURUUUU and RUUUUUUU; and a second PUCCH structure includes three or four symbol locations used for transmitting RS and is one of the following PUCCH structures: URRUURRU, URURURUR, RURURURU, RURUURUR, RUURRUUR, RUURUURU, RUURUUUR, RUUURUUR, URURUURU and URURURUU;

wherein in the PUCCH structure, U represents a symbol location used for transmitting UCI, and R represents a symbol location used for transmitting RS.

In one possible implementation, when the number A is 9:

the PUCCH structure set includes one PUCCH structure, and the PUCCH structure included in the PUCCH structure set includes two symbol locations used for transmitting RS and is one of the following PUCCH structures: UURUUURUU, URUUUURUU, URUUUUURU, URUUURUUU, RUUURUUUU, RUUUUUUUR, RUUUUURUU, RUUUUUURU, RLTUUURUUU, , UURUUUURU, UUUURRUUU and UUURRUUUU; or

the PUCCH structure set includes one PUCCH structure, and the PUCCH structure included in the PUCCH structure set includes three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU; or

the PUCCH structure set includes two PUCCH structures, wherein a first PUCCH structure includes one or two symbol locations used for transmitting RS and is one of the following PUCCH structures: UURUUURUU, URUUUURUU, URUUUUURU, URUUURUUU, RUUURUUUU, RUUUUUUUR, RULTUUURUU, RUUUUUURU, RLTUUURUUU, UURUUUURU, UUUURRUUU, UUURRUUUU, RUUUUUUUU and UUUURUUUU; and a second PUCCH structure includes three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU;

wherein in the PUCCH structure, U represents a symbol location used for transmitting UCI, and R represents a symbol location used for transmitting RS.

In one possible implementation, when the number A is 10:

the PUCCH structure set includes one PUCCH structure, and the PUCCH structure included in the PUCCH structure set includes two symbol locations used for transmitting RS and is one of the following PUCCH structures: UURU-UUURUU, URUUUURUUU, URUUUUURU, RUUUURUUUU, UURUUURUUU, URUUURUUUU, URUUUUR-UU, RUUUUUUUR, RUUUUUURUU, RUUUUURUUU and UUUURRUUUU; or

the PUCCH structure set includes one PUCCH structure, and the PUCCH structure included in the PUCCH structure set includes three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURLTUUUR, URUURUURUU and URUUURUUUR; or

the PUCCH structure set includes two PUCCH structures, wherein a first PUCCH structure includes one or two symbol locations used for transmitting RS and is one of the following PUCCH structures: UURUUUURUU, URUU-UURUUU, URUUUUURU, RUUUURUUUU, UURUUURUUU, URUUURUUUU, URUUUUURUU, RUUUUUUUUR, RUUUTTUURUU, RUUUUURUUU, UUUURRUUUU, RUUUUUUUUU and UUUURUUUUU; and a second PUCCH structure includes three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURUUUUR, URUURUURUU and URUUURUUUR; wherein in the PUCCH structure, U represents a symbol location used for transmitting UCI, and R represents a symbol location used for transmitting RS.

In one possible implementation, when the number A is 11:

the PUCCH structure set includes one PUCCH structure, and the PUCCH structure included in the PUCCH structure set includes two symbol locations used for transmitting RS and is one of the following PUCCH structures: UURU-UUURUU, UURUUUURUU, URUUUUURUUU, URUUUUUURU, RUUUURUUUUU, RUUUURUUUU, UU-URUUURUUU, URUUURUUUU, RUUUUUUUURU, URUUUUUUUR, URUUUUURUU, UUUURRUUUUU and RUUUUUUUUUR; or

the PUCCH structure set includes one PUCCH structure, and the PUCCH structure included in the PUCCH structure set includes three or four symbol locations used for transmitting RS and is one of the following PUCCH structures: UURURURURUU, URURUURURUU, URURUURUURU, URURUUUURURU, URUURURUURU, URRUUUUURRU, URRUUUURRUU, UURRUUURRUU, RUURUUURUUR, RUUURURUUUR, RUUURRLTUUUR, RUUUURRUUUR, URUUURUUURU, RLTUUURLTUUUR, UURUURUURLTU and URUUURUUURU; or

the PUCCH structure set includes two PUCCH structures, wherein a first PUCCH structure includes one or two symbol locations used for transmitting RS and is one of the following PUCCH structures: UURUUUURUUU, UUR-UUUUURUU, URUUUUURUUU, URUUUUUURU, RUUUURUUUUU, RUUUUURUUTTU, UUUURUUURUUU, URUUURUUUU, RUUUUUUUURU, URUUUUUUUR, URUUUUURUU, UUUURRUUUUU, RUUUUUUUUUU, RUUUUUUUUUUU and UUUUURUUUUU; and a second PUCCH structure includes three or four symbol locations used for transmitting RS and is one of the following PUCCH structures: UURURURURUU, URURUURURUU, URURUURUURU, URURUUURURU, URUURURUURU, URRUUUUURRU, URRUUUURRUU, UURRUURRUU, RU-URUUURUUR, RUUURURUUUR, RUUURRUUUUR, RUUUURRUUUR, URUUURUUURU, RLTUUURLTUUUR, UURUURUURLTU and URUUURUUURU;
wherein in the PUCCH structure, U represents a symbol location used for transmitting UCI, and R represents a symbol location used for transmitting RS.

In one possible implementation, when the number A is 12:

the PUCCH structure set includes one PUCCH structure, and the PUCCH structure included in the PUCCH structure set includes two symbol locations used for transmitting RS and is one of the following PUCCH structures: UUUR-UUUURUUU, UURUUUUURUU, UURUUUURUUU, URUUUUUUURU, RUUUURUUUUU, UURUUURUU-UU, UUUUURRUUUU and RUUUUUUUUUR; or

the PUCCH structure set includes one PUCCH structure, and the PUCCH structure included in the PUCCH structure set includes three or four symbol locations used for transmitting RS and is one of the following PUCCH structures: UURURUURURUU, URUURUURUURU, URURUUURURUU, URURUUUURURU, UURRUUUURRUU, UURRU-UURRUU, RUURUUURUUR, RUUURUURUUR, RUUURRUUUUR, RUUURURUUURU, URUUURUUR-UU, URUUURUUURU, URUUUURUUURU, RUUUURLTUUURU, RUUUUURUUUUR, RUUUURUUUUUR, UURUURUUURUU, UURUUURUURUU and UURUURUURUUU; or

the PUCCH structure set includes two PUCCH structures, wherein a first PUCCH structure includes one or two symbol locations used for transmitting RS and is one of the following PUCCH structures: UUURUUUURUUU, UURUUUUUURUU, UURUUUUURUUU, URUUUUUUURU, RUUUURUUUUU, UURUUURUUUU, UUULTUR-RUUUUU, RUUUUUUUUUUR, RUUUUUUUUUUUU and UUUUURUUUUUU; and a second PUCCH structure includes three or four symbol locations used for transmitting RS and is one of the following PUCCH structures: UURURUURURUU, URUURUURUURU, URURUUURURUU, URURUUUURURU, UURRUUUURRUU, UURRU-UURRUU, RUURUUUURUUR, RUUURUURUUUR, RUUUURRUUUUR, RUUUURURUUURU, URUUURUUR-UU, URUUURUUUURU, URUUUURUUURU, RUUUURUUUURU, RULTUUURUUUUR, RUUUURUUUUR, UU-RUURUUURUU, UURUUURUURUU and UURURUURUURUUU;

wherein in the PUCCH structure, U represents a symbol location used for transmitting UCI, and R represents a symbol location used for transmitting RS.

In one possible implementation, when the number A is 13:

the PUCCH structure set includes one PUCCH structure, and the PUCCH structure included in the PUCCH structure set includes two symbol locations used for transmitting RS and is one of the following PUCCH structures: UURU-UUUUUURUU, UUURUUUUURUUU, URUUUUUUUURU, RUUUUURUUUUU, RUUUUUURUUUU, UURU-UUUUURUU, UUUUURRUUUUU and RUUUUUUUUUUR; or

the PUCCH structure set includes one PUCCH structure, and the PUCCH structure included in the PUCCH structure set includes three or four symbol locations used for transmitting RS and is one of the following PUCCH structures: UURURUUURURUU, URUURUUURUURU, URURUUUUURURU, URUURUURUURUU, URUURUURUUURU, UURRUUUURRUU, UUURRUUURRUU, RUURUURUURUU, RUURUUUURUUR, RUUURUUURUUR, RUUUURRUUUUR, URUUURURUUURU, RUUURUURUUURU, UURUUURUUURUU, URLTUUURUUUURU, RUUUUURUUUUR, UUURUURUURUU and UURUUUURUURUU; or

the PUCCH structure set includes two PUCCH structures, wherein a first PUCCH structure includes one or two symbol locations used for transmitting RS and is one of the following PUCCH structures: UURUUUUUUURUU, UUURUUUUURUUU, URUUUUUUUURU, RUUUUURUUUUU, RUUUUUURUUUU, UURUUUUUURUUU, UUUUUURRUUUUU, RUUUUUUUUUUR, RUUUUUUUUUUU and UUUUUURUUUUU; and a second PUCCH structure includes three or four symbol locations used for transmitting RS and is one of the following PUCCH structures: UURURUUURURUU, URUURUUURUURU, URURUUUUURURU, URUURUURUURUU, URUURUU-RUUURU, UURRUUUURRUU, UUURRUUURRUU, RUURUURUURUU, RUURUUUURUUR, RUUURUU-URUUUR, RUUUURRUUUUR, URUUURURUUURU, RUUURUURUUURU, UURUUURUUURUU, URLTUUUR-UUUURU, RUUUUURUUUUR, UUURUURUURUU and UURUUUURUURUU;

wherein in the PUCCH structure, U represents a symbol location used for transmitting UCI, and R represents a symbol location used for transmitting RS.

In one possible implementation, when the number A is 14:

the PUCCH structure set includes one PUCCH structure, and the PUCCH structure included in the PUCCH structure set includes two symbol locations used for transmitting RS and is one of the following PUCCH structures: UURU-UUUUUUURUU, UUUURUUUURUUUU, URUUUUUUUUUURU, RUUUUUURUUUUU, UUURUUUUUURUUU, UUUUUURRUUUUUU and RUUUUUUUUUUUR; or

the PUCCH structure set includes one PUCCH structure, and the PUCCH structure included in the PUCCH structure set includes three or four symbol locations used for transmitting RS and is one of the following PUCCH structures: URUUURUURUUURU, UURURUUUURURUU, URUURLTUUUURUURU, URUURUUURUURUU, URURUUUU-URURU, UURUURUURUURUU, UURRUUUUURRUU, UUUURRUUUURRUU, RUURUUURUURUU, RUUR-UUUUUURUUR, RUUURLTUUURUUUR, RUUUUURRUUUUUR, UURUURUUURUURU, URUUUURLTUUUR-UU, URUUUURUUUURU, URULTUUUURUUUURU, RUUUURUUUUUUR, RUUUUUURUUUUUR, RUUUUR-UUUUURU, URULTUUURUUUUUR, UUURUUURUURUUU, UUURUURUUURUUU, UURUUURUUURUUU and UURUUUURUUURUU; or

the PUCCH structure set includes two PUCCH structures, wherein a first PUCCH structure includes one or two symbol locations used for transmitting RS and is one of the following PUCCH structures: UURUUUUUUUURUU, UUUURUUUURUUUU, URUUUUUUUUUURU, RUUUUUURUUtTUtTU, UUURUUUUUURUUU, UUUUUURRUUUUUU, RUUUUUUUUUUUUR, RUUUUUUUUUUUUU and UUUUUURUUUUUUU; and a second PUCCH structure includes three or four symbol locations used for transmitting RS and is one of the following PUCCH structures: URUUURUURUUURU, UURURLTUUUURURUU, URUURLTUUUURUURU, URUURUUURUURUU, URURUUUU-URURU, UURUURUURUURUU, UURRUUUUURRUU, UUURRLJWURRUUU, RUURUUURUURUU, RUUR-UUUUUURUUR, RUUURLTUUUURUUUR, RUUUUURRUUUUUR, UURUURUUURUURU, URLTUUURUUUUR-UU, URUUUURUUUURU, URUUUUURUUUURU, RUUUURUUUUUUR, RUUUUUURUUUUUR, RUUUUUR-UUUUURU, URUUUUURUUUUUR, UUURUUURUURUUU, UUURUURUUURUUU, UURUUURUUURUUU and UURUUUURUUURUU;

wherein in the PUCCH structure, U represents a symbol location used for transmitting UCI, and R represents a symbol location used for transmitting RS.

Embodiment 6

Referring to Fig. 6, provided by an embodiment of the present application is another device including a processor 601 as well as a memory 602 and a transceiver 603 connected with the processor 601.

In Fig. 6, a bus structure can include any number of interconnected buses and bridges and can specifically link various circuits of one or more processors represented by the processor 601 and a memory represented by the memory 602 together. The bus structure can also link various other circuits such as peripheral equipment, a voltage stabilizer and a power management circuit together, which are publically known by those skilled in the art and will not be further described herein. A bus interface is provided with an interface. The transceiver 603 can be multiple elements, namely a transmitter and a receiver, and is provided with units for communication with various other devices on a transmission medium. The processor 601 takes charge of managing the bus structure and ordinary processing, and the memory 602 can store data used when the processor 601 performs operations.

The processor 601 is configured for reading a program in the memory 602 to execute the following process:

the number A of symbols occupied by a PUCCH is determined, and the number A is a positive integer;
a PUCCH structure set that is defined in correspondence to the number A of the symbols is determined, a PUCCH structure included in the PUCCH structure set includes the number A of symbol locations, the PUCCH structure set includes one or more PUCCH structures, and when multiple PUCCH structures are included, the number of symbol locations used for transmitting pilot (RS) information in different PUCCH structures is different, wherein a PUCCH structure is a distribution rule for symbol locations used for transmitting uplink control information (UCI) and symbol locations used for transmitting RS; and
a PUCCH structure corresponding to the PUCCH is determined from the PUCCH structure set, and the transceiver 603 is controlled to perform PUCCH reception on the basis of the corresponding PUCCH structure.

In one possible implementation, the operation that a PUCCH structure corresponding to the PUCCH is determined from the PUCCH structure set when the PUCCH structure set includes one PUCCH structure includes: a PUCCH structure included in the PUCCH structure set is taken as the corresponding PUCCH structure; or

the operation that a PUCCH structure corresponding to the PUCCH is determined from the PUCCH structure set when the PUCCH structure set includes multiple PUCCH structures includes:
one PUCCH structure is selected as the corresponding PUCCH structure from the PUCCH structure set, and the transceiver 603 is controlled to inform a selection result to a terminal according to a configuration instruction; and/or
the PUCCH structure with most symbol locations used for transmitting RS is selected as the corresponding PUCCH structure from the PUCCH structure set when it is determined that frequency hopping is performed during PUCCH transmission, and the transceiver 603 is controlled to inform the terminal of a demand for frequency hopping through the configuration instruction.

In one possible implementation, the PUCCH structure set including one or more PUCCH structures includes:

this alternative is not covered by the subject-matter of the claims, when the value of the number A of the symbols is X1 to X2, for each number A of the symbols within X1 to X2, at least two PUCCH structures are defined in the PUCCH structure set; when the value of the number A of the symbols is (X2+1) to X4, for each number A of the symbols within (X2+1) to X4, one PUCCH structure is defined in the PUCCH structure set; or
when the value of the number A of the symbols is X1 to X2 and X3 to X4, for each number A of the symbols within X1 to X2 and X3 to X4, at least two PUCCH structures are defined in the PUCCH structure set; when the value of the number A of the symbols is (X2+1) to (X3-1), for each number A of the symbols within (X2+1) to (X3-1), one PUCCH structure is defined in the PUCCH structure set; or
with regard to the value of each number A of the symbols supported by the PUCCH, at least two PUCCH structures are defined in the PUCCH structure set; or
with regard to the value of each number A of the symbols supported by the PUCCH, one PUCCH structure is defined in the PUCCH structure set;
wherein X1, X2, X3 and X4 are positive integers, and X1<X2<X3<X4.

In one possible implementation, the operation that a PUCCH structure corresponding to the PUCCH is determined from the PUCCH structure set when it is determined that frequency hopping is performed during PUCCH transmission, and the transceiver 603 is controlled to perform PUCCH reception on the basis of the corresponding PUCCH structure, includes:

the transceiver 603 is controlled to respectively receive information carried in a first symbol group and information carried in a second symbol group at different frequency domain positions by taking first $\left\lfloor \dfrac{A}{2} \right\rfloor$ symbols included by the PUCCH as the first symbol group and last ( $A - \left\lfloor \dfrac{A}{2} \right\rfloor$ ) symbols included by the PUCCH as the second symbol group; or

the transceiver 603 is controlled to respectively receive information carried in a first symbol group and information carried in a second symbol group at different frequency domain positions by taking first $\left\lceil \dfrac{A}{2} \right\rceil$ symbols included by the PUCCH as the first symbol group and last ( $A - \left\lceil \dfrac{A}{2} \right\rceil$ ) symbols included by the PUCCH as the second symbol group.

In one possible implementation, when the number A is 4:

the PUCCH structure set includes one PUCCH structure, and the PUCCH structure included in the PUCCH structure set includes one symbol location used for transmitting RS and is one of the following PUCCH structures: URUU, UURU and RUUU; or
the PUCCH structure set includes one PUCCH structure, and the PUCCH structure included in the PUCCH structure set includes two symbol locations used for transmitting RS and is one of the following PUCCH structures: URRU, RURU, RUUR and URUR; or
the PUCCH structure set includes two PUCCH structures, wherein a first PUCCH structure includes one symbol location used for transmitting RS and is one of the following PUCCH structures: URUU, UURU and RUUU; and a second PUCCH structure includes two symbol locations used for transmitting RS and is one of the following PUCCH structures: URRU, RURU, RUUR and URUR;
wherein in the PUCCH structure, U represents a symbol location used for transmitting UCI, and R represents a symbol location used for transmitting RS.

In one possible implementation, when the number A is 5:

the PUCCH structure set includes one PUCCH structure, and the PUCCH structure included in the PUCCH structure set includes one symbol location used for transmitting RS and is one of the following PUCCH structures: UURUU, URUUU and RUUUU; or
the PUCCH structure set includes one PUCCH structure, and the PUCCH structure included in the PUCCH structure set includes two symbol locations used for transmitting RS and is one of the following PUCCH structures: URRUU, UURRU, RUURU, RURUU and URURU; or
the PUCCH structure set includes two PUCCH structures, wherein a first PUCCH structure includes one symbol location used for transmitting RS and is one of the following PUCCH structures: UURUU, URUUU and RUUUU; and a second PUCCH structure includes two symbol locations used for transmitting RS and is one of the following PUCCH structures: URRUU, UURRU, RUURU, RURUU and URURU;
wherein in the PUCCH structure, U represents a symbol location used for transmitting UCI, and R represents a symbol location used for transmitting RS.

In one possible implementation, when the number A is 6:

the PUCCH structure set includes one PUCCH structure, and the PUCCH structure included in the PUCCH structure set includes one symbol location used for transmitting RS and is one of the following PUCCH structures: URUUUU, UURUUU, UUURUU and RUUUUU; or
the PUCCH structure set includes one PUCCH structure, and the PUCCH structure included in the PUCCH structure set includes two symbol locations used for transmitting RS and is one of the following PUCCH structures: URURUU, URUURU, RUUUUR, URUUUR, RUUURU and UURRUU; or

the PUCCH structure set includes two PUCCH structures, wherein a first PUCCH structure includes one symbol location used for transmitting RS and is one of the following PUCCH structures: URUUUU, UURUUU, UUURUU and RUUUUU; and a second PUCCH structure includes two symbol locations used for transmitting RS and is one of the following PUCCH structures: URURUU, URUURU, RLTUUUR, URUUUR, RUUURU and UURRUU;

wherein in the PUCCH structure, U represents a symbol location used for transmitting UCI, and R represents a symbol location used for transmitting RS.

In one possible implementation, when the number A is 7:

the PUCCH structure set includes one PUCCH structure, and the PUCCH structure included in the PUCCH structure set includes one symbol location used for transmitting RS and is one of the following PUCCH structures: URUUUUU, UURUUUU, UUURUUU and RUUUUUU; or

the PUCCH structure set includes one PUCCH structure, and the PUCCH structure included in the PUCCH structure set includes two symbol locations used for transmitting RS and is one of the following PUCCH structures: RUUUUUR, URUUUUR, RUUUURU, URUUURU, URUURUU, UURURUU, LTURRUUU and UUURRUU; or

the PUCCH structure set includes two PUCCH structures, wherein a first PUCCH structure includes one symbol location used for transmitting RS and is one of the following PUCCH structures: URUUUUU, UURUUUU, UUURUUU and RUUUUUU; and a second PUCCH structure includes two symbol locations used for transmitting RS and is one of the following PUCCH structures: RUUUUUR, URUUUUR, RUUUURU, URUUURU, URUURUU, UURURUU, UURRUUU and UUURRUU;

wherein in the PUCCH structure, U represents a symbol location used for transmitting UCI, and R represents a symbol location used for transmitting RS.

In one possible implementation, when the number A is 8:

the PUCCH structure set includes one PUCCH structure, and the PUCCH structure included in the PUCCH structure set includes two symbol locations used for transmitting RS and is one of the following PUCCH structures: URUUUURU, URUUURUU, RUUUUUUR, RUUUUURU, RUUUURUU, RUUURUUU, LTUURRLTUU and UURUURUU; or

the PUCCH structure set includes one PUCCH structure, and the PUCCH structure included in the PUCCH structure set includes three or four symbol locations used for transmitting RS and is one of the following PUCCH structures: URRUURRU, URURURUR, RURURURU, RUURRUUR, RURUURUR, RUURUURU, RUURUUUR, RUUURUUR, URURUURU and URURURUU; or

the PUCCH structure set includes two PUCCH structures, wherein a first PUCCH structure includes one or two symbol locations used for transmitting RS and is one of the following PUCCH structures: URUUUURU, URUUURUU, RUUUUUUR, RUUUUURU, RUUUURUU, RUUURUUU, UUURRUUU, UURUURUU, UUURUUUU and RUUUUUUU; and a second PUCCH structure includes three or four symbol locations used for transmitting RS and is one of the following PUCCH structures: URRUURRU, URURURUR, RURURURU, RURUURUR, RUURRUUR, RUURUURU, RUURUUUR, RUUURUUR, URURUURU and URURURUU;

wherein in the PUCCH structure, U represents a symbol location used for transmitting UCI, and R represents a symbol location used for transmitting RS.

In one possible implementation, when the number A is 9:

the PUCCH structure set includes one PUCCH structure, and the PUCCH structure included in the PUCCH structure set includes two symbol locations used for transmitting RS and is one of the following PUCCH structures: UURUUURUU, URUUUURUU, URUUUUURU, URUUURUUU, RUUURUUUU, RUUUUUUUR, RUUUUURUU, RUUUUUURU, RLTUUURUUU, UURUUUURU, UUUURRUUU and UUURRUUUU; or

the PUCCH structure set includes one PUCCH structure, and the PUCCH structure included in the PUCCH structure set includes three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU; or

the PUCCH structure set includes two PUCCH structures, wherein a first PUCCH structure includes one or two symbol locations used for transmitting RS and is one of the following PUCCH structures: UURUUURUU, URUUUURUU, URUUUUURU, URUUURUUU, RUUURUUUU, RUUUUUUUR, RULTUUURUU, RUUUUUURU, RLTUUURUUU, UURUUUURU, UUUURRUUU, UUURRUUUU, RUUUUUUUU and UUUURUUUU; and a second PUCCH structure includes three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU;

wherein in the PUCCH structure, U represents a symbol location used for transmitting UCI, and R represents a symbol location used for transmitting RS.

In one possible implementation, when the number A is 10:

the PUCCH structure set includes one PUCCH structure, and the PUCCH structure included in the PUCCH structure set includes two symbol locations used for transmitting RS and is one of the following PUCCH structures: UURUUUURUU, URUUUURUUU, URUUUUUURU, RUUUURUUUU, UURUUURUUU, URUUURUUUU, URUUUURUU, RUUUUUUUR, RUUUUUURUU, RUUUURUUU and UUUURRUUUU; or

the PUCCH structure set includes one PUCCH structure, and the PUCCH structure included in the PUCCH structure set includes three or four symbol locations used for transmitting RS and is one of the following PUCCH structures: URURURURUU, URURUURURU, URUURRUURU, URRUUURRU, UURRUURRUU, RUURUURUUR, RUUUR-RUUUR, URURURUURU, RUUURUUURU, RUUURLTUUUR, URUURUURUU and URUUURUUUR; or

the PUCCH structure set includes two PUCCH structures, wherein a first PUCCH structure includes one or two symbol locations used for transmitting RS and is one of the following PUCCH structures: UURUUUURUU, URUUUURUUU, URUUUUUURU, RUUUURUUUU, UURUUURUUU, URUUURUUUU, URUUUURUU, RUUUUUU-UR, RUUUUUURUU, RUUUUURUUU, UULTURRUTTUU, RUUUUUUUUU and UUUURUUUUU; and a second PUCCH structure includes three or four symbol locations used for transmitting RS and is one of the following PUCCH structures: URURURURUU, URURUURURU, URUURRUURU, URRUUUURRU, UURRUURRLTU, RUUURUUR-UR, RUUURRUUUR, URURURUURU, RUUURUUURU, RUUURUUUUR, URUURUURUU and URUUURUUUR;

wherein in the PUCCH structure, U represents a symbol location used for transmitting UCI, and R represents a symbol location used for transmitting RS.

In one possible implementation, when the number A is 11:

the PUCCH structure set includes one PUCCH structure, and the PUCCH structure included in the PUCCH structure set includes two symbol locations used for transmitting RS and is one of the following PUCCH structures: UURUUUURUUU, UURUUUUURUU, URUUUUURUUU, URUUUUUUURU, RUUUURUUUUU, RUUUURUUUUU, UU-URUUURUUU, URUUURUUUU, RUUUUUUUURU, URUUUUUUUR, URUUUUURUU, UUUURRUUUUU and RUUUUUUUUUR; or

the PUCCH structure set includes one PUCCH structure, and the PUCCH structure included in the PUCCH structure set includes three or four symbol locations used for transmitting RS and is one of the following PUCCH structures: UURURURURUU, URURUURURUU, URURUURUURU, URURUUURURU, URUURURUURU, URRUUUUURRU, URRUUUURRUU, UURRUUURRUU, RUURUUURUUR, RUUUURURUUUR, RUUURRLTUUUR, RUUUURRUU-UR, URUUURUUURU, RLTUUURLTUUUR, UURUURUURLTU and URUUURUUURU; or

the PUCCH structure set includes two PUCCH structures, wherein a first PUCCH structure includes one or two symbol locations used for transmitting RS and is one of the following PUCCH structures: UURUUUURUUU, UUR-UUUUURUU, URUUUUURUUU, URUUUUUUURU, RUUUURUUUUU, RUUUURUUUUU, UUUURUUURUUU, UR-UUURUUUU, RUUUUUUUURU, URUUUUUUUUR, URUUUUURUU, UUUURRUUUUU, RUUUUUUUUUR, RU-UUUUUUUUU and UUUUURUUUUU; and a second PUCCH structure includes three or four symbol locations used for transmitting RS and is one of the following PUCCH structures: UURURURURUU, URURUURURUU, URURU-URUURU, URURUURURU, URUURURUURU, URRUUUUURRU, URRUUUURRUU, UURRUUURRUU, RUURUUURUUR, RUUURURUUUR, RUUURRUUUUR, RUUUURRUUUR, URUUURUUURU, RLTUUURLTUUUR, UURUURUURLTU and URUUURUUURU;

wherein in the PUCCH structure, U represents a symbol location used for transmitting UCI, and R represents a symbol location used for transmitting RS.

In one possible implementation, when the number A is 12:

the PUCCH structure set includes one PUCCH structure, and the PUCCH structure included in the PUCCH structure set includes two symbol locations used for transmitting RS and is one of the following PUCCH structures: UUUR-UUUURUUU, UURUUUUURUU, UURUUUUURUUU, URUUUUUUURU, RUUUUURUUUUU, UURUUURUU-UU, UUUUURRUUUUU and RUUUUUUUUUUR; or

the PUCCH structure set includes one PUCCH structure, and the PUCCH structure included in the PUCCH structure set includes three or four symbol locations used for transmitting RS and is one of the following PUCCH structures: UURURUURURUU, URUURUURUURU, URURUUURURUU, URURUUUURURU, UURRUUUURRUU, UURRU-

UURRUUU, RUURUUURUUR, RUUURUURUUUR, RUUUURRUUUUR, RUUURURUUURU, URUUURUUUR-UU, URUUURUUUURU, URUUUURUUURU, RUUUURLTUUURU, RUUUUURUUUUR, RUUURRUUUUUR, UU-RUURUUURUU, UURUUURUURUU and UURUUURUURUUU; or

the PUCCH structure set includes two PUCCH structures, wherein a first PUCCH structure includes one or two symbol locations used for transmitting RS and is one of the following PUCCH structures: UUURUUUURUUU, UURUUUUUURUU, UURUUUUURUUU, URUUUUUUUURU, RUUUUURUUUUU, UURUUURUUUU, UUULTUR-RUUUUU, RUUUUUUUUUUR, RUUUUUUUUUUUU and UUUUURUUUUUU; and a second PUCCH structure includes three or four symbol locations used for transmitting RS and is one of the following PUCCH structures: UURURUURURUU, URUURUURUURU, URURUUURURUU, URURUUURURU, UUURRUUUURRUU, UURRU-UURRUU, RUURUUURUUR, RUUURUURUUUR, RUUUURRUUUUR, RUUURURUUURU, URUUURUUUR-UU, URUUURUUUURU, URUUUURUUURU, RUUURUUUURU, RULTUUURUUUR, RUUUURUUUUR, UU-RUURUUURUU, UURUUURUURUU and UURUURUURUUU;

wherein in the PUCCH structure, U represents a symbol location used for transmitting UCI, and R represents a symbol location used for transmitting RS.

In one possible implementation, when the number A is 13:

the PUCCH structure set includes one PUCCH structure, and the PUCCH structure included in the PUCCH structure set includes two symbol locations used for transmitting RS and is one of the following PUCCH structures: UURU-UUUUUURUU, UUURUUUUURUUU, URUUUUUUUUURU, RUUUURUUUUUU, RUUUUURUUUUU, UURU-UUUUURUUU, UUUUURRUUUUUU and RUUUUUUUUUUUR; or

the PUCCH structure set includes one PUCCH structure, and the PUCCH structure included in the PUCCH structure set includes three or four symbol locations used for transmitting RS and is one of the following PUCCH structures: UURURUUURURUU, URUURUUURUURU, URURUUUURURU, URUURUURUURUU, URUURUURUURU, UURRUUUURRUU, UUURRUUURRUU, RUURUURUURUU, RUURUUUURUUR, RUUURUURUUUR, RUUUURRUUUUR, URUUURURUUURU, RUUURUURUUURU, UURUUURUUURUU, URUUUURUUURU, RUUUUURUUUUR, UUURUURUURUUU and UURUUUURUURUU; or

the PUCCH structure set includes two PUCCH structures, wherein a first PUCCH structure includes one or two symbol locations used for transmitting RS and is one of the following PUCCH structures: UURUUUUUUURUU, UUURUUUUURUUU, URUUUUUUUUURU, RUUUURUUUTTUU, RUUUUUURUUUUU, UURUUUUUURUUU, UUUUUURRUUUUU, RUUUUUUUUUUUR, RUUUUUUUUUUUU and UUUUUURUUUUUU; and a second PUCCH structure includes three or four symbol locations used for transmitting RS and is one of the following PUCCH structures: UURURUUURURUU, URUURUUURUURU, URURUUUURURU, URUURUURUURUU, URUURUU-RUUURU, UURRUUUURRUU, UUURRUUURRUU, RUURUURUURUU, RUURUUUURUUR, RUUURUU-URUUUR, RUUUURRUUUUR, URUUURURUUURU, RUUURUURUUURU, UURUUURUUURUU, URUUUR-UUUURU, RUUUURUUUUUR, UUURUURUURUUU and UUURUUURUURUU;

wherein in the PUCCH structure, U represents a symbol location used for transmitting UCI, and R represents a symbol location used for transmitting RS.

In one possible implementation, when the number A is 14:

the PUCCH structure set includes one PUCCH structure, and the PUCCH structure included in the PUCCH structure set includes two symbol locations used for transmitting RS and is one of the following PUCCH structures: UURUUUUUUUURUU, UUUURUUUURUUUU, URUUUUUUUUUURU, RUUUUUURUUUUUU, UUURUUUUUURUUU, UUUUUURRUUUUUU and RUUUUUUUUUUUUR; or

the PUCCH structure set includes one PUCCH structure, and the PUCCH structure included in the PUCCH structure set includes three or four symbol locations used for transmitting RS and is one of the following PUCCH structures: URUUURUURUUURU, UURURUUUURURUU, URUURLTUUURUURU, URUURUUURUURUU, URURUUUU-URURU, UURUURUURUURUU, UURRUUUUURRUU, UUURRUUUURRUU, RUURUUURUURUU, RUUR-UUUUUURUUR, RUUURLTUUURUUUR, RUUUUURRUUUUUR, UURUUURUUURUURU, URUUUURLTUUUR-UU, URUUUURUUUUURU, URULTUUURUUUURU, RUUUUURUUUUUUR, RUUUUUURUUUUUR, RUUUUR-UUUUURU, URULTUUURUUUUUR, UUURUUURUURUUU, UUURUURUURUUU, UURUUURUURUUU and UURUUUURUUURUU; or

the PUCCH structure set includes two PUCCH structures, wherein a first PUCCH structure includes one or two symbol locations used for transmitting RS and is one of the following PUCCH structures: UURUUUUUUUURUU, UUUURUUUURUUUU, URUUUUUUUUUURU, RUUUUUURUUtTUtTU, UUURUUUUUURUUU, UUUUUURRU-UUUUU, RUUUUUUUUUUUUR, RUUUUUUUUUUUUUU and UUUUUURUUUUUUU; and a second PUCCH structure includes three or four symbol locations used for transmitting RS and is one of the following PUCCH structures:

R, URUUURUURUUURU, UURURLTUUURURUU, URUURLTUUURUURU, URUUURUUURUURUU, URURUUU-UUURURU, UURUURUURUURUU, UURRUUUUUURRUU, UUURRLJWURRUUU, RUURUUURUURUUU, RU-URUUUUUURUUR, RUUURLTUUURUUUR, RUUUUURRUUUUUR, UURUURUUURUURU, URUUUURUUUU-RUU, URUUUURUUUURU, URUUUURUUUURU, RUUUUURUUUUUR, RUUUUURUUUUUR, RUUUU-RUUUUURU, URUUUURUUUUR, UUURUUURUURUUU, UUURUURUUURUUU, UURUUURUUURUUU and UURUUURUUURUU;

wherein in the PUCCH structure, U represents a symbol location used for transmitting UCI, and R represents a symbol location used for transmitting RS.

Embodiment 7

As shown in Table 1, different UCI and RS patterns are defined for different transmission lengths of the PUCCH, wherein pattern represents a symbol group, for example, pattern 1 can represent a first symbol group, pattern 2 can represent a second symbol group, U represents a symbol location used for transmitting UCI, R represents a symbol location used for transmitting RS, an RS symbol number is the number of symbol locations used for transmitting RS in a PUCCH structure, and "|" represents a specific frequency hopping position when frequency hopping is configured.

Table 1

| Symbol Length of PUCCH | Pattern 1 | Pattern 2 |
|---|---|---|
| 4 | URUU | RU\|RU (Of course, it can also be replaced with, for example, UR\|UR) |
| 5 | UURUU | UR\|URU (Of course, it can also be replaced with, for example, URU\|RU or RU\|URU) |
| 6 | UURUUU | URU\|URU |
| 7 | UUURUUU | URU\|UURU (Of course, it can also be replaced with, for example, URUU\|URU) |
| Only one Pattern | | |
| 8 | URUU\|UURU (Of course, it can also be replaced with, for example, URUU\|URUU) | |
| 9 | URUU\|UURUU (Of course, it can also be replaced with, for example, UURUU\|URUU) | |
| 10 | UURUU\|UURUU (Of course, it can also be replaced with, for example, URUUUUUURU) | |
| | Pattern 1 | Pattern2 |
| 11 | UURUU\|UURUUU (Of course, it can also be replaced with, for example, UURUUU\|UURUU) | URURU\|URUURU (Of course, it can also be replaced with, for example, URURUU\|URURU or URUURU\|RUURU) |
| 12 | UURUUU\|UURUUU (Of course, it can also be replaced with, for example, UURUUU\|UUURUU) | URUURU\|URUURU (Of course, it can also be replaced with, for example, URURUU\|UURURU) |
| 13 | UURUUU\|UUURUUU (Of course, it can also be replaced with, for example, UUURUUU\|UURUUU) | URUURU\|URUUURU ((Of course, it can also be replaced with, for example, URUURUU\|URUURU or URURUTTU\|UURURU) |
| 14 | UUURUUU\|UUURUUU | URUUURU\|URUUURU (Of course, it can also be replaced with, for example, UURUURU\|URUURUU) |

In Table 1, with regard to 4-7 symbol lengths of PUCCH, each symbol length corresponds to two patterns; due to a relatively small RS symbol number, pattern 1 is relatively suitable for a low-speed scene and a scene that frequency hopping in a time slot is not supported; and due to a relatively large RS symbol number, pattern 2 can be suitable for a high-speed scene to provide more accurate channel estimation and can support frequency hopping in a time slot, of course, pattern 2 can also be used if frequency hopping is not configured or used, and one of the patterns can be selected by a base station according to an actual demand and can be informed to a terminal through configuration signaling. For 8-14 symbol lengths of PUCCH, only one pattern is defined for each symbol length, in this case, the specific pattern does not need to be informed, and the corresponding pattern can be determined by the terminal according to the symbol length of the PUCCH. For the PUCCH of which the length is 4-7 symbols, if frequency hopping is configured to be used, the specific pattern may not be informed to the terminal either, and in this case, the terminal is appointed to selected pattern 2.

It should be known that table 1 is only exemplary, in a specific implementation process, for different symbol lengths of the PUCCH (namely the number A of symbols occuplied by the PUCCH), other distribution rules for symbol locations can also be adopted in the patterns.

Embodiment 8

As shown in Table 2, different UCI and RS patterns are defined for different transmission lengths of the PUCCH, wherein pattern represents a symbol group, for example, pattern 1 can represent a first symbol group, pattern 2 can represent a second symbol group, U represents a symbol location used for transmitting UCI, R represents a symbol location used for transmitting RS, an RS symbol number is the number of symbol locations used for transmitting RS in a PUCCH structure, and "|" represents a specific frequency hopping position when frequency hopping is configured.

Table 2

| Symbol Length of PUCCH | Pattern 1 | Pattern 2 |
|---|---|---|
| 4 | URUU | RU\|RU (Of course, it can also be replaced with, for example, UR\|UR) |
| 5 | UURUU | UR\|URU (Of course, it can also be replaced with, for example, URU\|RU or RU\|URU) |
| 6 | UURUUU | URU\|URU |
| 7 | UUURUUU | URU\|UURU (Of course, it can also be replaced with, for example, URUU\|URU) |
| Only one Pattern | | |
| 8 | URUU\|UURU (Of course, it can also be replaced with, for example, URUU\|URUU) | |
| 9 | URUU\|UURUU (Of course, it can also be replaced with, for example, UURUU\|URUU) | |
| 10 | UURUU\|UURUU (Of course, it can also be replaced with, for example, URUUUUUURU) | |
| | Pattern 1 | Pattern2 |
| 11 | UURUU\|UURUUU (Of course, it can also be replaced with, for example, UURUUU\|UURUU) | URURU\|URUURU (Of course, it can also be replaced with, for example, URURUUIURURU or URUURU\|RUURU) |
| 12 | UURUUU\|UURUUU (Of course, it can also be replaced with, for example, UURUUU\|UUURUU) | URUURU\|URUURU (Of course, it can also be replaced with, for example, URURUU\|UURURU) |
| 13 | UURUUU\|UUURUUU (Of course, it can also be replaced with, for example, UUURUUU\|UURUUU) | URUURU\|URUUURU (Of course, it can also be replaced with, for example, URUURUUIURUURU or URURUUU\|UURURU) |
| 14 | UUURUUU\|UUURUUU | URUUURU\|URUUURU (Of course, it can also be replaced with, for example, UURUURU\|URUURUU) |

In Table 2, with regard to 4-7 symbol lengths and 11-14 symbol lengths, each symbol length corresponds to two patterns; due to a relatively small RS symbol number, pattern 1 is relatively suitable for a low-speed scene and a scene that frequency hopping in a time slot is not supported; and due to a relatively large RS symbol number, pattern 2 can be suitable for a high-speed scene to provide more accurate channel estimation and can support frequency hopping in a time slot, of course, pattern 2 can also be used if frequency hopping is not configured or used, and one of the patterns can be selected by a base station according to an actual demand and can be informed to a terminal through configuration signaling. For 8-10 symbol lengths, only one pattern is defined for each symbol length, in this case, the specific pattern does not need to be informed, and the corresponding pattern can be determined by the terminal according to the symbol length of the PUCCH. For the PUCCH of which the length is 4-7 symbols or 11-14 symbols, if frequency hopping is configured to be used, the specific pattern may not be informed to the terminal either, and in this case, the terminal is appointed to selected pattern 2.

It should be known that table 2 is only exemplary, in a specific implementation process, for different symbol lengths of the PUCCH (namely the number A of symbols occupied by the PUCCH), other distribution rules for symbol locations can also be adopted in the patterns.

Embodiment 9

As shown in Table 3, different UCI and RS patterns are defined for different transmission lengths of the PUCCH, wherein pattern represents a symbol group, for example, pattern 1 can represent a first symbol group, pattern 2 can represent a second symbol group, U represents a symbol location used for transmitting UCI, R represents a symbol location used for transmitting RS, an RS symbol number is the number of symbol locations used for transmitting RS in a PUCCH structure, and "|" represents a specific frequency hopping position when frequency hopping is configured.

Table 3

| Symbol Length of PUCCH | Pattern 1 | Pattern 2 |
|---|---|---|
| 4 | URUU | RU\|RU (Of course, it can also be replaced with, for example, UR\|UR) |
| 5 | UURUU | UR\|URU (Of course, it can also be replaced with, for example, URU\|RU or RU\|URU) |
| 6 | UURUUU | URU\|URU |
| 7 | UUURUUU | URU\|UURU (Of course, it can also be replaced with, for example, URUU\|URU) |
| 8 | URUU\|UURU (Of course, it can also be replaced with, for example, URUU\|URUU) | URUR\|URUR (Of course, it can also be replaced with, for example, RUUR\|RUUR) |
| 9 | URUU\|UURUU (Of course, it can also be replaced with, for example, UURUU\|URUU) | URUR\|URURU (Of course, it can also be replaced with, for example, RUUR\|URUUR) |
| 10 | UURUU\|UURUU (Of course, it can also be replaced with, for example, URUUUUURU) | URURU\|URURU |
| 11 | UURTTUIUURUU (Of course, it can also be replaced with, for example, UURUUU\|UURUU) | URURU\|URUURU (Of course, it can also be replaced with, for example, URURUUIURURU or URUURU\|RUURU) |
| 12 | UURUUU\|UURUUU (Of course, it can also be replaced with, for example, UURUUU\|UUURUU) | URUURU\|URUURU (Of course, it can also be replaced with, for example, URURUU\|UURURU) |
| 13 | UURUUU\|UUURUUU (Of course, it can also be replaced with, for example, UUURUUU\|UURUUU) | URUURU\|URUUURU (Of course, it can also be replaced with, for example, URUURUUIURUURU or URURUUU\|UURURU) |
| 14 | UUURUUU\|UUURUUU | URUUURU\|URUUURU (Of course, it can also be replaced with, for example, UURUURU\|URUURTTU) |

In Table 3, two patterns are defined for each transmission length of the PUCCH in 4-14 symbols; due to a relatively small RS symbol number, pattern 1 is relatively suitable for a low-speed scene and a scene that frequency hopping in a time slot is not supported; and due to relatively large RS symbol number, pattern 2 can be suitable for a high-speed scene to provide more accurate channel estimation and can support frequency hopping in a time slot, of course, pattern 2 can also be used if frequency hopping is not configured or used, and one of the patterns can be selected by a base station according to an actual demand and can be informed to a terminal through configuration signaling. If frequency hopping is configured to be used, the specific pattern may not be informed to the terminal either, and in this case, the terminal is appointed to selected pattern 2.

It should be known that Table 3 is only exemplary, in a specific implementation process, for different symbol lengths of the PUCCH (namely the number A of symbols occupied by the PUCCH), other distribution rules for symbol locations can also be adopted in the patterns.

Embodiment 10

As shown in table 4, one UCI and RS pattern is defined for one transmission length of the PUCCH, wherein pattern represents a symbol group, U represents a symbol location used for transmitting UCI, R represents a symbol location used for transmitting RS, an RS symbol number is the number of symbol locations used for transmitting RS in a PUCCH structure, and "|" represents a specific frequency hopping position when frequency hopping is configured.

Table 4

| Configuration Index | Symbol Length of PUCCH | Pattern |
|---|---|---|
| 0 | 4 | RU\|RU (Of course, it can also be replaced with, for example, UR\|UR) |
| 1 | 5 | UR\|URU (Of course, it can also be replaced with, for example, URU\|RU or RU\|URU) |
| 2 | 6 | URU\|URU |
| 3 | 7 | URU\|UURU (Of course, it can also be replaced with, for example, URUU\|URU) |
| 4 | 8 | URUR\|URUR (Of course, it can also be replaced with, for example, RUUR\|RUUR) |
| 5 | 9 | URUR\|URURU (Of course, it can also be replaced with, for example, RUUR\|URUUR) |
| 6 | 10 | URURU\|URURU |
| 7 | 11 | URURU\|URUURU (Of course, it can also be replaced with, for example, URURUUIURURU or URUURU\|RUURU) |
| 8 | 12 | URUURU\|URUURU (Of course, it can also be replaced with, for example, URURUU\|UURURU) |
| 9 | 13 | URUURU\|URUUURU (Of course, it can also be replaced with, for example, URUURUUIURUURU or URURUUU\|UURURU) |
| 10 | 14 | URUUURU\|URUUURU (Of course, it can also be replaced with, for example, UURUURU\|URUURUU) |

In Table 4, one pattern is defined for each transmission length of the PUCCH in 4-14 symbols, due to a relatively large RS symbol number, the pattern can be suitable for a high-speed scene to provide more accurate channel estimation and can support frequency hopping in a time slot, of course, the pattern can also be used if frequency hopping is not configured or used, and the pattern can also support a low-speed scene. Therefore, in this case, a terminal can determine the corresponding pattern according to the number A if only the transmission length A of the PUCCH is obtained. A specific signaling configuration process can be that the terminal is informed of the symbol length of the PUCCH to be transmitted through high level signaling or an indication domain in a PDCCH so that the terminal can determine the corresponding pattern according to the symbol length, or the terminal is informed of a pattern index or serial number through the high level signaling or the indication domain in the PDCCH so that the terminal can determine the corresponding pattern and the corresponding symbol length according to the pattern index or serial number.

One or more technical schemes in the above-mentioned technical schemes have the following technical effects or advantages:

during the implementation of the present application, firstly, the number A of symbols occupied by a PUCCH needing transmission is determined, then, a corresponding PUCCH structure set is determined according to the number A of the symbols, a PUCCH structure corresponding to the PUCCH is determined from the PUCCH structure set, and PUCCH transmission is performed on the basis of the PUCCH structure corresponding to the PUCCH.

The PUCCH structure set corresponds to the number of the symbols, and any one of the PUCCH structures includes symbol locations of which the number is same as that of the symbols, and therefore, the PUCCH transmission method in the embodiment of the present application can meet the demand for the unfixed number of the symbols occupied by the PUCCH and support the PUCCH transmission in the new wireless communication system.

Further, in the embodiment of the present application, by determining a PUCCH structure from the PUCCH structure set after determining the PUCCH structure set, it is guaranteed that the PUCCH transmission can still be normally performed when the number of resource symbols corresponds to multiple PUCCH structures.

Further, the distribution rules for the symbol locations of the different PUCCH structures in the PUCCH structure set and/or the number of the symbol locations used for transmitting RS in different PUCCH structures of the PUCCH structure set are different, and therefore, the PUCCH transmission method in the embodiment of the present application can support different PUCCH transmission demands in scenes such as frequency hopping or not and different movement speeds.

Further, in the embodiment of the present application, for one transmission length of PUCCH, the same PUCCH structure or multiple PUCCH structures with different RS symbol numbers are defined to support the normal transmission of the PUCCH under different transmission demands.

It should be known that Table 3 is only exemplary, in a specific implementation process, for different symbol lengths of the PUCCH (namely the number A of symbols occupied by the PUCCH), other distribution rules for symbol locations can also be adopted in the patterns.

Based on the same technical concept, provided by an embodiment of the present application is a computer storage medium. A computer executable instruction is stored in the computer readable storage medium and is configured for enabling a computer execute the processes of the PUCCH transmission method described in the above-mentioned embodiments.

Although preferred embodiments of the present application have been described, those skilled in the art can make additional alterations and modifications on the embodiments once they know the basic creative concept. The invention is defined by the appended claims.

**Claims**

1. A PUCCH transmission method performed by a user equipment, comprising:

   determining (101), by the user equipment, a quantity A of symbols occupied by a Physical Uplink Control Channel, PUCCH, the quantity A being a positive integer;
   determining (102), by the user equipment, a PUCCH structure set that is defined in correspondence to the quantity A of the symbols, a PUCCH structure comprised in the PUCCH structure set comprising the quantity A of symbol locations, the PUCCH structure set comprising one or multiple PUCCH structures , wherein a PUCCH structure is a distribution rule for symbol locations used for transmitting Uplink Control Information, UCI and symbol locations used for transmitting RS; and
   determining (103), by the user equipment, a PUCCH structure corresponding to the PUCCH from the PUCCH structure set, and performing PUCCH transmission on the basis of the corresponding PUCCH structure;
   **characterized in that**, when the PUCCH structure set comprises multiple PUCCH structures, the quantity of symbol locations used for transmitting Reference Signals, RS, in different PUCCH structures is different;
   wherein the PUCCH structure set comprising one or multiple PUCCH structures comprises:

      option 1: when the value of the quantity A of the symbols is X1 to X2 and X3 to X4, for each quantity A of the symbols within X1 to X2 and X3 to X4, defining at least two PUCCH structures in the PUCCH structure set; when the value of the quantity A of the symbols is X2+1 to X3-1, for each quantity A of the symbols within X2+1 to X3-1, defining one PUCCH structure in the PUCCH structure set; wherein X1, X2, X3 and X4 are positive integers, and X1≤X2≤X3≤X4; or
      option 2: for each quantity A of symbols from 4 to 14, defining at least two PUCCH structures in the PUCCH structure set;
      option 3: for each quantity A of symbols from 4 to 14, defining one PUCCH structure in the PUCCH structure set,
      wherein when the PUCCH structure set comprises multiple PUCCH structures, the determining, by the user equipment, a PUCCH structure corresponding to the PUCCH from the PUCCH structure set comprises:

         selecting, by the user equipment, a PUCCH structure as the corresponding PUCCH structure from the PUCCH structure set according to an acquired configuration instruction; and/or

selecting, by the user equipment, a PUCCH structure with most symbol locations used for transmitting RS as the corresponding PUCCH structure from the PUCCH structure set upon determining that frequency hopping is performed during PUCCH transmission.

2. The method according to claim 1, wherein when the PUCCH structure set comprises one PUCCH structure, the determining, by the user equipment, a PUCCH structure corresponding to the PUCCH from the PUCCH structure set comprises: taking, by the user equipment, the one PUCCH structure comprised in the PUCCH structure set as the corresponding PUCCH structure.

3. The method according to claim 1, wherein when it is determined that frequency hopping is performed during PUCCH transmission, the determining, by the user equipment, a PUCCH structure corresponding to the PUCCH from the PUCCH structure set, and performing, by the user equipment, PUCCH transmission on the basis of the corresponding PUCCH structure, comprise:

respectively transmitting, by the user equipment, information carried in a first symbol group and information carried in a second symbol group at different frequency domain positions by taking first $\left\lfloor \dfrac{A}{2} \right\rfloor$ symbols comprised by the PUCCH as the first symbol group and last ( A- $\left\lfloor \dfrac{A}{2} \right\rfloor$ ) symbols comprised by the PUCCH as the second symbol group; or

respectively transmitting, by the user equipment, information carried in a first symbol group and information carried in a second symbol group at different frequency domain positions by taking first $\left\lceil \dfrac{A}{2} \right\rceil$ symbols comprised by the PUCCH as the first symbol group and last ( A- $\left\lceil \dfrac{A}{2} \right\rceil$ ) symbols comprised by the PUCCH as the second symbol group.

4. The method according to any one of claims 1-3, wherein:

when the quantity A is 4 and when the option 1 or the option 3 is used, one of following schemes 1-2 is selected:

scheme 1: the PUCCH structure set comprises one PUCCH structure, and the PUCCH structure comprised in the PUCCH structure set comprises one symbol location used for transmitting RS and is one of the following PUCCH structures: URUU, UURU and RUUU;

scheme 2: the PUCCH structure set comprises one PUCCH structure, and the PUCCH structure comprised in the PUCCH structure set comprises two symbol locations used for transmitting RS and is one of the following PUCCH structures: URRU, RURU, RUUR and URUR; or

when the quantity is 4 and when the option 1 or the option 2 is used, a following scheme 3 is selected:
scheme 3: the PUCCH structure set comprises two PUCCH structures, wherein a first PUCCH structure comprises one symbol location used for transmitting RS and is one of the following PUCCH structures: URUU, UURU and RUUU; and a second PUCCH structure comprises two symbol locations used for transmitting RS and is one of the following PUCCH structures: URRU, RURU, RUUR and URUR;
and/or
when the quantity A is 5 and when the option 1 or the option 3 is used, one of following schemes 4-5 is selected:

scheme 4: the PUCCH structure set comprises one PUCCH structure, and the PUCCH structure comprised in the PUCCH structure set comprises one symbol location used for transmitting RS and is one of the following PUCCH structures: UURUU, URUUU and RUUUU;
scheme 5: the PUCCH structure set comprises one PUCCH structure, and the PUCCH structure comprised in the PUCCH structure set comprises two symbol locations used for transmitting RS and is one of the following PUCCH structures: URRUU, UURRU, RUURU, RURUU and URURU; or

when the quantity A is 5 and when the option 1 or the option 2 is used, a following scheme 6 is selected:
scheme 6: the PUCCH structure set comprises two PUCCH structures, wherein a first PUCCH structure comprises one symbol location used for transmitting RS and is one of the following PUCCH structures: UURUU, URUUU and RUUUU; and a second PUCCH structure comprises two symbol locations used for transmitting RS and is one of the following PUCCH structures: URRUU, UURRU, RUURU, RURUU and URURU;
and/or
when the quantity A is 6 and when the option 1 or the option 3 is used, one of following schemes 7-8 is selected:

scheme 7: the PUCCH structure set comprises one PUCCH structure, and the PUCCH structure comprised in the PUCCH structure set comprises one symbol location used for transmitting RS and is one of the following PUCCH structures: URUUUU, UURUUU, UUURUU and RUUUUU;
scheme 8: the PUCCH structure set comprises one PUCCH structure, and the PUCCH structure comprised in the PUCCH structure set comprises two symbol locations used for transmitting RS and is one of the following PUCCH structures: URURUU, URUURU, RUUUUR, URUUUR, RUUURU and UURRUU; or

when the quantity A is 6 and when the option 1 or the option 2 is used, a following scheme 9 is selected:
scheme 9: the PUCCH structure set comprises two PUCCH structures, wherein a first PUCCH structure comprises one symbol location used for transmitting RS and is one of the following PUCCH structures: URUUUU, UURUUU, UUURUU and RUUUUU; and a second PUCCH structure comprises two symbol locations used for transmitting RS and is one of the following PUCCH structures: URURUU, URUURU, RUUUUR, URUUUR, RUUURU and UURRUU;
and/or
when the quantity A is 7 and when the option 1 or the option 3 is used, one of following schemes 10-11 is selected:

scheme 10: the PUCCH structure set comprises one PUCCH structure, and the PUCCH structure comprised in the PUCCH structure set comprises one symbol location used for transmitting RS and is one of the following PUCCH structures: URUUUUU, UURUUUU, UUURUUU and RUUUUUU;
scheme 11: the PUCCH structure set comprises one PUCCH structure, and the PUCCH structure comprised in the PUCCH structure set comprises two symbol locations used for transmitting RS and is one of the following PUCCH structures: RUUUUUR, URUUUUR, RUUUURU, URUUURU, URUURUU, UURURUU, UURRUUU and UUURRUU; or

when the quantity A is 7 and when the option 1 or the option 2 is used, a following scheme 12 is selected:
scheme 12: the PUCCH structure set comprises two PUCCH structures, wherein a first PUCCH structure comprises one symbol location used for transmitting RS and is one of the following PUCCH structures: URUUUUU, UURUUUU, UUURUUU and RUUUUUU; and a second PUCCH structure comprises two symbol locations used for transmitting RS and is one of the following PUCCH structures: RUUUUUR, URUUUUR, RUUUURU, URUUURU, URUURUU, UURURUU, UURRUUU and UUURRUU;
and/or
when the quantity A is 8 and when the option 1 or the option 3 is used, one of following schemes 13-14 is selected:

scheme 13: the PUCCH structure set comprises one PUCCH structure, and the PUCCH structure comprised in the PUCCH structure set comprises two symbol locations used for transmitting RS and is one of the following PUCCH structures: URUUUURU, URUUURUU, RUUUUUUR, RUUUUURU, RUUUURUU, RUUURUUU, LTUURRLTUU and UURUURUU;
scheme 14: the PUCCH structure set comprises one PUCCH structure, and the PUCCH structure comprised in the PUCCH structure set comprises three or four symbol locations used for transmitting RS and is one of the following PUCCH structures: URRUURRU, URURURUR, RURURURU, RUURRUUR, RURUURUR, RUURUURU, RUURUUUR, RUUURUUR, URURUURU and URURURUU; or

when the quantity A is 8 and when the option 1 or the option 2 is used, a following scheme 15 is selected:
scheme 15: the PUCCH structure set comprises two PUCCH structures, wherein a first PUCCH structure comprises one or two symbol locations used for transmitting RS and is one of the following PUCCH structures: URUUUURU, URUUURUU, RUUUUUUR, RUUUUURU, RUUUURUU, RUUURUUU, UUURRUUU, UURUURUU, UUURUUUU and RUUUUUUU; and a second PUCCH structure comprises three or four symbol locations used for transmitting RS and is one of the following PUCCH structures: URRUURRU, URURURUR, RURURURU, RURUURUR, RUURRUUR, RUURUURU, RUURUUUR, RUUURUUR, URURUURU and URURURUU; and/or

when the quantity A is 9 and when the option 1 or the option 3 is used, one of following schemes 16-17 is selected:

scheme 16: the PUCCH structure set comprises one PUCCH structure, and the PUCCH structure comprised in the PUCCH structure set comprises two symbol locations used for transmitting RS and is one of the following PUCCH structures: UURUUUURUU, URUUUURUU, URUUUUURU, URUUURUUU, RUUUURUU-UU, RUUUUUUUR, RUUUUURUU, RUUUUUURU, RLTUUURUUU, UURUUUURU, UUUURRUUU and UUURRUUUU;

scheme 17: the PUCCH structure set comprises one PUCCH structure, and the PUCCH structure comprised in the PUCCH structure set comprises three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU; or

when the quantity A is 9 and when the option 1 or the option 2 is used, a following scheme 18 is selected: scheme 18: the PUCCH structure set comprises two PUCCH structures, wherein a first PUCCH structure comprises one or two symbol locations used for transmitting RS and is one of the following PUCCH structures: UURUUUURUU, URUUUURUU, URUUUUURU, URUUURUUU, RUUURUUUU, RUUUUUUUR, RULTUUURUU, RUUUUUURU, RLTUUURUUU, UURUUUURU, UUUURRUUU, UUURRUUUU, RUUUUUUUU and UUUURUUUU; and a second PUCCH structure comprises three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU;

and/or

when the quantity A is 10 and when the option 1 or the option 3 is used, one of following schemes 19-20 is selected:

scheme 19: the PUCCH structure set comprises one PUCCH structure, and the PUCCH structure comprised in the PUCCH structure set comprises two symbol locations used for transmitting RS and is one of the following PUCCH structures: UURUUUURUU, URUUUURUUU, URUUUUURUU, RUUUURUUUU, UUR-UUURUUU, URUUURUUUU, URUUUUURUU, RUUUUUUUUR, RUUUUUURUU, RUUUUURUUU and UUUURRUUUU;

scheme 20: the PUCCH structure set comprises one PUCCH structure, and the PUCCH structure comprised in the PUCCH structure set comprises three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURUUUUR, URUURUURUU and URUUURUUUR;

when the quantity A is 10 and when the option 1 or the option 2 is used, a following scheme 21 is selected: scheme 21: the PUCCH structure set comprises two PUCCH structures, wherein a first PUCCH structure comprises one or two symbol locations used for transmitting RS and is one of the following PUCCH structures: UURUUUURUU, URUUUURUUU, URUUUUUURU, RUUUURUUUU, UURUUURUUU, URUUURUUUU, URUUUUURUU, RUUUUUUUUR, RUUUUUURUU, RUUUUURUUU, UUUURRUUUU, RUUUUUULTUU and UUUURUUUUU; and a second PUCCH structure comprises three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURLTUUUR, URUURUURUU and URUUURUUUR;

and/or

when the quantity A is 11 and when the option 1 or the option 3 is used, one of following schemes 22-23 is selected:

scheme 22: the PUCCH structure set comprises one PUCCH structure, and the PUCCH structure comprised in the PUCCH structure set comprises two symbol locations used for transmitting RS and is one of the following PUCCH structures: UURUUUURUUU, UURUUUUURUU, URUUUURUUUU, URUUUUUURU, RUUUURUUUUU, RUUUUURUUUU, UUURUUURUUU, URUUURUUUU, RUUUUUUUURU, URUUUU-UUUR, URUUUUUURUU, UUUURRUUUUU and RUUUUUUUUUR;

scheme 23: the PUCCH structure set comprises one PUCCH structure, and the PUCCH structure comprised in the PUCCH structure set comprises three or four symbol locations used for transmitting RS and is one of the following PUCCH structures: UURURURURUU, URURUURURUU, URURUURUURU, URURUUURURU, URUURURUURU, URRUUUUURRU, URRUUUURRUU, UURRUUURRUU, RUURUUURUUR, RUUURURUUUR, RUUURRUUUUR, RUUUURRUUUR, URUUURUUURU, RLTUUURLTUUUR, UURUURUURLTU and URUUURUUURU; or

when the quantity A is 11 and when the option 1 or the option 2 is used, a following scheme 24 is selected: scheme 24: the PUCCH structure set comprises two PUCCH structures, wherein a first PUCCH structure comprises one or two symbol locations used for transmitting RS and is one of the following PUCCH structures: UURUUUURUUU, UURUUUUURUU, URUUUURUUU, URUUUUUURU, RUUURUUUU, RUUUURU-UUU, UUURUUURUUU, URUUURUUUU, RUUUUUUURU, URUUUUUUUR, URUUUUURUU, UUUUR-RUUUUU, RUUUUUUUUUR, RUUUUUUUUUU and UUUUURUUUUU; and a second PUCCH structure comprises three or four symbol locations used for transmitting RS and is one of the following PUCCH structures: UURURURURUU, URURUURURUU, URURUURUURU, URURUUURURU, URUURURUURU, URRUUUU-URRU, URRUUURRUU, UURRUUURRUU, RUURUUURUUR, RUUURURUUUR, RUUURRLTUUUR, RUUUURRUUUR, URUUURUUURU, RUUUURUUUUR, UURUURUURUU and URUUURUUURU; and/or

when the quantity A is 12 and when the option 1 or the option 3 is used, one of following schemes 25-26 is selected:

scheme 25: the PUCCH structure set comprises one PUCCH structure, and the PUCCH structure comprised in the PUCCH structure set comprises two symbol locations used for transmitting RS and is one of the following PUCCH structures: UUURUUUURUUU, UURUUUUUURUU, UURUUUURUUU, URUUUUU-UURU, RUUUURUUUUU, UURUUURUUUU, UUUUURRUUUUU and RUUUUUUUUUUR; scheme 26: the PUCCH structure set comprises one PUCCH structure, and the PUCCH structure comprised in the PUCCH structure set comprises three or four symbol locations used for transmitting RS and is one of the following PUCCH structures: UURURUURURUU, URUURUURUURU, URURUUURURUU, URUR-UUUURURU, UURRUUUURRUU, UURRUUURRUU, RUURUUUURUUR, RUUURUURUUUR, RUUU-URRUUUUR, RUUURURUUURU, URUUURUUURUU, URUUURUUURU, URUUUURUUURU, RUUU-URUUUURU, RUUUUURUUUUR, RUUUURUUUUUR, UURUURUUURUU, UURUUURUURUU and UURUURUURUUU; or

when the quantity A is 12 and when the option 1 or the option 2 is used, a following scheme 27 is selected: scheme 27: the PUCCH structure set comprises two PUCCH structures, wherein a first PUCCH structure comprises one or two symbol locations used for transmitting RS and is one of the following PUCCH structures: UUURUUUURUUU, UURUUUUUURUU, UURUUUUURUUU, URUUUUUUUURU, RUUUURUUUUU, UUR-UUUURUUUU, UUUUURRUUUUU, RUUUUUUUUUUR, RUUUUUUUUUUU and UUUUURUUUUUU; and a second PUCCH structure comprises three or four symbol locations used for transmitting RS and is one of the following PUCCH structures: UURURUURURUU, URUURUURUURU, URURUUURURUU, URURUUUURU-RU, UURRUUUURRUU, UURRUUURRUU, RUURUUUURUUR, RUUURUURUUUR, RUUUURRUUUUR, RUUURURUUURU, URUUURUUURUU, URUUURUUURU, URUUUURUUURU, RUUUURUUUURU, RUU-UUURUUUUR, RUUUURUUUUUR, UURUURUUURUU, UURUUURUURUU and UURUURUURUUU; and/or

when the quantity A is 13 and when the option 1 or the option 3 is used, one of following schemes 28-29 is selected:

scheme 28: the PUCCH structure set comprises one PUCCH structure, and the PUCCH structure comprised in the PUCCH structure set comprises two symbol locations used for transmitting RS and is one of the following PUCCH structures: UURUUUUUUURUU, UUURUUUUURUUU, URUUUUUUUUURU, RUUUU-URUUUUU, RUUUUUURUUUUU, UURUUUUURUUU, UUUUURRUUUUUU and RUUUUUUUUUUU-UR; scheme 29: the PUCCH structure set comprises one PUCCH structure, and the PUCCH structure comprised in the PUCCH structure set comprises three or four symbol locations used for transmitting RS and is one of the following PUCCH structures: UURURUURURUU, URUURUUURUURU, URURUUUURURU, UR-UURUURUURUU, URUURUURUUURU, UURRUUUURRUU, UUURRUUURRUU, RUURUURUURU-UU, RUURUUUURUUR, RUUURUURUUUR, RUUUURRUUUUR, URUUURURUUURU, RUUURU-URUUURU, UURUUURUUURUU, URUUUURUUUURU, RUUUUURUUUUUR, UUURUURUURUUU and UURUUUURUURUU; or

when the quantity A is 13 and when the option 1 or the option 2 is used, a following scheme 30 is selected: scheme 30: the PUCCH structure set comprises two PUCCH structures, wherein a first PUCCH structure comprises one or two symbol locations used for transmitting RS and is one of the following PUCCH structures:

UURUUUUUUURUU, UUURUUUURUUU, URUUUUUUUUURU, RUUUUURUUUUUU, RUUUUUURUUU-UU, UURUUUUURUUU, UUUUURRUUUUUU, RUUUUUUUUUUUR, RUUUUUUUUUUUU and UUUUUURUUUUUU; and a second PUCCH structure comprises three or four symbol locations used for transmitting RS and is one of the following PUCCH structures: UURURUUURURUU, URUURUUURUURU, URURUUUUURU-RU, URUURUURUURUU, URUURUURUUURU, UURRUUUURRUU, UUURRUUURRUU, RUURUURUU-RUUU, RUURUUUUURUUR, RUUURUUURUUUR, RUUUURRUUUUUR, URUUUURURUUURU, RUUURUU-RUUURU, UURUUURUUURUU, URLTUUURUUUURU, RUUUURUUUURUUR, UUURUURUURUUU and UU-RUUUURUURUU;

and/or

when the quantity A is 14 and when the option 1 or the option 3 is used, one of following schemes 31-32 is selected:

scheme 31: the PUCCH structure set comprises one PUCCH structure, and the PUCCH structure comprised in the PUCCH structure set comprises two symbol locations used for transmitting RS and is one of the following PUCCH structures: UURUUUUUUUURUU, UUUURUUUURUUUU, URUUUUUUUUUURU, RUUUUUURUUUUUU, UUURUUUUUURUUU, UUUUUURRUUUUUU and RUUUUUUUUUUUUR;

scheme 32: the PUCCH structure set comprises one PUCCH structure, and the PUCCH structure comprised in the PUCCH structure set comprises three or four symbol locations used for transmitting RS and is one of the following PUCCH structures: URUUURUURUUURU, UURURUUUURURUU, URUURLTUUURUU-RU, URUURUUURUURUU, URURUUUUURURU, UURUURUURUURUU, UURRUUUUUURRUU, UU-URRUUUURRUUU, RUURUUURUURUU, RUURUUUUURUUR, RUUURUUUURUUUR, RUUUUURR-UUUUUR, UURUURUUURUURU, URUUUURUUUURUU, URUUUURUUUUURU, URUUUUURUUUU-RU, RUUUUURUUUUUUR, RUUUUUURUUUUUR, RUUUUURUUUUURU, URUUUUURUUUUUR, UU-URUUURUURUUU, UUURUURUUURRUU, UURUUURUUURUUU and UURUUUURUUURUU; or

when the quantity A is 14 and when the option 1 or the option 2 is used, a following scheme 33 is selected:

scheme 33: the PUCCH structure set comprises two PUCCH structures, wherein a first PUCCH structure comprises one or two symbol locations used for transmitting RS and is one of the following PUCCH structures: UURUUUUUUUURUU, UUUURUUUURUUUU, URUUUUUUUUUURU, RUUUUUURUUUUUU, UUURUUUUUURUUU, UUUUUURRUUUUUU, RUUUUUUUUUUUUR, RUUUUUUUUUUUUU and UUUUUURUUUUUUU; and a second PUCCH structure comprises three or four symbol locations used for transmitting RS and is one of the following PUCCH structures: URUUURUURUUURU, UURURUUUURURUU, URUURUUUURUU-RU, URUURUUURUURUU, URURUUUUURURU, UURUURUURUURUU, UURRUUUUUURRUU, UUURR-UUUURRUUU, RUURUUURUURUU, RUURUUUUURUUR, RUUURUUUURUUUR, RUUUUURRUUUU-UR, UURUURUUURUURU, URUUUURUUUURUU, URUUUURUUUUURU, URUUUUURUUUUURU, RUUUU-URUUUUUUR, RUUUUURUUUUUUR, RUUUUURUUUUURU, URUUUUURUUUUUR, UUURUUURUURU-UU, UUURUURUUURUUU, UURUUURUUURUUU and UURUUUURUUURUU;

and

wherein in a PUCCH structure, U represents a symbol location used for transmitting UCI, and R represents a symbol location used for transmitting RS.

5. A PUCCH reception method performed by a device, comprising:

determining (201), by the device, a quantity A of symbols occupied by a Physical Uplink Control Channel, PUCCH, the quantity A being a positive integer;

determining (202), by the device, a PUCCH structure set that is defined in correspondence to the quantity A of the symbols, a PUCCH structure comprised in the PUCCH structure set comprising the quantity A of symbol locations, the PUCCH structure set comprising one or multiple PUCCH structures, wherein a PUCCH structure is a distribution rule for symbol locations used for transmitting Uplink Control Information, UCI, and symbol locations used for transmitting RS; and

determining (203), by the device, a PUCCH structure corresponding to the PUCCH from the PUCCH structure set, and performing PUCCH reception on the basis of the corresponding PUCCH structure,

**characterized in that**, when the PUCCH structure set comprises multiple PUCCH structures, the quantity of symbol locations used for transmitting Reference Signals, RS, in different PUCCH structures is different;

wherein the PUCCH structure set comprising one or multiple PUCCH structures comprises:

option 1: when the value of the quantity A of the symbols is X1 to X2 and X3 to X4, for each quantity A of the symbols within X1 to X2 and X3 to X4, defining at least two PUCCH structures in the PUCCH structure set; when the value of the quantity A of the symbols is X2+1 to X3-1, for each quantity A of the symbols within X2+1 to X3-1, defining one PUCCH structure in the PUCCH structure set; wherein X1, X2, X3 and X4 are positive integers, and X1≤X2≤X3≤X4; or

option 2: for each quantity A of symbols from 4 to 14, defining at least two PUCCH structures in the PUCCH structure set, or

option 3: for each quantity A of symbols from 4 to 14, defining one PUCCH structure in the PUCCH structure set,

when the PUCCH structure set comprises multiple PUCCH structures, the determining, by the device, a PUCCH structure corresponding to the PUCCH from the PUCCH structure set comprises:

> selecting, by the device, a PUCCH structure as the corresponding PUCCH structure from the PUCCH structure set, and informing, by the device, a selection result to a user equipment through a configuration instruction; and/or
>
> selecting, by the device, a PUCCH structure with most symbol locations used for transmitting RS as the corresponding PUCCH structure from the PUCCH structure set upon determining that frequency hopping is performed during PUCCH transmission, and informing, by the device, the user equipment of a demand for frequency hopping through a configuration instruction.

6. The method according to claim 5, wherein when the PUCCH structure set comprises one PUCCH structure, the determining, by the device, a PUCCH structure corresponding to the PUCCH from the PUCCH structure set comprises: taking, by the device, the one PUCCH structure comprised in the PUCCH structure set as the corresponding PUCCH structure.

7. The method according to claim 5, wherein when it is determined that frequency hopping is performed during PUCCH transmission, the determining, by the device, a PUCCH structure corresponding to the PUCCH from the PUCCH structure set, and performing, by the device, PUCCH reception on the basis of the corresponding PUCCH structure, comprise:

> respectively receiving, by the device, information carried in a first symbol group and information carried in a second symbol group at different frequency domain positions by taking first $\left\lfloor \dfrac{A}{2} \right\rfloor$ symbols comprised by the PUCCH as the first symbol group and last $\left( A - \left\lfloor \dfrac{A}{2} \right\rfloor \right)$ symbols comprised by the PUCCH as the second symbol group; or
>
> respectively receiving, by the device, information carried in a first symbol group and information carried in a second symbol group at different frequency domain positions by taking first $\left\lceil \dfrac{A}{2} \right\rceil$ symbols comprised by the PUCCH as the first symbol group and last $\left( A - \left\lceil \dfrac{A}{2} \right\rceil \right)$ symbols comprised by the PUCCH as the second symbol group.

8. The method according to any one of claims 5-7, wherein:

> when the quantity A is 4 and when the option 1 or the option 3 is used, one of following schemes 1-2 is selected:
>
> > scheme 1: the PUCCH structure set comprises one PUCCH structure, and the PUCCH structure comprised in the PUCCH structure set comprises one symbol location used for transmitting RS and is one of the following PUCCH structures: URUU, UURU and RUUU;
> >
> > scheme 2: the PUCCH structure set comprises one PUCCH structure, and the PUCCH structure comprised in the PUCCH structure set comprises two symbol locations used for transmitting RS and is one of the following PUCCH structures: URRU, RURU, RUUR and URUR; or

when the quantity is 4 and when the option 1 or the option 2 is used, a following scheme 3 is selected:
scheme 3: the PUCCH structure set comprises two PUCCH structures, wherein a first PUCCH structure comprises one symbol location used for transmitting RS and is one of the following PUCCH structures: URUU, UURU and RUUU; and a second PUCCH structure comprises two symbol locations used for transmitting RS and is one of the following PUCCH structures: URRU, RURU, RUUR and URUR;
and/or
when the quantity A is 5 and when the option 1 or the option 3 is used, one of following schemes 4-5 is selected:

scheme 4: the PUCCH structure set comprises one PUCCH structure, and the PUCCH structure comprised in the PUCCH structure set comprises one symbol location used for transmitting RS and is one of the following PUCCH structures: UURUU, URUUU and RUUUU;

scheme 5: the PUCCH structure set comprises one PUCCH structure, and the PUCCH structure comprised in the PUCCH structure set comprises two symbol locations used for transmitting RS and is one of the following PUCCH structures: URRUU, UURRU, RUURU, RURUU and URURU; or

when the quantity A is 5 and when the option 1 or the option 2 is used, a following scheme 6 is selected:
scheme 6: the PUCCH structure set comprises two PUCCH structures, wherein a first PUCCH structure comprises one symbol location used for transmitting RS and is one of the following PUCCH structures: UURUU, URUUU and RUUUU; and a second PUCCH structure comprises two symbol locations used for transmitting RS and is one of the following PUCCH structures: URRUU, UURRU, RUURU, RURUU and URURU;
and/or
when the quantity A is 6 and when the option 1 or the option 3 is used, one of following schemes 7-8 is selected:

scheme 7: the PUCCH structure set comprises one PUCCH structure, and the PUCCH structure comprised in the PUCCH structure set comprises one symbol location used for transmitting RS and is one of the following PUCCH structures: URUUUU, UURUUU, UUURUU and RUUUUU;

scheme 8: the PUCCH structure set comprises one PUCCH structure, and the PUCCH structure comprised in the PUCCH structure set comprises two symbol locations used for transmitting RS and is one of the following PUCCH structures: URURUU, URUURU, RUUUUR, URUUUR, RUUURU and UURRUU; or

when the quantity A is 6 and when the option 1 or the option 2 is used, a following scheme 9 is selected:
scheme 9: the PUCCH structure set comprises two PUCCH structures, wherein a first PUCCH structure comprises one symbol location used for transmitting RS and is one of the following PUCCH structures: URUUUU, UURUUU, UUURUU and RUUUUU; and a second PUCCH structure comprises two symbol locations used for transmitting RS and is one of the following PUCCH structures: URURUU, URUURU, RUUUUR, URUUUR, RUUURU and UURRUU;
and/or
when the quantity A is 7 and when the option 1 or the option 3 is used, one of following schemes 10-11 is selected:

scheme 10: the PUCCH structure set comprises one PUCCH structure, and the PUCCH structure comprised in the PUCCH structure set comprises one symbol location used for transmitting RS and is one of the following PUCCH structures: URUUUUU, UURUUUU, UUURUUU and RUUUUUU;

scheme 11: the PUCCH structure set comprises one PUCCH structure, and the PUCCH structure comprised in the PUCCH structure set comprises two symbol locations used for transmitting RS and is one of the following PUCCH structures: RUUUUUR, URUUUUR, RUUUURU, URUUURU, URUURUU, UURURUU, UURRUUU and UUURRUU; or

when the quantity A is 7 and when the option 1 or the option 2 is used, a following scheme 12 is selected:
scheme 12: the PUCCH structure set comprises two PUCCH structures, wherein a first PUCCH structure comprises one symbol location used for transmitting RS and is one of the following PUCCH structures: URUUUUU, UURUUUU, UUURUUU and RUUUUUU; and a second PUCCH structure comprises two symbol locations used for transmitting RS and is one of the following PUCCH structures: RUUUUUR, URUUUUR, RUUUURU, URUUURU, URUURUU, UURURUU, UURRUUU and UUURRUU;
and/or
when the quantity A is 8 and when the option 1 or the option 3 is used, one of following schemes 13-14 is selected:

scheme 13: the PUCCH structure set comprises one PUCCH structure, and the PUCCH structure comprised in the PUCCH structure set comprises two symbol locations used for transmitting RS and is one of the following PUCCH structures: URUUUURU, URUUURUU, RUUUUUUR, RUUUUURU, RUUUURUU, RUUURUUU, UUURRUUU and UURUURUU;

scheme 14: the PUCCH structure set comprises one PUCCH structure, and the PUCCH structure comprised in the PUCCH structure set comprises three or four symbol locations used for transmitting RS and is one of the following PUCCH structures: URRUURRU, URURURUR, RURURURU, RUURRUUR, RURUURUR, RUURUURU, RUURUUUR, RUUURUUR, URURUURU and URURURUU; or

when the quantity A is 8 and when the option 1 or the option 2 is used, a following scheme 15 is selected:
scheme 15: the PUCCH structure set comprises two PUCCH structures, wherein a first PUCCH structure comprises one or two symbol locations used for transmitting RS and is one of the following PUCCH structures: URUUUURU, URUUURUU, RUUUUUUR, RUUUUURU, RUUUURUU, RUUURUUU, UUURRUUU, UURUURUU, UUURUUUU and RUUUUUUU; and a second PUCCH structure comprises three or four symbol locations used for transmitting RS and is one of the following PUCCH structures: URRUURRU, URURURUR, RURURURU, RURUURUR, RUURRUUR, RUURUURU, RUURUUUR, RUUURUUR, URURUURU and URURURUU; and/or

when the quantity A is 9 and when the option 1 or the option 3 is used, one of following schemes 16-17 is selected:

scheme 16: the PUCCH structure set comprises one PUCCH structure, and the PUCCH structure comprised in the PUCCH structure set comprises two symbol locations used for transmitting RS and is one of the following PUCCH structures: UURUUURUU, URUUUURUU, URUUUUURU, URUUURUUU, RUUURUUUU, RUUUUUUUR, RUUUUURUU, RUUUUUURU, RUUUURUUU, UURUUUURU, UUUURRUUU and UUUURRUUUU;

scheme 17: the PUCCH structure set comprises one PUCCH structure, and the PUCCH structure comprised in the PUCCH structure set comprises three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU; or

when the quantity A is 9 and when the option 1 or the option 2 is used, a following scheme 18 is selected:
scheme 18: the PUCCH structure set comprises two PUCCH structures, wherein a first PUCCH structure comprises one or two symbol locations used for transmitting RS and is one of the following PUCCH structures: UURUUURUU, URUUUURUU, URUUUUURU, URUUURUUU, RUUURUUUU, RUUUUUUUR, RUUUUURUU, RUUUUUURU, RUUUURUUU, UURUUUURU, UUUURRUUU, UUURRUUUU, RUUUUUUUU and UUUURUUUU; and a second PUCCH structure comprises three or four symbol locations used for transmitting RS and is one of the following PUCCH structures: URURURURU, URRUURRUU, URRUUURRU, RUURRUURU, RUURRUUUR, RUUURRUUR, RUURURUUR, RURUURUUR, URURURUUR, RUUURUUUR, URUURUURU and URUUURURU;
and/or

when the quantity A is 10 and when the option 1 or the option 3 is used, one of following schemes 19-20 is selected:

scheme 19: the PUCCH structure set comprises one PUCCH structure, and the PUCCH structure comprised in the PUCCH structure set comprises two symbol locations used for transmitting RS and is one of the following PUCCH structures: UURUUUURUU, URUUUURUUU, URUUUUUURU, RUUUURUUUU, UUR-UUUURUUU, URUUURUUUU, URUUUUURUU, RUUUUUUUUR, RUUUUUURUU, RUUUUURUUU and UUUURRUUUU;

scheme 20: the PUCCH structure set comprises one PUCCH structure, and the PUCCH structure comprised in the PUCCH structure set comprises three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURUUUUR, URUURUURUU and URUUURUUUR; or

when the quantity A is 10 and when the option 1 or the option 2 is used, a following scheme 21 is selected:
scheme 21: the PUCCH structure set comprises two PUCCH structures, wherein a first PUCCH structure comprises one or two symbol locations used for transmitting RS and is one of the following PUCCH structures: UURUUUURUU, URUUUURUUU, URUUUUUURU, RUUUURUUUU, UURUUUURUUU, URUUURUUUU, UR-UUUUURUU, RUUUUUUUUR, RUUUUUURUU, RUUUUURUUU, UUUURRUUUU, RUUUUUUUUU and UUUURUUUUU; and a second PUCCH structure comprises three or four symbol locations used for transmitting RS and is one of the following PUCCH structures: URURURURUU, URURUURURU, URUURRUURU, URRUUUURRU, UURRUURRUU, RUURUURUUR, RUUURRUUUR, URURURUURU, RUUURUUURU, RUUURUUUUR, URUURUURUU and URUUURUUUR;
and/or
when the quantity A is 11 and when the option 1 or the option 3 is used, one of following schemes 22-23 is selected:

scheme 22: the PUCCH structure set comprises one PUCCH structure, and the PUCCH structure comprised in the PUCCH structure set comprises two symbol locations used for transmitting RS and is one of the following PUCCH structures: UURUUUURUUU, UURUUUUURUU, URUUUUURUUU, URUUUUUUURU, RUUUURUUUUU, RUUUUURUUUU, UUURUUURUUU, URUUURUUUU, RUUUUUUUURU, URUUUUUUUUR, URUUUUUURUU, UUUURRUUUUU and RUUUUUUUUUR;
scheme 23: the PUCCH structure set comprises one PUCCH structure, and the PUCCH structure comprised in the PUCCH structure set comprises three or four symbol locations used for transmitting RS and is one of the following PUCCH structures: UURURURURUU, URURUURURUU, URURUURUURU, URURUUURURU, URUURURUURU, URRUUUUURRU, URRUUUURRUU, UURRUUURRUU, RUURUUURUUR, RUUUURURUUUR, RUUURRUUUR, RUUUURRUUUR, URUUURUUURU, RUUUURUUUR, UURUURUURUU and URUUURUUURU; or

when the quantity A is 11 and when the option 1 or the option 2 is used, a following scheme 24 is selected:
scheme 24: the PUCCH structure set comprises two PUCCH structures, wherein a first PUCCH structure comprises one or two symbol locations used for transmitting RS and is one of the following PUCCH structures: UURUUUURUUU, UURUUUUURUU, URUUUUURUUU, URUUUUUUURU, RUUUURUUUUU, RUUUUURUUU, UUURUUURUUU, URUUURUUUU, RUUUUUUUURU, URUUUUUUUR, URUUUUUURUU, UUUURRUUUUU, RUUUUUUUUUR, RUUUUUUUUUU and UUUUURUUUUU; and a second PUCCH structure comprises three or four symbol locations used for transmitting RS and is one of the following PUCCH structures: UURURURURUU, URURUURURUU, URURUURUURU, URURUUURURU, URUURURUURU, URRUUUUURRU, URRUUUURRUU, UURRUUURRUU, RUURUUURUUR, RUUURURUUUR, RUUURRUUUR, RUUUURRUUUR, URUUURUUURU, RUUUURUUUR, UURUURUURUU and URUUURUUURU;
and/or
when the quantity A is 12 and when the option 1 or the option 3 is used, one of following schemes 25-26 is selected:

scheme 25: the PUCCH structure set comprises one PUCCH structure, and the PUCCH structure comprised in the PUCCH structure set comprises two symbol locations used for transmitting RS and is one of the following PUCCH structures: UUURUUUURUUU, UURUUUUUURUU, UURUUUUURUUU, URUUUUUUURU, RUUUUURUUUUU, UURUUURUUUU, UUUUURRUUUUU and RUUUUUUUUUR;
scheme 26: the PUCCH structure set comprises one PUCCH structure, and the PUCCH structure comprised in the PUCCH structure set comprises three or four symbol locations used for transmitting RS and is one of the following PUCCH structures: UURURUURURUU, URUURUURUURU, URURUUURURUU, URURUUUURURU, UUURRUUUURRUU, UURRUUURRUU, RUURUUUURUUR, RUUURUURUUUR, RUUUURRUUUUR, RUUURURUUURU, URUUURUUURUU, URUUURUUUURU, URUUURUUUURU, RUUUURUUUURU, RUUUUURUUUUR, RUUUURUUUUUR, UURUURUUURUU, UURUUURUURUU and UURUURUURUUU; or

when the quantity A is 12 and when the option 1 or the option 2 is used, a following scheme 27 is selected:
scheme 27: the PUCCH structure set comprises two PUCCH structures, wherein a first PUCCH structure comprises one or two symbol locations used for transmitting RS and is one of the following PUCCH structures: UUURUUUURUUU, UURUUUUUURUU, UURUUUUURUUU, URUUUUUUURU, RUUUUURUUUUU, UURUUURUUUU, UUUUURRUUUUU, RUUUUUUUUUUR, RUUUUUUUUUUU and UUUUURUUUUUU; and a second PUCCH structure comprises three or four symbol locations used for transmitting RS and is one of the following PUCCH structures: UURURUURURUU, URUURUURUURU, URURUUURURUU, URURUUUURURU, UUURRUUUURRUU, UURRUUURRUU, RUURUUUURUUR, RUUURUURUUUR, RUUUURRUUUUR, RUUURURUUURU, URUUURUUURUU, URUUURUUUURU, URUUURUUUURU, RUUUURUUUURU, RUUUUURUUUUR, RUUUURUUUUUR, UURUURUUURUU, UURUUURUURUU and UURUURUURUUU;
and/or
when the quantity A is 13 and when the option 1 or the option 3 is used, one of following schemes 28-29 is selected:

scheme 28: the PUCCH structure set comprises one PUCCH structure, and the PUCCH structure comprised in the PUCCH structure set comprises two symbol locations used for transmitting RS and is one of the following PUCCH structures: UURUUUUUUURUU, UUURUUUUURUUU, URUUUUUUUURU, RUUUU-

URUUUUUU, RUUUUURUUUUU, UURUUUUUURUUU, UUUUURRUUUUUU and RUUUUUUUUUU-UR;

scheme 29: the PUCCH structure set comprises one PUCCH structure, and the PUCCH structure comprised in the PUCCH structure set comprises three or four symbol locations used for transmitting RS and is one of the following PUCCH structures: UURURUUURURUU, URUURUUURUURU, URURUUUURURU, URUURUURUURUU, URUURUURUUURU, UURRUUUUURRUU, UUURRUUURRUUU, RUURUURUURUU, RUURUUUURUUR, RUUURUUURUUUR, RUUUURRUUUUUR, URUUURURUUURU, RUUURUURUUURU, UURUUURUUURUU, URUUURUUUURU, RUUUUURUUUUUR, UUURUURUURUUU and UURUUUURUURUU; or

when the quantity A is 13 and when the option 1 or the option 2 is used, a following scheme 30 is selected:

scheme 30: the PUCCH structure set comprises two PUCCH structures, wherein a first PUCCH structure comprises one or two symbol locations used for transmitting RS and is one of the following PUCCH structures: UURUUUUUUURUU, UUURUUUUURUUU, URUUUUUUUUURU, RUUUUURUUUUUU, RUUUUUURUUUUU, UURUUUUUURUUU, UUUUURRUUUUUU, RUUUUUUUUUUUR, RUUUUUUUUUUUU and UUUUUURUUUUUU; and a second PUCCH structure comprises three or four symbol locations used for transmitting RS and is one of the following PUCCH structures: UURURUUURURUU, URUURUUURUURU, URURUUUURURU, URUURUURUURUU, URUURUURUUURU, UURRUUUUURRUU, UUURRUUURRUUU, RUURUURUURUU, RUURUUUURUUR, RUUURUUURUUUR, RUUUURRUUUUUR, URUUURURUUURU, RUUURUURUUURU, UURUUURUUURUU, URUUURUUUURU, RUUUUURUUUUUR, UUURUURUURUUU and UURUUUURUURUU;

and/or

when the quantity A is 14 and when the option 1 or the option 3 is used, one of following schemes 31-32 is selected:

scheme 31: the PUCCH structure set comprises one PUCCH structure, and the PUCCH structure comprised in the PUCCH structure set comprises two symbol locations used for transmitting RS and is one of the following PUCCH structures: UURUUUUUUUURUU, UUUURUUUURUUUU, URUUUUUUUUUURU, RUUUUUURUUUUUU, UUURUUUUUURUUU, UUUUUURRUUUUUU and RUUUUUUUUUUUUR;

scheme 32: the PUCCH structure set comprises one PUCCH structure, and the PUCCH structure comprised in the PUCCH structure set comprises three or four symbol locations used for transmitting RS and is one of the following PUCCH structures: URUUURUURUUURU, UURURUUUURURUU, URUURUUUURUURU, URUURUUURUURUU, URURUUUUURURU, UURUURUURUURUU, UURRUUUUUURRUU, UURRUUUURRUUU, RUURUURUURUUU, RUURUUUUURUUR, RUUURUUUURUUUR, RUUUURRUUUUUUR, UURUURUUURUURU, URUUURUUUURUU, URUUURUUUUURU, URUUUURUUUURU, RUUUURUUUUUUR, RUUUUURUUUUUUR, RUUUUURUUUUURU, URUUUURUUUUUUR, UURUUURUURUUU, UUURUURUUURUUU, UURUUURUUURUUU and UURUUUURUUURUU; or

when the quantity A is 14 and when the option 1 or the option 2 is used, a following scheme 33 is selected:

scheme 33: the PUCCH structure set comprises two PUCCH structures, wherein a first PUCCH structure comprises one or two symbol locations used for transmitting RS and is one of the following PUCCH structures: UURUUUUUUUURUU, UUUURUUUURUUUU, URUUUUUUUUUURU, RUUUUUURUUUUUU, UUURUUUUUURUUU, UUUUUURRUUUUUU, RUUUUUUUUUUUUR, RUUUUUUUUUUUUU and UUUUUURUUUUUUU; and a second PUCCH structure comprises three or four symbol locations used for transmitting RS and is one of the following PUCCH structures: R, URUUURUURUUURU, UURURUUUURURUU, URUURUUUURUURU, URUURUUURUURUU, URURUUUUURURU, UURUURUURUURUU, UURRUUUUUURRUU, UUURRUUUURRUUU, RUURUURUURUUU, RUURUUUUURUUR, RUUURUUUURUUUR, RUUUURRUUUUUUR, UURUURUUURUURU, URUUURUUUURUU, URUUURUUUUURU, URUUUURUUUURU, RUUUURUUUUUUR, RUUUUURUUUUUUR, RUUUUURUUUUURU, URUUUURUUUUUUR, UUURUURUUURUUU, UUURUURUUURUUU, UURUUUURUUURUUU and UURUUUURUUURUU;

and

wherein in a PUCCH structure, U represents a symbol location used for transmitting UCI, and R represents a symbol location used for transmitting RS.

9. A user equipment comprising means for carrying out the method of any one of claims 1 to 4.

10. A device comprising means for carrying out the method of any one of claims 5 to 8.

11. A computer-readable storage medium comprising instructions which, when executed by a computer, cause the computer to carry out the method of any one of the claims 1 to 4 or the method of any one of claims 5 to 8.

**Patentansprüche**

1.  PUCCH-Übertragungsverfahren, das von einem Benutzergerät durchgeführt wird, Folgendes umfassend:

    Bestimmen (101), durch das Benutzergerät, einer Menge A von Symbolen, die von einem physikalischen Uplink-Steuerkanal (Physical Uplink Control Channel, PUCCH) belegt sind, wobei die Menge A eine positive Ganzzahl ist;
    Bestimmen (102), durch das Benutzergerät, eines PUCCH-Struktursatzes, der entsprechend der Menge A der Symbole definiert ist, wobei eine PUCCH-Struktur, die in dem PUCCH-Struktursatz enthalten ist, die Menge A der Symbolorte umfasst, wobei der PUCCH-Struktursatz eine oder mehrere PUCCH-Strukturen umfasst, wobei eine PUCCH-Struktur eine Verteilungsregel für Symbolorte ist, die zum Übertragen von Uplink-Steuerinformationen (UCI) verwendet werden, und Symbolorte, die zum Übertragen von Referenzsignalen (RS) verwendet werden; und
    Bestimmen (103), durch das Benutzergerät, einer PUCCH-Struktur, die dem PUCCH entspricht, aus dem PUCCH-Struktursatz, und Durchführen einer PUCCH-Übertragung auf der Grundlage der entsprechenden PUCCH-Struktur;
    **dadurch gekennzeichnet, dass**, wenn der PUCCH-Struktursatz mehrere PUCCH-Strukturen umfasst, die Anzahl der Symbolorte, die für die Übertragung von Referenzsignalen (RS) in verschiedenen PUCCH-Strukturen verwendet werden, unterschiedlich ist;
    wobei der PUCCH-Struktursatz, der eine oder mehrere PUCCH-Strukturen umfasst, Folgendes umfasst:

    Option 1:

    wenn der Wert der Menge A der Symbole X1 bis X2 und X3 bis X4 beträgt, für jede Menge A der Symbole innerhalb von X1 bis X2 und X3 bis X4, Definieren von mindestens zwei PUCCH-Strukturen im PUCCH-Struktursatz;
    wenn der Wert der Menge A der Symbole X2+1 bis X3-1 beträgt, für jede Menge A der Symbole innerhalb von X2+1 bis X3-1, Definieren einer PUCCH-Struktur in dem PUCCH-Struktursatz;
    wobei X1, X2, X3 und X4 positive Ganzzahlen sind, und $X1 \leq X2 < X3 \leq X4$: oder

    Option 2:
    für jede Menge A von Symbolen von 4 bis 14, Definieren von mindestens zwei PUCCH-Strukturen im PUCCH-Struktursatz;
    Option 3:

    für jede Menge A von Symbolen von 4 bis 14, Definieren einer PUCCH-Struktur im PUCCH-Struktursatz, wobei, wenn der PUCCH-Struktursatz mehrere PUCCH-Strukturen umfasst, das Bestimmen, durch das Benutzergerät, einer PUCCH-Struktur, die dem PUCCH aus dem PUCCH-Struktursatz entspricht, Folgendes umfasst:

    Auswählen, durch das Benutzergerät, einer PUCCH-Struktur als die entsprechende PUCCH-Struktur aus dem PUCCH-Struktursatz gemäß einer erworbenen Konfigurationsanweisung; und/oder Auswählen, durch das Benutzergerät, einer PUCCH-Struktur mit den meisten Symbolorten, die für die Übertragung von RS verwendet werden, als entsprechende PUCCH-Struktur aus dem PUCCH-Struktursatz, wenn festgestellt wird, dass während der PUCCH-Übertragung ein Frequenzsprung durchgeführt wird.

2.  Verfahren nach Anspruch 1,
    wobei, wenn der PUCCH-Struktursatz eine PUCCH-Struktur umfasst, das Bestimmen, durch das Benutzergerät, einer PUCCH-Struktur, die dem PUCCH entspricht, aus dem PUCCH-Struktursatz Folgendes umfasst:
    Übernehmen, durch das Benutzergerät, der einen PUCCH-Struktur aus dem PUCCH-Struktursatz als entsprechende PUCCH-Struktur.

3.  Verfahren nach Anspruch 1,
    wobei, wenn festgestellt wird, dass während der PUCCH-Übertragung ein Frequenzsprung durchgeführt wird, das Bestimmen, durch das Benutzergerät, einer PUCCH-Struktur, die dem PUCCH entspricht, aus dem PUCCH-Struktursatz und das Durchführen, durch das Benutzergerät, einer PUCCH-Übertragung auf der Grundlage der entsprechenden PUCCH-Struktur Folgendes umfasst:

Übertragen, durch das Benutzergerät, von Informationen, die in einer ersten Symbolgruppe enthalten sind, bzw. von Informationen, die in einer zweiten Symbolgruppe enthalten sind, an unterschiedlichen Frequenzbereichpositionen, indem erste $\left\lceil \dfrac{A}{2} \right\rceil$ Symbole, die im PUCCH enthalten sind, als die erste Symbolgruppe, und letzte $\left( A - \left\lceil \dfrac{A}{2} \right\rceil \right)$ Symbole, die im PUCCH enthalten sind, als die zweite Symbolgruppe genommen werden; oder Übertragen, durch das Benutzergerät, von Informationen, die in einer ersten Symbolgruppe enthalten sind, bzw. von Informationen, die in einer zweiten Symbolgruppe enthalten sind, an unterschiedlichen Positionen im Frequenzbereich, indem erste $\left\lceil \dfrac{A}{2} \right\rceil$ Symbole, die im PUCCH enthalten sind, als die erste Symbolgruppe, und letzte $\left( A - \left\lceil \dfrac{A}{2} \right\rceil \right)$ Symbole, die im PUCCH enthalten sind, als die zweite Symbolgruppe genommen werden.

4. Verfahren nach einem der Ansprüche 1-3, wobei:

wenn die Menge A gleich 4 ist, und wenn die Option 1 oder die Option 3 verwendet wird, eines der folgenden Schemata 1-2 gewählt wird:

Schema 1:
Der PUCCH-Struktursatz umfasst eine PUCCH-Struktur, und die im PUCCH-Struktursatz enthaltene PUCCH-Struktur umfasst einen Symbolort, der für die Übertragung von RS verwendet wird, und ist eine der folgenden PUCCH-Strukturen:
URUU, UURU und RUUU;
Schema 2:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
URRU, RURU, RUUR und URUR; oder

wenn die Menge A gleich 4 ist, und wenn die Option 1 oder die Option 2 verwendet wird, das folgende Schema 3 gewählt wird:

Schema 3:

Der PUCCH-Struktursatz umfasst zwei PUCCH-Strukturen, wobei
eine erste PUCCH-Struktur einen Symbolort umfasst, der für die Übertragung von RS verwendet wird, und eine der folgenden PUCCH-Strukturen ist:

URUU, UURU und RUUU; und
eine zweite PUCCH-Struktur zwei Symbolorte umfasst, die für die Übertragung von RS verwendet werden, und eine der folgenden PUCCH-Strukturen ist:
URRU, RURU, RUUR und URUR;
und/oder

wenn die Menge A gleich 5 ist, und wenn die Option 1 oder die Option 3 verwendet wird, eines der folgenden Schemata 4-5 gewählt wird:

Schema 4:
Der PUCCH-Struktursatz umfasst eine PUCCH-Struktur, und die im PUCCH-Struktursatz enthaltene PUCCH-Struktur umfasst einen Symbolort, der für die Übertragung von RS verwendet wird, und ist eine der folgenden PUCCH-Strukturen:

UURUU, URUUU und RUUUU;
Schema 5:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
URRUU, UURRU, RUURU, RURUU und URURU; oder

wenn die Menge A gleich 5 ist, und wenn die Option 1 oder die Option 2 verwendet wird, das folgende Schema 6 gewählt wird:

Schema 6:

Der PUCCH-Struktursatz umfasst zwei PUCCH-Strukturen, wobei
eine erste PUCCH-Struktur einen Symbolort umfasst, der für die Übertragung von RS verwendet wird, und eine der folgenden PUCCH-Strukturen ist:

UURUU, URUUU und RUUUU; und
eine zweite PUCCH-Struktur zwei Symbolorte umfasst, die für die Übertragung von RS verwendet werden, und eine der folgenden PUCCH-Strukturen ist:
URRUU, UURRU, RUURU, RURUU und URURU;
und/oder

wenn die Menge A gleich 6 ist, und wenn die Option 1 oder die Option 3 verwendet wird, eines der folgenden Schemata 7-8 gewählt wird:

Schema 7:
Der PUCCH-Struktursatz umfasst eine PUCCH-Struktur, und die im PUCCH-Struktursatz enthaltene PUCCH-Struktur umfasst einen Symbolort, der für die Übertragung von RS verwendet wird, und ist eine der folgenden PUCCH-Strukturen:
URUUUU, UURUUU, UUURUU und RUUUUU;
Schema 8:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
URURUU, URUURU, RUUUUR, URUUUR, RUUURU und UURRUU; oder

wenn die Menge A gleich 6 ist, und wenn die Option 1 oder die Option 2 verwendet wird, das folgende Schema 9 gewählt wird:

Schema 9:

Der PUCCH-Struktursatz umfasst zwei PUCCH-Strukturen, wobei
eine erste PUCCH-Struktur einen Symbolort umfasst, der für die Übertragung von RS verwendet wird, und eine der folgenden PUCCH-Strukturen ist:

URUUUU, UURUUU, UUURUU und RUUUUU; und
eine zweite PUCCH-Struktur zwei Symbolorte umfasst, die für die Übertragung von RS verwendet werden, und eine der folgenden PUCCH-Strukturen ist:

URURUU, URUURU, RUUUUR, URUUUR, RUUURU und UURRUU; und/oder

wenn die Menge A gleich 7 ist, und wenn die Option 1 oder die Option 3 verwendet wird, eines der folgenden Schemata 10-11 gewählt wird:

Schema 10:
Der PUCCH-Struktursatz umfasst eine PUCCH-Struktur, und die im PUCCH-Struktursatz enthaltene PUCCH-Struktur umfasst einen Symbolort, der für die Übertragung von RS verwendet wird, und ist eine der folgenden PUCCH-Strukturen:

URUUUUU, UURUUUU, UUURUUU und RUUUUUU;
Schema 11:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
RUUUUUR, URUUUUR, RUUUURU, URUUURU, URUURUU, UURURUU, UURRUUU und UUURRUU; oder

wenn die Menge A gleich 7 ist, und wenn die Option 1 oder die Option 2 verwendet wird, das folgende Schema 12 gewählt wird:

Schema 12:

Der PUCCH-Struktursatz umfasst zwei PUCCH-Strukturen, wobei
eine erste PUCCH-Struktur einen Symbolort umfasst, der für die Übertragung von RS verwendet wird, und eine der folgenden PUCCH-Strukturen ist:

URUUUUU, UURUUUU, UUURUUU und RUUUUUU; und
eine zweite PUCCH-Struktur zwei Symbolorte umfasst, die für die Übertragung von RS verwendet werden, und eine der folgenden PUCCH-Strukturen ist:
RUUUUUR, URUUUUR, RUUUURU, URUUURU, URUURUU, UURURUU, UURRUUU und UUURRUU;
und/oder

wenn die Menge A gleich 8 ist, und wenn die Option 1 oder die Option 3 verwendet wird, eines der folgenden Schemata 13-14 gewählt wird:

Schema 13:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
URUUUURU, URUUURUU, RUUUUUUR, RUUUUURU, RUUUURUU, RUUURUUU, UUURRUUU und UURUURUU;
Schema 14:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
URRUURRU, URURURUR, RURURURU, RUURRUUR, RURUURUR, RUURUURU, RUURUUUR, RUUURUUR, URURUURU und URURURUU; oder

wenn die Menge A gleich 8 ist, und wenn die Option 1 oder die Option 2 verwendet wird, das folgende Schema 15 gewählt wird:

Schema 15:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

URUUUURU, URUUURUU, RUUUUUUR, RUUUUURU, RUUUURUU, RUUURUUU, UUURRU-UU, UURUURUUU, UUURUUUU und RUUUUUUU; und
eine zweite PUCCH-Struktur drei oder vier Symbolorte umfasst, die für die Übertragung von RS verwendet werden, und eine der folgenden PUCCH-Strukturen ist:
URRUURRU, URURURUR, RURURURU, RURUURUR, RUURRUUR, RUURUURU, RUURUUUR, RUUURUUR, URURUURU und URURURUU;
und/oder

wenn die Menge A gleich 9 ist, und wenn die Option 1 oder die Option 3 verwendet wird, eines der folgenden Schemata 16-17 gewählt wird:

Schema 16:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
UURUUURUU, URUUUUURU, URUUUURU, URUUURUUU, RUUURUUU, RUUUUUUR, RUUUU-RUU, RUUUUUURU, RUUUUURUU, UURUUUURU, UUUURRUUU und UUURRUUUU;
Schema 17:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
URURURURU, URRUURRUU, URRUUURRU, RUURRUURU, RUURRUUUR, RUUURRUUR, RUURURUUR, RURUURUUR, URURURUUR, RUUURUUUR, URUURUURU und URUUURURU; oder

wenn die Menge A gleich 9 ist, und wenn die Option 1 oder die Option 2 verwendet wird, das folgende Schema 18 gewählt wird:

Schema 18:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

UURUUURUU, URUUUUURU, URUUUUURU, URUUURUU, RUUURUUU, RUUUUUUR, RU-UUUURUU, RUUUUUURU, RUUUUURUU, UURUUURU, UUUURRUUU, UUURRUUUU, RUUUUUUUU und UUUURUUUU; und
eine zweite PUCCH-Struktur drei oder vier Symbolorte umfasst, die für die Übertragung von RS verwendet werden, und eine der folgenden PUCCH-Strukturen ist:
URURURURU, URRUURRUU, URRUUURRU, RUURRUURU, RUURRUUUR, RUUURRUUR, RUURURUUR, RURUURUUR, URURURUUR, RUUURUUUR, URUURUURU und URUUURURU;
und/oder

wenn die Menge A gleich 10 ist, und wenn die Option 1 oder die Option 3 verwendet wird, eines der folgenden Schemata 19-20 gewählt wird:

Schema 19:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
UURUUUUURU, URUUUUURUU, URUUUUUURU, RUUUURUUU, UURUUURUUU, URUUUUUUU, RU-UUUUURUU, RUUUUUUUUU, RUUUUUURUUU und UUUURRUUUU;
Schema 20:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
URURURURUU, URURUURU, URUURRUURU, URRUUUURRU, UURRUURRUU, RUURUURUUR, RUUURRUUUR, URURUURU, RUUURUUURU, RUUURUUUUR, URUURUURUUU und URUUURUUUR;

wenn die Menge A gleich 10 ist, und wenn die Option 1 oder die Option 2 verwendet wird, das folgende Schema 21 gewählt wird:

Schema 21:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

UURUUUURUU, URUUUURUUU, URUUUUUURU, RUUUURUUUU, UURUUURUUU, URUUU-RUUUU, URUUUUURUU, RUUUUUUUUR, RUUUUURUU, RUUUUURUUU, UUUURRUUUU, RUUUUUUUUU und UUUURUUUUU; und

eine zweite PUCCH-Struktur drei oder vier Symbolorte umfasst, die für die Übertragung von RS verwendet werden, und eine der folgenden PUCCH-Strukturen ist:

URURURURUU, URURUURU, URUURRUURU, URRUUUURRU, UURRUURRUU, RUURUU-RUUR, RUUURRUUUR, URURUURU, RUUURUUURU, RUUURUUUR, URUURUURUUU und URUUURUUUR;

und/oder

wenn die Menge A gleich 11 ist, und wenn die Option 1 oder die Option 3 verwendet wird, eines der folgenden Schemata 22-23 gewählt wird:

Schema 22:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
UURUUUURUUU, UURUUUUURUU, URUUUURUUU, URUUUUUURU, RUUUURUUUU, RU-UUUURUUUU, UUURUUURUUU, URUURUUUU, RUUUUUUUUURU, URUUUUUUUUR, URU-UUUUURUU, UUUURRUUUUU und RUUUUUUUUR;
Schema 23:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
UURURURURUU, URURUURURUU, URURUURUURU, URURUUURURU, URUURURUURU, URRUUUUURRU, URRUUUURRUU, UURRUUURRUU, RUURUUURUUR, RUUURURUUUR, RUUURRU-UUUR, RUUUURRUUUR, URUURUUURU, RUUUURUUUR, UURUURUURUU und URUUURUUU-RU; oder

wenn die Menge A gleich 11 ist, und wenn die Option 1 oder die Option 2 verwendet wird, das folgende Schema 24 gewählt wird:

Schema 24:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

UURUUUURUUU, UURUUUUURUU, URUUUURUUU, URUUUUUURU, RUUUURUUUU, RUUUUURUUUU, UUURUUURUUU, URUURUUUU, RUUUUUUUURU, URUUUUUURU, URUUUUUURUU, UUUURRUUUU, RUUUUUUUUR, RUUUUUUUUUU und UUUUURU-UUUU; und
eine zweite PUCCH-Struktur drei oder vier Symbolorte umfasst, die für die Übertragung von RS verwendet werden, und eine der folgenden PUCCH-Strukturen ist:
UUURURURURUU, URURUURURUU, URURUURUURU, URURUUURURU, URUURURUURU, URRUUUUURRU, URRUUUURRUU, UURRUUURRUU, RUURUUURUUR, RUUURURUUUR, RUUURRUUUUR, RUUUURRUUUR, URUURUUURU, RUUUURUUUR, UURUURUURUU und URUUURUUURU;
und/oder

wenn die Menge A gleich 12 ist, und wenn die Option 1 oder die Option 3 verwendet wird, eines der folgenden Schemata 25-26 gewählt wird:

Schema 25:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
UUURUUUURUUU, UURUUUUUURUU, UURUUUUURUUU, URUUUUUUUURU, RUUUURUUUUU,

UURUUURUUUU, UUUUURRUUUUU und RUUUUUUUUUUR;
Schema 26:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
UURURUUURURUU, URUURUUURUURU, URURUUURURUU, URURUUUURURU, UURRUUUURRUU, UURRUUURRUUUU, RUURUUUURUUR, RUUUURUURUUUR, RUUUURRUUUUR, RUUUURURUUURU, URUUURUUURUU, URUUURUUUURU, URUUURUUUURU, RUUUURUUUURU, RUUUURUUUUR, RUUUURUUUUUR, UURUURUUURUU, UURUUURUURUU und UURUURUURUUU; oder

wenn die Menge A gleich 12 ist, und wenn die Option 1 oder die Option 2 verwendet wird, das folgende Schema 27 gewählt wird:

Schema 27:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

UUURUUUURUUU, UURUUUUUURUU, UURUUUURUUU, URUUUUUUUURU, RUUUUURU-UUUU, UURUUURUUUU, UUUUURRUUUUU, RUUUUUUUUUUR, RUUUUUUUUUUU und UUUUURUUUUUU; und
eine zweite PUCCH-Struktur drei oder vier Symbolorte umfasst, die für die Übertragung von RS verwendet werden, und eine der folgenden PUCCH-Strukturen ist:
UURURUUURURUU, URUURUURUURU, URURUUURURUU, URURUUUURURU, UURRU-UUURRUU, UURRUUURRUUUU, RUURUUUURUUR, RUUUURUURUUUR, RUUUURRUUUUR, RUUUURURUUURU, URUUURUUURUU, URUUURUUUURU, URUUURUUUURU, RUUUURU-UUURU, RUUUURUUUUR, RUUUURUUUUR, UURUURUUURUU, UURUUURUURUU und UURUURUURUUU;
und/oder

wenn die Menge A gleich 13 ist, und wenn die Option 1 oder die Option 3 verwendet wird, eines der folgenden Schemata 28-29 gewählt wird:

Schema 28:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
UURUUUUUURUU, UUURUUUUURUUU, URUUUUUUUURU, RUUUUURUUUUUU, RUUUUUURU-UUUU, UURUUUUURUUU, UUUUURRUUUUUU und RUUUUUUUUUUUR;
Schema 29:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
UURURUUURURUU, URUURUUURUURU, URURUUUURURU, URUURUURUURUU, URUURUURU-UURU, UURRUUUURRUU, UUURRUUURRUUUU, RUURUURUURUUU, RUURUUUURUUR, RUUU-RUUURUUUR, RUUUURRUUUUUR, URUUURURUUURU, RUUURUURUUURU, UURUUURUURUU, URUUUURUUUURU, RUUUUURUUUUR, UUURUURUURUUU und UURUUUURUURUU; oder

wenn die Menge A gleich 13 ist, und wenn die Option 1 oder die Option 2 verwendet wird, das folgende Schema 30 gewählt wird:

Schema 30:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

UURUUUUUUURUU, UUURUUUUURUUU, URUUUUUUUUURU, RUUUUURUUUUUU, RU-UUUUUURUUUUU, UURUUUUURUUUU, UUUUUURRUUUUUU, RUUUUUUUUUUUR, RU-UUUUUUUUUUUU und UUUUUURUUUUUU; und

eine zweite PUCCH-Struktur drei oder vier Symbolorte umfasst, die für die Übertragung von RS verwendet werden, und eine der folgenden PUCCH-Strukturen ist:

UURURUUURURUU, URUURUUURUURU, URURUUUURURU, URUURUURUURUU, URU-URUUURUUURU, UURRUUUUURRUU, UUURRUUURRUUU, RUURUURUURUU, RUURU-UUUURUUR, RUUURUUURUUUR, RUUURRUUUUUR, URUUURURUUURU, RUUURUUR-UURU, UURUUURUUURUU, URUUUURUUUURU, RUUUUURUUUUUR, UUURUURUURUUU und UURUUUURUURUU;

und/oder

wenn die Menge A gleich 14 ist, und wenn die Option 1 oder die Option 3 verwendet wird, eines der folgenden Schemata 31-32 gewählt wird:

Schema 31:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
UURUUUUUUURUU, UUUURUUUURUUUU, URUUUUUUUUURU, RUUUUUURUUUUUU, UUURU-UUUUURUUU, UUUUUURRUUUUUU, und RUUUUUUUUUUUR;
Schema 32:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
URUUURUURUUURU, UURURUUUURURUU, URUURUUURUURU, URUURUURUURUU, URURU-UUUUURURU, UURUURUURUURUU, UURRUUUUUURRUU, UUURRUUUURRUUU, RUURUURUU-RUUU, RUURUUUUURUUR, RUUURUUURUUUR, RUUUUURRUUUUUR, UURUURUURUURUU, URUUUURUUUURUU, URUUUURUUUURU, URUUUUURUUUURU, RUUUUURUUUUUR, RU-UUUUURUUUUUR, RUUUUURUUUUURU, URUUUUURUUUUUR, UUURUURUURUUU, UUURUU-RUUURUUU, UURUUURUUURUUU und UURUUUURUUURUU; oder

wenn die Menge A gleich 14 ist, und wenn die Option 1 oder die Option 2 verwendet wird, das folgende Schema 33 gewählt wird:

Schema 33:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

UURUUUUUUURUU, UUUURUUUURUUUU, URUUUUUUUUURU, RUUUUUURUUUUUU, UUURUUUUUURUUU, UUUUUURRUUUUUU, RUUUUUUUUUUUR, RUUUUUUUUUUUUU und UUUUUURUUUUUUU; und
eine zweite PUCCH-Struktur drei oder vier Symbolorte umfasst, die für die Übertragung von RS verwendet werden, und eine der folgenden PUCCH-Strukturen ist:
URUUURUURUUURU, UURURUUUURURUU, URUURUUURUURU, URUURUUURUURUU, URURUUUUUURURU, UURUURUURUURUU, UURRUUUUUURRUU, UUURRUUUURRUUU, RUURUUURUURUUU, RUURUUUUURUUR, RUUURUUURUUUR, RUUUUURRUUUUUR, UURUURUURUURU, URUUUURUUUURUU, URUUUURUUUURU, URUUUUURUUUURU, RUUUUURUUUUUR, RUUUUURUUUUURU, RUUUUURUUUUURU, URUUUUURUUUUUR, UUURUURUURUUU, UUURUURUUURUUU, UURUUURUURUUU und UURUUUURUUU-RUU;
und
wobei in einer PUCCH-Struktur U einen Symbolort darstellt, der zur Übertragung von UCI verwendet wird, und R einen Symbolort darstellt, der zur Übertragung von RS verwendet wird.

5. PUCCH-Empfangsverfahren, das von einem Gerät durchgeführt wird, Folgendes umfassend:

Bestimmen (201), durch das Gerät, einer Menge A von Symbolen, die von einem physikalischen Uplink-Steuerkanal (Physical Uplink Control Channel, PUCCH) belegt sind, wobei die Menge A eine positive Ganzzahl ist;
Bestimmen (202), durch das Gerät, eines PUCCH-Struktursatzes, der in Übereinstimmung mit der Menge A der Symbole definiert ist, wobei eine PUCCH-Struktur, die in dem PUCCH-Struktursatz enthalten ist, die Menge A der Symbolorte umfasst, wobei der PUCCH-Struktursatz eine oder mehrere PUCCH-Strukturen umfasst, wobei eine PUCCH-Struktur eine Verteilungsregel für Symbolorte ist, die zur Übertragung von Uplink-Steuerinformationen (UCI) verwendet werden, und Symbolorte, die zur Übertragung von RS verwendet werden; und
Bestimmen (203), durch das Gerät, einer dem PUCCH entsprechenden PUCCH-Struktur aus dem PUCCH-Struktursatz und Durchführen des PUCCH-Empfangs auf der Grundlage der entsprechenden PUCCH-Struktur;
**dadurch gekennzeichnet, dass**, wenn der PUCCH-Struktursatz mehrere PUCCH-Strukturen umfasst, die Anzahl der Symbolorte, die für die Übertragung von Referenzsignalen (RS) in verschiedenen PUCCH-Strukturen verwendet werden, unterschiedlich ist;
wobei der PUCCH-Struktursatz, der eine oder mehrere PUCCH-Strukturen umfasst, Folgendes umfasst:

Option 1:

wenn der Wert der Menge A der Symbole X1 bis X2 und X3 bis X4 beträgt, für jede Menge A der Symbole innerhalb von X1 bis X2 und X3 bis X4, Definieren von mindestens zwei PUCCH-Strukturen im PUCCH-Struktursatz;
wenn der Wert der Menge A der Symbole X2+1 bis X3-1 beträgt, für jede Menge A der Symbole innerhalb von X2+1 bis X3-1, Definieren einer PUCCH-Struktur in dem PUCCH-Struktursatz;
wobei X1, X2, X3 und X4 positive Ganzzahlen sind, und $X1 \leq X2 < X3 \leq X4$; oder

Option 2:
für jede Menge A von Symbolen von 4 bis 14, Definieren von mindestens zwei PUCCH-Strukturen im PUCCH-Struktursatz, oder
Option 3:

für jede Menge A von Symbolen von 4 bis 14, Definieren einer PUCCH-Struktur im PUCCH-Struktursatz, wobei, wenn der PUCCH-Struktursatz mehrere PUCCH-Strukturen umfasst, das Bestimmen, durch das Gerät, einer PUCCH-Struktur, die dem PUCCH aus dem PUCCH-Struktursatz entspricht, Folgendes umfasst:

Auswählen, durch das Gerät, einer PUCCH-Struktur als die entsprechende PUCCH-Struktur aus dem PUCCH-Struktursatz, und Informieren, durch das Gerät, eines Auswahlergebnisses an ein Benutzergerät mittels einer Konfigurationsanweisung; und/oder
Auswählen, durch das Gerät, einer PUCCH-Struktur mit den meisten Symbolorten, die für die Übertragung von RS verwendet werden, als die entsprechende PUCCH-Struktur aus dem PUCCH-Struktursatz, wenn festgestellt wird, dass während der PUCCH-Übertragung Frequenzsprünge durchgeführt werden, und Informieren, durch das Gerät, des Benutzergeräts über eine Anforderung für Frequenzsprünge mittels einer Konfigurationsanweisung.

6. Verfahren nach Anspruch 5,
wobei, wenn der PUCCH-Struktursatz eine PUCCH-Struktur umfasst, das Bestimmen, durch das Gerät, einer PUCCH-Struktur, die dem PUCCH entspricht, aus dem PUCCH-Struktursatz Folgendes umfasst:
Übernehmen, durch das Gerät, der einen PUCCH-Struktur aus dem PUCCH-Struktursatz als entsprechende PUCCH-Struktur.

7. Verfahren nach Anspruch 5,
wobei, wenn festgestellt wird, dass während der PUCCH-Übertragung ein Frequenzsprung durchgeführt wird, das Bestimmen, durch das Gerät, einer dem PUCCH entsprechenden PUCCH-Struktur aus dem PUCCH-Struktursatz und das Durchführen, durch das Gerät, des PUCCH-Empfangs auf der Grundlage der entsprechenden PUCCH-Struktur Folgendes umfassen:

Empfangen, durch das Gerät, von Informationen, die in einer ersten Symbolgruppe enthalten sind, bzw. von Informationen, die in einer zweiten Symbolgruppe enthalten sind, an unterschiedlichen Frequenzbereichspo-

sitionen, indem erste $\left\lceil\dfrac{A}{2}\right\rceil$ Symbole, die im PUCCH enthalten sind, als die erste Symbolgruppe und letzte

$\left(\mathrm{A}-\left\lceil\dfrac{A}{2}\right\rceil\right)$ Symbole, die im PUCCH enthalten sind, als die zweite Symbolgruppe genommen werden; oder

Empfangen, durch das Gerät, von Informationen, die in einer ersten Symbolgruppe enthalten sind, bzw. von Informationen, die in einer zweiten Symbolgruppe enthalten sind, an unterschiedlichen Frequenzbereichposi-

tionen, indem erste $\left\lceil\dfrac{A}{2}\right\rceil$ Symbole, die im PUCCH enthalten sind, als die erste Symbolgruppe und letzte

$\left(\mathrm{A}-\left\lceil\dfrac{A}{2}\right\rceil\right)$ Symbole, die im PUCCH enthalten sind, als die zweite Symbolgruppe genommen werden.

8. Verfahren nach einem der Ansprüche 5-7, wobei:

wenn die Menge A gleich 4 ist, und wenn die Option 1 oder die Option 3 verwendet wird, eines der folgenden Schemata 1-2 gewählt wird:

Schema 1:
Der PUCCH-Struktursatz umfasst eine PUCCH-Struktur, und die im PUCCH-Struktursatz enthaltene PUCCH-Struktur umfasst einen Symbolort, der für die Übertragung von RS verwendet wird, und ist eine der folgenden PUCCH-Strukturen:
URUU, UURU und RUUU;
Schema 2:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
URRU, RURU, RUUR und URUR; oder

wenn die Menge A gleich 4 ist, und wenn die Option 1 oder die Option 2 verwendet wird, das folgende Schema 3 gewählt wird:

Schema 3:

Der PUCCH-Struktursatz umfasst zwei PUCCH-Strukturen, wobei
eine erste PUCCH-Struktur einen Symbolort umfasst, der für die Übertragung von RS verwendet wird, und eine der folgenden PUCCH-Strukturen ist:

URUU, UURU und RUUU; und
eine zweite PUCCH-Struktur zwei Symbolorte umfasst, die für die Übertragung von RS verwendet werden, und eine der folgenden PUCCH-Strukturen ist:
URRU, RURU, RUUR und URUR;
und/oder

wenn die Menge A gleich 5 ist, und wenn die Option 1 oder die Option 3 verwendet wird, eines der folgenden Schemata 4-5 gewählt wird:

Schema 4:
Der PUCCH-Struktursatz umfasst eine PUCCH-Struktur, und die im PUCCH-Struktursatz enthaltene PUCCH-Struktur umfasst einen Symbolort, der für die Übertragung von RS verwendet wird, und ist eine der folgenden PUCCH-Strukturen:
UURUU, URUUU und RUUUU;
Schema 5:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
URRUU, UURRU, RUURU, RURUU und URURU; oder

wenn die Menge A gleich 5 ist, und wenn die Option 1 oder die Option 2 verwendet wird, das folgende Schema 6 gewählt wird:

Schema 6:

Der PUCCH-Struktursatz umfasst zwei PUCCH-Strukturen, wobei
eine erste PUCCH-Struktur einen Symbolort umfasst, der für die Übertragung von RS verwendet wird, und eine der folgenden PUCCH-Strukturen ist:

UURUU, URUUU und RUUUU; und
eine zweite PUCCH-Struktur zwei Symbolorte umfasst, die für die Übertragung von RS verwendet werden, und eine der folgenden PUCCH-Strukturen ist:
URRUU, UURRU, RUURU, RURUU und URURU;
und/oder

wenn die Menge A gleich 6 ist, und wenn die Option 1 oder die Option 3 verwendet wird, eines der folgenden Schemata 7-8 gewählt wird:

Schema 7:
Der PUCCH-Struktursatz umfasst eine PUCCH-Struktur, und die im PUCCH-Struktursatz enthaltene PUCCH-Struktur umfasst einen Symbolort, der für die Übertragung von RS verwendet wird, und ist eine der folgenden PUCCH-Strukturen:
URUUUU, UURUUU, UUURUU und RUUUUU;
Schema 8:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:

URURUU, URUURU, RUUUUR, URUUUR, RUUURU und UURRUU; oder
wenn die Menge A gleich 6 ist, und wenn die Option 1 oder die Option 2 verwendet wird, das folgende Schema 9 gewählt wird:

Schema 9:

Der PUCCH-Struktursatz umfasst zwei PUCCH-Strukturen, wobei
eine erste PUCCH-Struktur einen Symbolort umfasst, der für die Übertragung von RS verwendet wird, und eine der folgenden PUCCH-Strukturen ist:

URUUUU, UURUUU, UUURUU und RUUUUU; und
eine zweite PUCCH-Struktur zwei Symbolorte umfasst, die für die Übertragung von RS verwendet werden, und eine der folgenden PUCCH-Strukturen ist:
URURUU, URUURU, RUUUUR, URUUUR, RUUURU und UURRUU;
und/oder

wenn die Menge A gleich 7 ist, und wenn die Option 1 oder die Option 3 verwendet wird, eines der folgenden Schemata 10-11 gewählt wird:

Schema 10:
Der PUCCH-Struktursatz umfasst eine PUCCH-Struktur, und die im PUCCH-Struktursatz enthaltene PUCCH-Struktur umfasst einen Symbolort, der für die Übertragung von RS verwendet wird, und ist eine der folgenden PUCCH-Strukturen:
URUUUUU, UURUUUU, UUURUUU und RUUUUUU;
Schema 11:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
RUUUUUR, URUUUUR, RUUUURU, URUUURU, URUURUU, UURURUU, UURRUUU und UUURRUU; oder

wenn die Menge A gleich 7 ist, und wenn die Option 1 oder die Option 2 verwendet wird, das folgende Schema 12 gewählt wird:

Schema 12:

Der PUCCH-Struktursatz umfasst zwei PUCCH-Strukturen, wobei
eine erste PUCCH-Struktur einen Symbolort umfasst, der für die Übertragung von RS verwendet wird, und eine der folgenden PUCCH-Strukturen ist:

URUUUUU, UURUUUU, UUURUUU und RUUUUUU; und
eine zweite PUCCH-Struktur zwei Symbolorte umfasst, die für die Übertragung von RS verwendet werden, und eine der folgenden PUCCH-Strukturen ist:
RUUUUUR, URUUUUR, RUUUURU, URUUURU, URUURUU, UURURUU, UURRUUU und UUURRUU;
und/oder

wenn die Menge A gleich 8 ist, und wenn die Option 1 oder die Option 3 verwendet wird, eines der folgenden Schemata 13-14 gewählt wird:

Schema 13:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
URUUUURU, URUUURUU, RUUUUUUR, RUUUUURU, RUUUURUU, RUUURUUU, UUURRUUU und UURUURUU;
Schema 14:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
URRUURRU, URURURUR, RURURURU, RUURRUUR, RURUURUR, RUURUURU, RUURUUUR, RUUURUUR, URURUURU und URURURUU; oder

wenn die Menge A gleich 8 ist, und wenn die Option 1 oder die Option 2 verwendet wird, das folgende Schema 15 gewählt wird:

Schema 15:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

URUUUURU, URUUURUU, RUUUUUUR, RUUUUURU, RUUUURUU, RUUURUUU, UUURRUUU, UURUURUUU, UUURUUU und RUUUUUUU; und
eine zweite PUCCH-Struktur drei oder vier Symbolorte umfasst, die für die Übertragung von RS verwendet werden, und eine der folgenden PUCCH-Strukturen ist:
URRUURRU, URURURUR, RURURURU, RURUURUR, RUURRUUR, RUURUURU, RUURUUUR, RUUURUUR, URURUURU und URURURUU;
und/oder

wenn die Menge A gleich 9 ist, und wenn die Option 1 oder die Option 3 verwendet wird, eines der folgenden Schemata 16-17 gewählt wird:

Schema 16:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
UURUUURUU, URUUUUURU, URUUUURU, URUURUUU, RUUURUUU, RUUUUUUR, RUUUU-RUU, RUUUUUURU, RUUUUURUU, UURUUURU, UUUURRUUU und UUURRUUUU;

Schema 17:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
URURURURU, URRUURRUU, URRUUURRU, RUURRUURU, RUURRUUUR, RUUURRUUR, RUURURUUR, RURUURUUR, URURURUUR, RUUURUUUR, URUURUURU und URUUURURU; oder

wenn die Menge A gleich 9 ist, und wenn die Option 1 oder die Option 2 verwendet wird, das folgende Schema 18 gewählt wird:

Schema 18:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

UUURUUURUU, URUUUURUU, URUUUUURU, URUUURUUU, RUUURUUUU, RUUUUUUUR, RUUUUURUU, RUUUUUURU, RUUUURUUU, UURUUUURU, UUUURRUUU, UUURRUUUU, RUUUUUUUU und UUUURUUUU; und
eine zweite PUCCH-Struktur drei oder vier Symbolorte umfasst, die für die Übertragung von RS verwendet werden, und eine der folgenden PUCCH-Strukturen ist:
URURURURU, URRUURRUU, URRUUURRU, RUURRUURU, RUURRUUUR, RUUURRUUR, RUURURUUR, RURUURUUR, URURURUUR, RUUURUUUR, URUURUURU und URUUURURU;
und/oder

wenn die Menge A gleich 10 ist, und wenn die Option 1 oder die Option 3 verwendet wird, eines der folgenden Schemata 19-20 gewählt wird:

Schema 19:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
UURUUUUURU, URUUUUURUU, URUUUUUURU, RUUUURUUU, UURUUURUUU, URUUUUUUU, RUUUUUUURUU, RUUUUUUUUU, RUUUUUURUUU und UUUURRUUUU;
Schema 20:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
URURURURUU, URURUURURU, URUURRUURU, URRUUUURRU, UURRUURRUU, RUURUURUUR, RUUURRUUUR, URURURUURU, RUUURUUURU, RUUURUUUUR, URUURUURUU und URUUURUUUR; oder

wenn die Menge A gleich 10 ist, und wenn die Option 1 oder die Option 2 verwendet wird, das folgende Schema 21 gewählt wird:

Schema 21:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

UURUUUURUU, URUUUURUUU, URUUUUUURU, RUUUURUUUU, UURUUURUUU, URUUURUUUU, URUUUUURUU, RUUUUUUUUR, RUUUUUURUU, RUUUUURUUU, UUUURRUUUU, RUUUUUUUUU und UUUURUUUUU; und
eine zweite PUCCH-Struktur drei oder vier Symbolorte umfasst, die für die Übertragung von RS verwendet werden, und eine der folgenden PUCCH-Strukturen ist:
URURURURUU, URURUURU, URUURRUURU, URRUUUURRU, UURRUURRUU, RUURUU

RUUR, RUUURRUUUR, URURUURU, RUUURUUURU, RUUURUUUR, URUURUURUUU und URUUURUUUR;
und/oder

wenn die Menge A gleich 11 ist, und wenn die Option 1 oder die Option 3 verwendet wird, eines der folgenden Schemata 22-23 gewählt wird:

Schema 22:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
UURUUUURUUU, UURUUUUURUU, URUUUUURUUU, URUUUUUUURU, RUUUURUUUUU, RUUUUURUUUU, UUURUUURUUU, URUUURUUUU, RUUUUUUUURU, URUUUUUUUUR, URU-UUUUURUU, UUUURRUUUUU und RUUUUUUUUR;
Schema 23:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
UURURURURUU, URURUURURUU, URURUURUURU, URURUUURURU, URUURURUURU, URRUUUUURRU, URRUUUURRUU, UURRUUURRUU, RUURUUURUUR, RUUURURUUUR, RUUURRUUUUR, RUUUURRUUUR, URUUURUUURU, RUUUURUUUUR, UURUURUURUU und URUUURUUURU; oder

wenn die Menge A gleich 11 ist, und wenn die Option 1 oder die Option 2 verwendet wird, das folgende Schema 24 gewählt wird:

Schema 24:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

UURUUUURUUU, UURUUUUURUU, URUUUUURUUU, URUUUUUUURU, RUUUURUUUUU, RUUUUURUUUU, UUURUUURUUU, URUUURUUUU, RUUUUUUUURU, URUUUUUUUUR, URUUUUUURUU, UUUURRUUUUU, RUUUUUUUUUR, RUUUUUUUUUU und UUUUURUUUUU; und
eine zweite PUCCH-Struktur drei oder vier Symbolorte umfasst, die für die Übertragung von RS verwendet werden, und eine der folgenden PUCCH-Strukturen ist:
UUURURURURUU, URURUURURUU, URURUURUURU, URURUUURURU, URUURURUURU, URRUUUUURRU, URRUUUURRUU, UURRUUURRUU, RUURUUURUUR, RUUURURUUUR, RUUURRUUUUR, RUUUURRUUUR, URUUURUUURU, RUUUURUUUUR, UURUURUURUU und URUUURUUURU; und/oder

wenn die Menge A gleich 12 ist, und wenn die Option 1 oder die Option 3 verwendet wird, eines der folgenden Schemata 25-26 gewählt wird:

Schema 25:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
UUURUUUURUUU, UURUUUUURUU, UURUUUURUUU, URUUUUUUURU, RUUUURUUUUU, UURUUURUUUU, UUUURRUUUUU und RUUUUUUUUUR;
Schema 26:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
UURURUURURUU, URUURUURUURU, URURUUURURUU, URURUUURURU, UURRUUUURRUU, UURRUUURRUUU, RUURUUUURUUR, RUUUURUURUUUR, RUUUURRUUUUR, RUUURURUUURU,

URUUURUUURUU, URUUURUUUURU, URUUUURUUURU, RUUUURUUUURU, RUUUUURUUUUR, RUUUURUUUUUR, UURUURUUURUU, UURUUURUURUU und UURUURUURUUU; oder

wenn die Menge A gleich 12 ist, und wenn die Option 1 oder die Option 2 verwendet wird, das folgende Schema 27 gewählt wird:

Schema 27:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

UUURUUUURUUU, UURUUUUUURUU, UURUUUURUUUU, URUUUUUUUURU, RUUUUURU-UUUU, UURUUURUUUU, UUUUURRUUUUU, RUUUUUUUUUUR, RUUUUUUUUUUU und UUUUURUUUUUU; und
eine zweite PUCCH-Struktur drei oder vier Symbolorte umfasst, die für die Übertragung von RS verwendet werden, und eine der folgenden PUCCH-Strukturen ist:
UURURUURURUU, URUURUURUUURU, URURUUURURUU, URURUUURURU, UURRU-UUURRUU, UURRUUURRUUU, RUURUUUURUUR, RUUURUURUUUR, RUUUURRUUUUR, RUUURURUUURU, URUUURUUURUU, URUUURUUUURU, URUUUURUUURU, RUUUURU-UUURU, RUUUUURUUUUR, RUUUURUUUUR, UURUURUUURUU, UURUUURUURUU und UURUURUURUUU;
und/oder

wenn die Menge A gleich 13 ist, und wenn die Option 1 oder die Option 3 verwendet wird, eines der folgenden Schemata 28-29 gewählt wird:

Schema 28:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
UURUUUUUUURUU, UUURUUUUURUUU, URUUUUUUUURU, RUUUUURUUUUUU, RUUUUUURU-UUUU, UURUUUUUURUUU, UUUUURRUUUUUU und RUUUUUUUUUUR;
Schema 29:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
UURURUUURURUU, URUURUURUURU, URURUUUURURU, URUURUURUURUU, URUURUURU-UURU, UURRUUUUURRUU, UUURRUUURRUUU, RUURUURUURUUU, RUURUUUUURUUR, RUUU-RUUURUUUR, RUUUURRUUUUUR, URUUURURUUURU, RUUURUURUUURU, UURUURUUURUU, URUUUURUUUURU, RUUUURUUUUUR, UUURUURUURUUU und UURUUUURUURUU; oder

wenn die Menge A gleich 13 ist, und wenn die Option 1 oder die Option 2 verwendet wird, das folgende Schema 30 gewählt wird:

Schema 30:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

UURUUUUUUURUU, UUURUUUUURUUU, URUUUUUUUURU, RUUUUURUUUUUU, RU-UUUUURUUUUU, UURUUUUUURUUU, UUUUURRUUUUUU, RUUUUUUUUUUR, RU-UUUUUUUUUUU und UUUUUURUUUUUU; und
eine zweite PUCCH-Struktur drei oder vier Symbolorte umfasst, die für die Übertragung von RS verwendet werden, und eine der folgenden PUCCH-Strukturen ist:
UURURUUURURUU, URUURUURUUURU, URURUUUURURU, URUURUURUURUU, URU-URUURUUURU, UURRUUUUURRUU, UUURRUUURRUUU, RUURUURUURUUU, RUURU-

UUUURUUR, RUUURUUURUUUR, RUUUURRUUUUUR, URUUURURUUURU, RUUURUURU-UURU, UURUUURUUURUU, URUUUURUUUURU, RUUUUURUUUUUR, UUURUURUURRUUU und UURUUUURUURUU;
und/oder

wenn die Menge A gleich 14 ist, und wenn die Option 1 oder die Option 3 verwendet wird, eines der folgenden Schemata 31-32 gewählt wird:

Schema 31:
Der PUCCH-Struktursatz umfasst eine PUCCH-Struktur, und die im PUCCH-Struktursatz enthaltene PUCCH-Struktur umfasst zwei Symbolorte, die für die Übertragung von RS verwendet werden, und ist eine der folgenden PUCCH-Strukturen:
UURUUUUUUUURUU, UUUURUUURUUUU, URUUUUUUUUURU, RUUUUURUUUUUU, UUURU-UUUUURUUU, UUUUUURRUUUUU und RUUUUUUUUUUUR;
Schema 32:
Der PUCCH-Struktursatz umfasst eine PUCCH-Struktur, und die im PUCCH-Struktursatz enthaltene PUCCH-Struktur umfasst drei oder vier Symbolorte, die zur Übertragung von RS verwendet werden, und ist eine der folgenden PUCCH-Strukturen:
URUUURUURUUURU, UURURUUUURURUU, URUURUUUURUURU, URUURUUURUURUU, URURU-UUUUURURU, UURUURUURUURUU, UURRUUUUUURRUU, UUURRUUUURRUUU, RUURUURURUU-RUUU, RUURUUUUURUUR, RUUURUUURUUUR, RUUUURRUUUUUR, UURUURUURUURU, URUUUURUUUURUU, URUUUURUUUURU, URUUUURUUUURU, RUUUURUUUUUUR, RU-UUUUURUUUUUR, RUUUURUUUURU, URUUUURUUUUUR, UUURUUURUURUUU, UUURUU-RUUURUUU, UURUUURUURRUUU und UURUUUURUUURUU; oder

wenn die Menge A gleich 14 ist, und wenn die Option 1 oder die Option 2 verwendet wird, das folgende Schema 33 gewählt wird:

Schema 33:

Der PUCCH-Struktursatz umfasst zwei PUCCH-Strukturen, wobei
eine erste PUCCH-Struktur einen oder zwei Symbolorte umfasst, die für die Übertragung von RS verwendet werden, und eine der folgenden PUCCH-Strukturen ist:

UURUUUUUUUURUU, UUUURUUURUUUU, URUUUUUUUUURU, RUUUUURUUUUUU, UUURUUUUUURUUU, UUUUUURRUUUUU, RUUUUUUUUUUUR, RUUUUUUUUUUUUU und UUUUUURUUUUUUU; und
eine zweite PUCCH-Struktur drei oder vier Symbolorte umfasst, die für die Übertragung von RS verwendet werden, und eine der folgenden PUCCH-Strukturen ist: R, URUUURUURUUURU, UU-RURUUUURURUU, URUURUUUURUURU, URUURUUURUURUU, URURUUUUUURURU, UU-RUURUURUURUU, UURRUUUUUURRUU, UUURRUUUURRUUU, RUURUURUURUUU, RU-URUUUUUURUUR, RUUUURUUURUUUR, RUUUUURRUUUUUR, UURUURUURUURU, URUUUURUUUURUU, URUUUURUUUURU, URUUUURUUUURU, RUUUURUUUUUUR, RUUUUUURUUUUUR, RUUUURUUUURU, URUUUURUUUUUR, UUURUUURUURUUU, UUURUURUUURUUU, UURUUURUURRUUU und UURUUUURUUURUU;
und
wobei in einer PUCCH-Struktur U einen Symbolort darstellt, der zur Übertragung von UCI verwendet wird, und R einen Symbolort darstellt, der zur Übertragung von RS verwendet wird.

9. Benutzergerät, das Mittel zur Durchführung des Verfahrens nach einem der Ansprüche 1 bis 4 umfasst.

10. Gerät, das Mittel zur Durchführung des Verfahrens nach einem der Ansprüche 5 bis 8 umfasst.

11. Computerlesbares Speichermedium, das Anweisungen enthält, die, wenn sie von einem Computer ausgeführt werden, den Computer veranlassen, das Verfahren nach einem der Ansprüche 1 bis 4 oder das Verfahren nach einem der Ansprüche 5 bis 8 auszuführen.

**Revendications**

1. Procédé de transmission PUCCH mis en oeuvre par un équipement utilisateur, comprenant :

   la détermination (101), par l'équipement utilisateur, d'une quantité A de symboles occupés par un Canal Physique de Commande de Liaison Montante, PUCCH, la quantité A étant un entier positif ;
   la détermination (102), par l'équipement utilisateur, d'un ensemble de structures PUCCH qui est défini en correspondance avec la quantité A des symboles, une structure PUCCH comprise dans l'ensemble de structures PUCCH comprenant la quantité A d'emplacements de symboles, l'ensemble de structures PUCCH comprenant une ou plusieurs structures PUCCH, une structure PUCCH étant une règle de distribution pour les emplacements de symboles utilisés pour transmettre des informations de commande de liaison montante, UCI, et des emplacements de symboles utilisés pour transmettre des RS ; et
   la détermination (103), par l'équipement utilisateur, d'une structure PUCCH correspondant au PUCCH à partir de l'ensemble de structures PUCCH, et l'exécution d'une transmission PUCCH sur la base de la structure PUCCH correspondante ;
   **caractérisé en ce que**, lorsque l'ensemble de structures PUCCH comprend plusieurs structures PUCCH, la quantité d'emplacements de symboles utilisés pour transmettre des signaux de référence, RS, dans différentes structures PUCCH est différente ;
   l'ensemble de structures PUCCH comprenant une ou plusieurs structures PUCCH, comprend :

   option 1 : lorsque la valeur de la quantité A des symboles est X1 à X2 et X3 à X4, pour chaque quantité A des symboles compris entre X1 à X2 et X3 à X4, la définition d'au moins deux structures PUCCH dans l'ensemble de structures PUCCH ; lorsque la valeur de la quantité A des symboles est X2+1 à X3-1, pour chaque quantité A des symboles à l'intérieur de X2+1 à X3-1, la définition d'une structure PUCCH dans l'ensemble de structures PUCCH ; X1, X2, X3 et X4 sont des entiers positifs, et X1 $\leq$ X2 < X3 $\leq$ X4 ; ou
   option 2 : pour chaque quantité A de symboles de 4 à 14, la définition d'au moins deux structures PUCCH dans l'ensemble de structures PUCCH ; ou
   option 3 : pour chaque quantité A de symboles de 4 à 14, la définition d'une structure PUCCH dans l'ensemble de structures PUCCH,
   dans lequel, lorsque l'ensemble de structures PUCCH comprend plusieurs structures PUCCH, la détermination, par l'équipement utilisateur, d'une structure PUCCH correspondant au PUCCH à partir du PUCCH d'ensemble de structure comprend :

   la sélection, par l'équipement utilisateur, d'une structure PUCCH en tant que structure PUCCH correspondante à partir de l'ensemble de structures PUCCH conformément à une instruction de configuration acquise ; et/ou
   la sélection, par l'équipement utilisateur, d'une structure PUCCH avec la plupart des emplacements de symboles utilisés pour transmettre des RS en tant que la structure PUCCH correspondante à partir de la structure PUCCH définie lors de la détermination qu'un saut de fréquence est effectué pendant la transmission PUCCH.

2. Procédé selon la revendication 1, dans lequel, lorsque l'ensemble de structures PUCCH comprend une structure PUCCH, la détermination, par l'équipement utilisateur, d'une structure PUCCH correspondant au PUCCH à partir de l'ensemble de structures PUCCH comprend : la prise, par l'équipement utilisateur, d'une structure PUCCH comprise dans l'ensemble de structures PUCCH en tant que structure PUCCH correspondante.

3. Procédé selon la revendication 1, dans lequel lorsqu'il est déterminé qu'un saut de fréquence est effectué pendant la transmission PUCCH, la détermination, par l'équipement utilisateur, d'une structure PUCCH correspondant au PUCCH à partir de l'ensemble de structures PUCCH, et la réalisation, par l'équipement utilisateur, transmission PUCCH sur la base de la structure PUCCH correspondante, comprenant :

   la transmission respective, par l'équipement utilisateur, des informations transportées dans un premier groupe de symboles et des informations transportées dans un deuxième groupe de symboles à différentes positions dans le domaine fréquentiel en prenant d'abord $\left\lfloor \frac{A}{2} \right\rfloor$ symboles compris par le PUCCH en tant que le premier groupe de symboles et les dernier $(\mathbb{A}-\left\lceil\frac{A}{2}\right\rceil)$ symboles compris par le PUCCH en tant que le deuxième groupe de symboles ; ou

la transmission respective, par l'équipement utilisateur, d'informations transportées dans un premier groupe de symboles et d'informations transportées dans un deuxième groupe de symboles à différentes positions dans le domaine fréquentiel en prenant d'abord $\left\lceil\frac{A}{2}\right\rceil$ symboles compris par le PUCCH en tant que le premier groupe

de symboles et les derniers $(\mathbb{A}-\left\lceil\frac{A}{2}\right\rceil)$ symboles compris par le PUCCH en tant que le deuxième groupe de symboles.

4.  Procédé selon l'une quelconque des revendications 1 à 3, dans lequel :

lorsque la quantité A est 4 et que l'option 1 ou l'option 3 est utilisée, l'un des schémas 1 à 2 suivants est sélectionné :

schéma 1 : l'ensemble de structures PUCCH comprend une structure PUCCH, et la structure PUCCH comprise dans l'ensemble de structures PUCCH comprend un emplacement de symbole utilisé pour transmettre des RS et est l'une des structures PUCCH suivantes : URUU, UURU et RUUU ;
schéma 2 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : URRU, RURU, RUUR et URUR ; ou

lorsque la quantité est 4 et que l'option 1 ou l'option 2 est utilisée, un schéma 3 suivant est sélectionné :
schéma 3 : l'ensemble de structures PUCCH comprend deux structures PUCCH, une première structure PUCCH comprenant un emplacement de symbole utilisé pour transmettre des RS et étant l'une des structures PUCCH suivantes : URUU, UURU et RUUU ; et une deuxième structure PUCCH comprend deux emplacements de symboles utilisés pour la transmission des RS et est l'une des structures PUCCH suivantes : URRU, RURU, RUUR et URUR ;
et/ou
lorsque la quantité A est 5 et que l'option 1 ou l'option 3 est utilisée, l'un des schémas suivants 4 à 5 est sélectionné :

schéma 4 : l'ensemble de structures PUCCH comprend une structure PUCCH, et la structure PUCCH comprise dans l'ensemble de structures PUCCH comprend un emplacement de symbole utilisé pour transmettre des RS et est l'une des structures PUCCH suivantes : UURUU, URUUU et RUUUU ;
schéma 5 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : URRUU, UURRU, RUURU, RURUU et URURU, ; ou

lorsque la quantité A est de 5 et que l'option 1 ou l'option 2 est utilisée, un schéma 6 suivant est sélectionné :
schéma 6 : l'ensemble de structures PUCCH comprend deux structures PUCCH, une première structure PUCCH comprenant un emplacement de symbole utilisé pour transmettre des RS et étant l'une des structures PUCCH suivantes : UURUU, URUUU et RUUUU ; et une deuxième structure PUCCH comprend deux emplacements de symboles utilisés pour transmettre des RS et est l'une des structures PUCCH suivantes : URRUU, UURRU, RUURU, RURUU et URURU ;
et/ou
lorsque la quantité A est 6 et que l'option 1 ou l'option 3 est utilisée, l'un des schémas 7 à 8 suivants est sélectionné :

schéma 7 : l'ensemble de structures PUCCH comprend une structure PUCCH, et la structure PUCCH comprise dans l'ensemble de structures PUCCH comprend un emplacement de symbole utilisé pour transmettre des RS et est l'une des structures PUCCH suivantes : URUUUU, UURUUU, UUURUU et RUUUUU ;
schéma 8 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : URURUU, URUURU, RUUUUR, URUUUR, RUUURU et UURRUU, ; ou

lorsque la quantité A est 6 et que l'option 1 ou l'option 2 est utilisée, un schéma 9 suivant est sélectionné : schéma 9 : l'ensemble de structures PUCCH comprend deux structures PUCCH, une première structure PUCCH comprenant un emplacement de symbole utilisé pour transmettre des RS et étant l'une des structures PUCCH suivantes : URUUUU, UURUUU, UUURUU et RUUUUU ; et une deuxième structure PUCCH comprend deux emplacements de symboles utilisés pour transmettre des RS et est l'une des structures PUCCH suivantes : URURUU, URUURU, RUUUUR, URUUUR, RUUURU et UURRUU ;
et/ou
lorsque la quantité A est 7 et que l'option 1 ou l'option 3 est utilisée, l'un des schémas suivants 10 à 11 est sélectionné :

schéma 10 : l'ensemble de structures PUCCH comprend une structure PUCCH, et la structure PUCCH comprise dans l'ensemble de structures PUCCH comprend un emplacement de symbole utilisé pour transmettre des RS et est l'une des structures PUCCH suivantes : URUUUUU, UURUUUU, UUURUUU et RUUUUUU ;
schéma 11 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes ;RUUUUUR, URUUUUR, RUUUURU, URUUURU, URUURUU, UURURUU, UURRUUU et UUURRUU, ; ou

lorsque la quantité A est 7 et que l'option 1 ou l'option 2 est utilisée, un schéma 12 suivant est sélectionné : schéma 12 : l'ensemble de structures PUCCH comprend deux structures PUCCH, une première structure PUCCH comprenant un emplacement de symbole utilisé pour transmettre des RS et étant l'une des structures PUCCH suivantes : URUUUUU, UURUUUU, UUURUUU et RUUUUUU ; et une deuxième structure PUCCH comprend deux emplacements de symboles utilisés pour transmettre des RS et est l'une des structures PUCCH suivantes : RUUUUUR, URUUUUR, RUUUURU, URUUURU, URUURUU, UURURUU, UURRUUU et UUURRUU ;
et/ou
lorsque la quantité A est 8 et que l'option 1 ou l'option 3 est utilisée, l'un des schémas suivants 13 à 14 est sélectionné :

schéma 13 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : URUUUURU, URUUURUU, RUUUUUUR, RUUUUURU, RUUUURUU, RUUURUUU, UUURRUUU et UURUURUU ;
schéma 14 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes : URRUURRU, URURURUR, RURURURU, RUURRUUR, RURUURUR, RUURUURU, RUURUUUR, RUUURUUR, URURUURU et URURURUU, ; ou

lorsque la quantité A est 8 et que l'option 1 ou l'option 2 est utilisée, un schéma 15 suivant est sélectionné : schéma 15 : l'ensemble de structures PUCCH comprend deux structures PUCCH, une première structure PUCCH comprenant un ou deux emplacements de symboles utilisés pour transmettre des RS et étant l'une des structures PUCCH suivantes : URUUUURU, URUUURUU, RUUUUUUR, RUUUUURU, RUUUURUU, RUUURUUU, UUURRUUU, UURUURUU, UUURUUUU et RUUUUUUU ; et une deuxième structure PUCCH comprend trois ou quatre emplacements de symboles utilisés pour transmettre des RS et est l'une des structures PUCCH suivantes : URRUURRU, URURURUR, RURURURU, RURUURUR, RUURRUUR, RUURUURU, RUURUUUR, RUUURUUR, URURUURU et URURURUU ;
et/ou
lorsque la quantité A est 9 et que l'option 1 ou l'option 3 est utilisée, l'un des schémas suivants 16 à 17 est sélectionné :

schéma 16 : l'ensemble de structures PUCCH comprend une structure PUCCH, et la structure PUCCH comprise dans l'ensemble de structures PUCCH comprend deux emplacements de symboles utilisés pour transmettre des RS et étant l'une des structures PUCCH suivantes : UURUUURUU, URUUUURUU,

URUUUUURU, URUUURUUU, RUUURUUUU, RUUUUUUR, RUUUURUU, RUUUUURU, RUUUU-RUUU, UURUUUURU, UUUURRUUUU et UUUURRUUUU ;

schéma 17 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes : URURURURU, URRUURRUU, URRUUURRU, RUURRUURU, RUURRUUUR, RUUURRUUR, RUUURURUUR, RURUURUUR, URURURUUR, RUUURUUUR, URUURUURU et URUUURURU; ou

lorsque la quantité A est 9 et que l'option 1 ou l'option 2 est utilisée, le schéma 18 suivant est sélectionné :
schéma 18 : l'ensemble de structures PUCCH comprend deux structures PUCCH, une première structure PUCCH comprenant un ou deux emplacements de symboles utilisés pour transmettre des RS et étant l'une des structures PUCCH suivantes : UURUUURUU, URUUUURUU, URUUUUURU, URUUURUUU, RUUU-RUUUU, RUUUUUUR, RUUUUURU, RUUUUUURU, RUUUURUUU, UURUUUURU, UUUURRUUUU, UUUURRUUUU, RUUUUUUUU et UUUURUUUU; et une deuxième structure PUCCH comprend trois ou quatre emplacements de symboles utilisés pour transmettre des RS et est l'une des structures PUCCH suivantes : URURURURU, URRUURRUU, URRUUURRU, RUURRUURU, RUURRUUUR, RUUURRUUR, RUUURU-RUUR, RURUURUUR, URURURUUR, RUUURUUUR, URUURUURU et URUUURURU ;
et/ou
lorsque la quantité A est de 10 et dans lequel l'option 1 ou l'option 3 est utilisée, l'un des schémas suivants 19 à 20 est sélectionné :

schéma 19 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : UURUUUURUU, URUUUURUUU, URUUUUUURU, RUUUURUUUU, UURUUURUUU, URUUUURUUU, URUUUUURUU, RUUUUUUUR, RUUUUUURUU, RUUUUURUUU et UUUURRUUUU ;
schéma 20 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes : URURURURUU, URURUURURU, URUURRUURU, URRUUUURRU, UURRUURRUU, RUURUURUUR, RUUURRUUUR, URU-RURUURU, RUUURUUURU, RUUURUUUR, URUURUURUU et URUUURUUUR ;

lorsque la quantité A est de 10 et que l'option 1 ou l'option 2 est utilisée, le schéma 21 suivant est sélectionné :
schéma 21 : l'ensemble de structures PUCCH comprend deux structures PUCCH, une première structure PUCCH comprenant un ou deux emplacements de symboles utilisés pour transmettre des RS et étant l'une des structures PUCCH suivantes : UURUUUURUU, URUUUURUUU, URUUUUUURU, RUUUURUUUU, UU-RUUURUUU, URUUURUUUU, URUUUUURUU, RUUUUUUUR, RUUUUUURUU, RUUUUURUUU, UUUURRUUUU, RUUUUUUUUU et UUUURUUUU ; et une deuxième structure PUCCH comprend trois ou quatre emplacements de symboles utilisés pour transmettre des RS et est l'une des structures PUCCH suivantes : URURURURUU, URURUURURU, URUURRUURU, URRUUUURRU, UURRUURRUU, RUURUURUUR, RUUURRUUUR, URURURUURU, RUUURUUURU, RUUURUUUUR, URUURUURUU et URUUURUUUR ;
et/ou
lorsque la quantité A est de 11 et que l'option 1 ou l'option 3 est utilisée, l'un des schémas suivants 22 à 23 est sélectionné :

schéma 22 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes ; UURUUUURUUU, UURUUUUURUU, URUUUURUUU, URUUUUUURU, RUUUURUUUUU, RUUUUURUUUU, UUURUUURUUU, URUUU-RUUUU, RUUUUUUUURU, URUUUUUUUR, URUUUUUURUU, UUUURRUUUUU et RUUUUUUUUUR ;
schéma 23 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes : URURURURUU, URU-RUURURUU, URURUURUURU, URRUUUURRU, URUURURUURU, URRUUUURRU, URRUUUR-RUU, UURRUUURRUU, RUURUUURUUR, RUUUURURUUUR, RUUURRUUUUR, RUUUURRUUUR, URUUURUUURU, RUUUURUUUUR, UURUURUURUU et URUUURUUURU ; ou

lorsque la quantité A est de 11 et que l'option 1 ou l'option 2 est utilisée, le schéma suivant 24 est sélectionné :
schéma 24 : l'ensemble de structures PUCCH comprend deux structures PUCCH, une première structure PUCCH comprenant un ou deux emplacements de symboles utilisés pour transmettre des RS et est l'une des structures PUCCH suivantes : UURUUUURUUU, UURUUUUURUU, URUUUUURUUU, URUUUUUURU, RUUUURUUUUU, RUUUURUUUUU, UUURUUURUUU, URUUURUUUU, RUUUUUUUURU, URUUUUUUUR, URUUUUUURUU, UUUURRUUUUU, RUUUUUUUUR, RUUUUUUUUUU et UUUUURUUUUU ; et une deuxième structure PUCCH comprend trois ou quatre emplacements de symboles utilisés pour transmettre des RS et est l'une des structures PUCCH suivantes : UURURURURUU, URURUU-RURUU, URURUURUURU, URURUUURURU, URUURURUURU, URRUUUURRU, URRUUURRUU, UURRUUURRUU, RUURUUURUUR, RUUURURUUUR, RUUURRUUUR, RUUURRUUUR, URUUU-RUUURU, RUUUURUUUUR, UURUURUURUU et URUUURUUURU ;
et/ou
lorsque la quantité A est de 12 et que l'option 1 ou l'option 3 est utilisée, l'un des schémas suivants 25 à 26 est sélectionné :

schéma 25 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : UUURUUUURUUU, UURUUUUUURUU, UURUUUUURUUU, URUUUUUUUURU, RUUUURUUUUU, UURUUURUUUU, UUUUURRUUUUU et RUUUUUUUUUUR ;
schéma 26 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes : UURURUURURUU, URUU-RUURUURU, URURUUURURUU, URURUUURURU, UURRUUUURRUU, UURRUUURRUUU, RUU-RUUUURUUR, RUUURUURUUUR, RUUUURRUUUUR, RUUURURUUUUR, URUUURUUURUU, URUUURUUURU, URUUUURUUURU, RUUUURUUUURU, RUUUURUUUUUR, RUUUURUUUUUR, UURUURUUURUU, UURUUURUURUU et UURUURUURUUU; ou

lorsque la quantité A est de 12 et que l'option 1 ou l'option 2 est utilisée, le schéma suivant 27 est sélectionné :
schéma 27 : l'ensemble de structures PUCCH comprend deux structures PUCCH, une première structure PUCCH comprenant un ou deux emplacements de symboles utilisés pour transmettre des RS et est l'une des structures PUCCH suivantes : UUURUUUURUUU, UURUUUUUURUU, UURUUUUURUUU, URUUUUUUU-RU, RUUUUURUUUUU, UUURUUURUUUU, UUUUURRUUUUU, RUUUUUUUUUUR, RUUUUUUUUUUU et UUUUURUUUUUU ; et une deuxième structure PUCCH comprend trois ou quatre emplacements de symboles utilisés pour transmettre des RS et est l'une des structures PUCCH suivantes : UURURUURURUU, URUU-RUURUURU, URURUUURURUU, URURUUURURU, UURRUUUURRUU, UURRUUURRUUU, RUU-RUUUURUUR, RUUURUURUUUR, RUUUURRUUUUR, RUUURURUUUUR, URUUURUUURUU, URUUU-RUUURU, URUUUURUUURU, RUUUURUUUURU, RUUUURUUUUUR, RUUUURUUUUUR, UURUU-RUUURUU, UURUUURUURUU et UURUURUURUUU ;
et/ou
lorsque la quantité A est de 13 et que l'option 1 ou l'option 3 est utilisée, l'un des schémas suivants 28 à 29 est sélectionné :

schéma 28 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : UURUUUUUUURUU, UUURUUUUU-RUUU, URUUUUUUUUURU, RUUUURUUUUUUU, RUUUUURUUUUUU, UURUUUUUURUUU, UUUUURRUUUUUU et RUUUUUUUUUUUR ;
schéma 29 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes :UURURUUURURUU, URUU-RUUURUURU, URURUUUURURU, URUURUURUURUU, URUURUURUUURU, UURRUUUURRUU, UUURRUUURRUUU, RUURUURUURUUU, RUURUUUURUUR, RUUURUUURUUUR, RUUUUR-RUUUUUR, URUUURURUUUURU, RUUUURUURUUURU, UURUUURUUURUU, URUUUURUUURUU, RUUUUURUUUUUR, UUURUURUURUUU et UURUUUURUURUU ; ou

lorsque la quantité A est de 13 et que l'option 1 ou l'option 2 est utilisée, le schéma 30 suivant est sélectionné :
schéma 30 : l'ensemble de structures PUCCH comprend deux structures PUCCH, une première structure PUCCH comprenant un ou deux emplacements de symboles utilisés pour transmettre des RS et étant l'une des structures PUCCH suivantes : UURUUUUUUURUU, UUURUUUUURUUU, URUUUUUUUURU, RUUUUURUUUUUU, RUUUUUURUUUUU, UUURUUUUURUUU, UUUURRUUUUUU, RUUUUUUUUUUUR, RUUUUUUUUUUUU et UUUUUURUUUUUU ; et une deuxième structure PUCCH comprend trois ou quatre emplacements de symboles utilisés pour transmettre des RS et est l'une des structures PUCCH_suivantes : UURURUUURURUU, URUURUUURUURU, URURUUUURURU, URUURUURUURUU, URUURUURUUURU, UURRUUUURRUU, UUURRUUURRUUU, RUURUURUURUUU, RUURUUUU-RUUR, RUUURUUURUUUR, RUUURRUUUUUR, URUUURURUURU, RUUURUURUUURU, UURUU-RUURUU, URUUURUUURU, RUUUURUUUUR, UUURUURUURUUU et UURUUUURUURUU ; et/ou

lorsque la quantité A est de 14 et que l'option 1 ou l'option 3 est utilisée, l'un des schémas suivants 31 à 32 est sélectionné :

 schéma 31 : l'ensemble de structures PUCCH comprend une structure PUCCH, et la structure PUCCH comprise l'ensemble de structures PUCCH comprend deux emplacements de symboles utilisés pour transmettre des RS et est l'une des structures PUCCH suivantes : UURUUUUUUUURUU, UUUURUUUU-RUUUU, URUUUUUUUUURU, RUUUUURUUUUUU, UUURUUUUURUUU, UUUUUURRUUUUUU et RUUUUUUUUUUUR ;

 schéma 32 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes : URUUURUURUUURU, UURURUUURURUU, URUURUUURUURU, URUURUURUURUU, URURUUUUURURU, UURUU-RUURUURUU, UURRUUUUURRUU, UUURRUUURRUUU, RUURUUURUURUUU, RUURUUUUU-RUUR, RUUURUUURUUUR, RUUUURRUUUUUR, UURUURUURUURU, URUUURUUUURUU, URUUUURUUUURU, URUUUURUUUURU, RUUUURUUUUUR, RUUUURUUUUUUR, RUUUUURUUUURU, URUUUURUUUUUR, UUURUUURUURUUU, UURUUURUUURUUU et UURUUUURUUURUU ; ou

lorsque la quantité A est de 14 et que l'option 1 ou l'option 2 est utilisée, le schéma 33 suivant est sélectionné :
schéma 33 : l'ensemble de structures PUCCH comprend deux structures PUCCH, une première structure PUCCH comprenant un ou deux emplacements de symboles utilisés pour transmettre des RS et étant l'une des structures PUCCH suivantes : UURUUUUUUUURUU, UUUURUUUUURUUU, URUUUUUUUUURU, RUUUUUURUUUUUU, UUURUUUUUURUUU, UUUUUURRUUUUUU, RUUUUUUUUUUUUR, RUUUUUUUUUUUUU et UUUUUURUUUUUUU ; et une deuxième structure PUCCH comprend trois ou quatre emplacements de symboles utilisés pour transmettre des RS et est l'une des structures PUCCH suivantes : URUUURUURUUURU, UURURUUURURUU, URUURUUURUURU, URUURUUURUURUU, URU-RUUUUURURU, UURUURUURUURU, UURRUUUUURRUU, UUURRUUURRUUU, RUURUUURUU-RUUU, RUURUUUUURUUR, RUUURUUURUUUR, RUUUURRUUUUUR, UURUURUUURUURU, URUUUURUUUURUU, URUUUURUUUUURU, URUUUURUUUUURU, RUUUURUUUUUUR, RUUUUU-RUUUUU, RUUUURUUUUURU, URUUUURUUUUUR, UUURUUURUURUUU, UUURUURUUURUUU UURUUURUUURUUU et UURUUUURUUURUU ;
et
dans laquelle, dans une structure PUCCH, U représente un emplacement de symbole utilisé pour transmettre des UCI, et R représente un emplacement de symbole utilisé pour transmettre des RS.

**5.** Procédé de réception de PUCCH mis en oeuvre par un dispositif, comprenant :

 la détermination (201), par le dispositif, d'une quantité A de symboles occupés par un Canal Physique de Commande de Liaison Montante, PUCCH, la quantité A étant un nombre entier positif ;
 la détermination (202), par le dispositif, d'un ensemble de structures PUCCH qui est défini en correspondance de la quantité A des symboles, une structure PUCCH comprise dans l'ensemble de structures PUCCH comprenant la quantité A d'emplacements de symboles, l'ensemble de structures PUCCH comprenant une ou plusieurs structures PUCCH, une structure PUCCH étant une règle de distribution pour des emplacements de symboles utilisés pour transmettre des informations de commande de liaison montante, UCI, et des emplacements de symboles utilisés pour transmettre des RS ; et
 la détermination (203), par le dispositif, d'une structure PUCCH correspondant à la structure PUCCH à partir de l'ensemble de structures PUCCH, et la mise en oeuvre d'une réception PUCCH sur la base de la structure PUCCH correspondante ;

**caractérisé en ce que**, lorsque l'ensemble de structures PUCCH comprend plusieurs structures PUCCH, la quantité d'emplacements de symboles utilisés pour transmettre des signaux de référence, RS, dans différentes structures PUCCH est différente :

l'ensemble de structures PUCCH qui comprend une ou plusieurs structures PUCCH, comprend :

option 1 : lorsque la valeur de la quantité A des symboles est X1 à X2 et X3 à X4, pour chaque quantité A des symboles dans X1 à X2 et X3 à X4, la définition d'au moins deux structures PUCCH dans l'ensemble de structures PUCCH ; lorsque la valeur de la quantité A des symboles est X2+1 à X3-1, pour chaque quantité A des symboles à l'intérieur de X2+1 à X3-1, la définition d'une structure PUCCH dans l'ensemble de structures PUCCH ; X1, X2, X3 et X4 sont des entiers positifs, et $X1 \leq X2 < X3 \leq X4$ ; ou

option 2 : pour chaque quantité A de symboles de 4 à 14, la définition d'au moins deux structures PUCCH dans l'ensemble de structures PUCCH, ou

option 3 : pour chaque quantité A de symboles de 4 à 14, définir une structure PUCCH dans l'ensemble de structures PUCCH,

lorsque l'ensemble de structures PUCCH comprend plusieurs structures PUCCH, déterminer, par le dispositif, une structure PUCCH correspondant à la structure PUCCH à partir de la structure PUCCH d'ensemble comprend :

la sélection, par le dispositif, d'une structure PUCCH en tant que structure PUCCH correspondante à partir de l'ensemble de structures PUCCH, et l'information, par le dispositif, d'un résultat de la sélection à un équipement utilisateur par le biais d'une instruction de configuration ; et/ou

la sélection, par le dispositif, d'une structure PUCCH avec la plupart des emplacements de symboles utilisés pour transmettre des RS en tant que structure PUCCH correspondante à partir de l'ensemble de structures PUCCH après avoir déterminé qu'un saut de fréquence est effectué pendant la transmission PUCCH, et l'information, par le dispositif, de l'équipement utilisateur d'une demande de saut de fréquence au moyen d'une instruction de configuration.

6. Procédé selon la revendication 5, dans lequel lorsque l'ensemble de structures PUCCH comprend une structure PUCCH, la détermination, par le dispositif, d'une structure PUCCH correspondant au PUCCH à partir de l'ensembles de structures PUCCH comprend : la prise, par le dispositif, de la structure PUCCH comprise dans l'ensemble de structures PUCCH en tant que structure PUCCH correspondante.

7. Procédé selon la revendication 5, dans lequel lorsqu'il est déterminé qu'un saut de fréquence est effectué lors d'une transmission PUCCH, la détermination, par le dispositif, d'une structure PUCCH correspondant au PUCCH à partir de l'ensemble de structures PUCCH, et la réalisation, par le dispositif, d'une réception PUCCH sur la base de la structure PUCCH correspondante, comprend :

la réception respective, par le dispositif, d'informations transportées dans un premier groupe de symboles et d'informations transportées dans un deuxième groupe de symboles à différentes positions dans le domaine fréquentiel en prenant des premiers $\left\lfloor \frac{A}{2} \right\rfloor$ symboles compris par le PUCCH en tant que le premier groupe de symboles et des derniers $\left( A - \left\lfloor \frac{A}{2} \right\rfloor \right)$ symboles compris par le PUCCH en tant que deuxième groupe de symboles ; ou

la réception respective, par le dispositif, d'informations portées dans un premier groupe de symboles et d'information portées dans un deuxième groupe de symboles à différentes positions dans le domaine fréquentiel en prenant des premiers $\left\lceil \frac{A}{2} \right\rceil$ symboles compris par le PUCCH en tant que le premier groupe de symboles et des derniers $\left( A - \left\lceil \frac{A}{2} \right\rceil \right)$ symboles compris par le PUCCH en tant que le deuxième groupe de symboles.

8. Procédé selon l'une quelconque des revendications 5 à 7, dans lequel :

lorsque la quantité A est de 4 et que l'option 1 ou l'option 3 est utilisée, l'un des schémas 1 à 2 suivants est sélectionné :

schéma 1 : l'ensemble de structures PUCCH comprend une structure PUCCH, et la structure PUCCH comprise dans l'ensemble de structures PUCCH comprend un emplacement de symbole utilisé pour transmettre des RS et est l'une des structures PUCCH suivantes : URUU, UURU et RUUU ;
schéma 2 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : URRU, RURU, RUUR et URUR ; ou

lorsque la quantité est de 4 et que l'option 1 ou l'option 2 est utilisée, un schéma 3 suivant est sélectionné :
schéma 3 : l'ensemble de structures PUCCH comprend deux structures PUCCH, une première structure PUCCH comprenant un emplacement de symbole utilisé pour transmettre des RS et étant l'une des structures PUCCH suivantes : URUU, UURU et RUUU ; et une deuxième structure PUCCH comprend deux emplacements de symboles utilisés pour transmettre des RS et est l'une des structures PUCCH suivantes : URRU, RURU, RUUR et URUR ;
et/ou
lorsque la quantité A est de 5 et que l'option 1 ou l'option 3 est utilisée, l'un des schémas suivants 4 à 5 est sélectionné :

schéma 4 : l'ensemble de structures PUCCH comprend une structure PUCCH, et la structure PUCCH comprise dans l'ensemble de structures PUCCH comprend un emplacement de symbole utilisé pour transmettre des RS et est l'une des structures PUCCH suivantes : UURUU, URUUU et RUUUU ;
schéma 5 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : URRUU, UURRU, RUURU, RURUU et URURU, ; ou

lorsque la quantité A est de 5 et que l'option 1 ou l'option 2 est utilisée, un schéma 6 suivant est sélectionné :
schéma 6 : l'ensemble de structures PUCCH comprend deux structures PUCCH, une première structure PUCCH comprenant un emplacement de symbole utilisé pour transmettre des RS et étant l'une des structures PUCCH suivantes : UURUU, URUUU et RUUUU ; et une deuxième structure PUCCH comprend deux emplacements de symboles utilisés pour transmettre des RS et est l'une des structures PUCCH suivantes : URRUU, UURRU, RUURU, RURUU et URURU ;
et/ou
lorsque la quantité A est de 6 et que l'option 1 ou l'option 3 est utilisée, l'un des schémas 7 à 8 suivants est sélectionné :

schéma 7 : l'ensemble de structures PUCCH comprend une structure PUCCH, et la structure PUCCH comprise dans l'ensemble de structures PUCCH comprend un emplacement de symbole utilisé pour transmettre des RS et est l'une des structures PUCCH suivantes : URUUUU, UURUUU, UUURUU et RUUUUU ;
schéma 8 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : URURUU, URUURU, RUUUUR, URUUUR, RUUURU et UURRUU, ; ou

lorsque la quantité A est de 6 et que l'option 1 ou l'option 2 est utilisée, un schéma 9 suivant est sélectionné :
schéma 9 : l'ensemble de structures PUCCH comprend deux structures PUCCH, une première structure PUCCH comprenant un emplacement de symbole utilisé pour transmettre des RS et étant l'une des structures PUCCH suivantes : URUUUU, UURUUU, UUURUU et RUUUUU ; et une deuxième structure PUCCH comprend deux emplacements de symboles utilisés pour transmettre des RS et est l'une des structures PUCCH suivantes : URURUU, URUURU, RUUUUR, URUUUR, RUUURU et UURRUU ;
et/ou
lorsque la quantité A est de 7 et que l'option 1 ou l'option 3 est utilisée, l'un des schémas suivants 10 à 11 est sélectionné :

schéma 10 : l'ensemble de structures PUCCH comprend une structure PUCCH, et la structure PUCCH comprise dans l'ensemble de structures PUCCH comprend un emplacement de symbole utilisé pour transmettre des RS et est l'une des structures PUCCH suivantes : URUUUUU, UURUUUU, UUURUUU et RUUUUUU ;

schéma 11 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : RUUUUUR, URUUUUR, RUUUURU, URUUURU, URUURUU, UURURUU, UURRUUU et UUURRUU, ; ou

lorsque la quantité A est de 7 et que l'option 1 ou l'option 2 est utilisée, un schéma 12 suivant est sélectionné :
schéma 12 : l'ensemble de structures PUCCH comprend deux structures PUCCH, une première structure PUCCH comprenant un emplacement de symbole utilisé pour transmettre des RS et étant l'une des structures PUCCH suivantes : URUUUUU, UURUUUU, UUURUUU et RUUUUUU ; et une deuxième structure PUCCH comprend deux emplacements de symboles utilisés pour transmettre des RS et est l'une des structures PUCCH suivantes : RUUUUUR, URUUUUR, RUUUURU, URUUURU, URUURUU, UURURUU, UURRUUU et UUURRUU ;
et/ou
lorsque la quantité A est de 8 et que l'option 1 ou l'option 3 est utilisée, l'un des schémas suivants 13 à 14 est sélectionné :

schéma 13 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : URUUUURU, URUUURUU, RUUUUUUR, RUUUUURU, RUUUURUU, RUUURUUU, UUURRUUU et UURUURUU ;
schéma 14 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes ; URRUURRU, URURURUR, RURURURU, RUURRUUR, RURUURUR, RUURUURU, RUURUUUR, RUUURUUR, URURUURU et URURURUU ; ou

lorsque la quantité A est de 8 et que l'option 1 ou l'option 2 est utilisée, un schéma 15 suivant est sélectionné :
schéma 15 : l'ensemble de structures PUCCH comprend deux structures PUCCH, une première structure PUCCH comprenant un ou deux emplacements de symboles utilisés pour transmettre des RS et étant l'une des structures PUCCH suivantes : URUUUURU, URUUURUU, RUUUUUUR, RUUUUURU, RUUUURUU, RUUURUUU, UUURRUUU, UURUURUU, UUURUUUU et RUUUUUUU ; et une deuxième structure PUCCH comprend trois ou quatre emplacements de symboles utilisés pour transmettre des RS et est l'une des structures PUCCH suivantes : URRUURRU, URURURUR, RURURURU, RURUURUR, RUURRUUR, RUURUURU, RUURUUUR, RUUURUUR, URURUURU et URURURUU ;
et/ou
lorsque la quantité A est de 9 et que l'option 1 ou l'option 3 est utilisée, l'un des schémas suivants 16 à 17 est sélectionné :

schéma 16 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : UURUUURUU, URUUUURUU, URUUUUURU, URUUURUUU, RUUURUUUU, RUUUUUUUR, RUUUUURUU, RUUUUUURU, RUUUURUUU, UURUUUURU, UUUURRUUU et UUURRUUUU ;
schéma 17 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes : URURURURU, URRUURRUU, URRUUURRU, RUURRUURU, RUURRUUUR, RUUURRUUR, RUUURURUUR, RURUURUUR, URURURUUR, RUUURUUUR, URUURUURU et URUUURURU ; ou

lorsque la quantité A est de 9 et que l'option 1 ou l'option 2 est utilisée, un schéma 18 suivant est sélectionné :
schéma 18 : l'ensemble de structures PUCCH comprend deux structures PUCCH, une première structure PUCCH comprenant un ou deux emplacements de symboles utilisés pour transmettre des RS et étant l'une des structures PUCCH suivantes : UURUUURUU, URUUUURUU, URUUUUURU, URUUURUUU, RUUURUUUU, RUUUUUUUR, RUUUUURUU, RUUUUUURU, RUUUURUUU, UURUUUURU, UUUURRUUU, UUURRUUUU, RUUUUUUUU et UUUURUUUU ; et une deuxième structure PUCCH comprend trois ou quatre emplacements de symboles utilisés pour transmettre des RS et est l'une des structures PUCCH suivantes :

URURURURU, URRUURRUU, URRUUURRU, RUURRUURU, RUURRUUUR, RUUURRUUR, RUURURUUR, RURUURUUR, URURURUUR, RUUURUUUR, URUURUURU et URUUURURU ;

et/ou

lorsque la quantité A est de 10 et que l'option 1 ou l'option 3 est utilisée, l'un des schémas suivants 19 à 20 est sélectionné :

schéma 19 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : UURUUUURUU, URUUUURUUU, URUUUUUURU, RUUUURUUUU, UURUUURUUU, URUUURUUUU, URUUUUURUU, RUUUUUUUUR, RUUUUUURUU, RUUUUURUUU et UUUURRUUUU ;

schéma 20 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes : URURURURUU, URURUURURU, URUURRUURU, URRUUUURRU, UURRUURRUU, RUURUURUUR, RUUURRUUUR, URU-RURUURU, RUUURUUURU, RUUURUUUR, URUURUURUU et URUUURUUUR ; ou

lorsque la quantité A est de 10 et que l'option 1 ou l'option 2 est utilisée, un schéma 21 suivant est sélectionné :
schéma 21 : l'ensemble de structures PUCCH comprend deux structures PUCCH, une première structure PUCCH comprenant un ou deux emplacements de symboles utilisés pour transmettre des RS et étant l'une des structures PUCCH suivantes : UURUUUURUU, URUUUURUUU, URUUUUUURU, RUUUURUUUU, UU-RUUURUUU, URUUURUUUU, URUUUUURUU, RUUUUUUUR, RUUUUUURUU, RUUUUURUUU, UUUURRUUUU, RUUUUUUUUU et UUUURUUUUU ; et une deuxième structure PUCCH comprend trois ou quatre emplacements de symboles utilisés pour transmettre des RS et est l'une des structures PUCCH suivantes : URURURURUU, URURUURURU, URUURRUURU, URRUUUURRU, UURRUURRUU, RUURUURUUR, RUUURRUUUR, URURURUURU, RUUURUUURU, RUUURUUUUR, URUURUURUU et URUUURUUUR ;

et/ou

lorsque la quantité A est de 11 et que l'option 1 ou l'option 3 est utilisée, l'un des schémas suivants 22 à 23 est sélectionné :

schéma 22 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivants ; UURUUUURUUU, UURUUUUURUU, URUUUURUUU, URUUUUUURU, RUUUURUUUUU, RUUUURUUUU, UUURUUURUUU, URUUU-RUUUU, RUUUUUUUURU, URUUUUUUUR, URUUUUURUU, UUUURRUUUUU et RUUUUUUUUUR ;

schéma 23 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes : UURURURURUU, URURUURURUU, URURUURUURU, URURUUURURU, URUURURUURU, URRUUUUURRU, URRUUUUR-RUU, UURRUUURRUU, RUURUUURUUR, RUUUURURUUUR, RUUURRUUUUR, RUUUURRUUUUR, URUUURUUURU, RUUURUUUUR, UURUURUURUU et URUUURUUURU ; ou

lorsque la quantité A est de 11 et que l'option 1 ou l'option 2 est utilisée, le schéma suivant 24 est sélectionné :
schéma 24 : l'ensemble de structures PUCCH comprend deux structures PUCCH, une première structure PUCCH comprenant un ou deux emplacements de symboles utilisés pour transmettre des RS et étant l'une des structures PUCCH suivantes : UURUUUURUUU, UURUUUUURUU, URUUUUURUUU, URUUUUUURU, RUUUURUUUUU, RUUUUURUUUU, UUURUUURUUU, URUUURUUUU, RUUUUUUUURU, URUUUUUUUR, URUUUUUURUU, UUUURRUUUUU, RUUUUUUUUUR, RUUUUUUUUUU et UUUUURUUUUU ; et une deuxième structure PUCCH comprend trois ou quatre emplacements de symboles utilisés pour transmettre des RS et est l'une des structures PUCCH suivantes : UURURURURUU, URURUURURUU, URURUURUURU, URURUUURURU, URUURURUURU, URRUUUUURRU, URRUUUURRUU, UURRUUURRUU, RUURUUURUUR, RUUURURUUUR, RUUURRUUUUR, RUUUURRUUUUR, URUUU-RUUURU, RUUUURUUUUR, UURUURUURUU et URUUURUUURU ;

et/ou

lorsque la quantité A est de 12 et que l'option 1 ou l'option 3 est utilisée, l'un des schémas suivants 25 à 26 est sélectionné :

schéma 25 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : UUURUUUURUUU, UURUUUUUURUU, UURUUUUURUUU, URUUUUUUURU, RUUUURUUUUU, UURUUURUUUU, UUUUURRUUUUU et RUUUUUUUUUR ;

schéma 26 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes : UURURUUURURUU, URU-RUURUURU, URURUUURURUU, URURUUURURU, UURRUUUURRUU, UURRUUURRUUU, RUU-RUUUURUUR, RUUURUURUUUR, RUUUURRUUUUR, RUUURURUUURU, URUUURUUURUU, URUUURUUUURU, URUUURUUURU, RUUUURUUUURU, RUUUUURUUUUR, RUUUURUUUUUR, UURUURUUURUU, UURUUURUURUU et UURUURUURUUU ; ou

lorsque la quantité A est de 12 et que l'option 1 ou l'option 2 est utilisée, le schéma suivant 27 est sélectionné :

schéma 27 : l'ensemble de structures PUCCH comprend deux structures PUCCH, une première structure PUCCH comprenant un ou deux emplacements de symboles utilisés pour transmettre des RS et étant l'une des structures PUCCH suivantes : UUURUUUURUUU, UURUUUUUURUU, UURUUUUURUUU, URUUUUUUURU, RUUUURUUUUU, UURUUURUUUU, UUUUURRUUUUU, RUUUUUUUUUR, RUUUUUUUUUUU et UUUUURUUUUU ; et une deuxième structure PUCCH comprend trois ou quatre emplacements de symboles utilisés pour transmettre des RS et est l'une des structures PUCCH suivantes : URURURURUR, URURURURUR, URURUUURUR, URURUUURURRU, URURUUURRURU, URRUUUURRU, URRUUUURRUUU, RUUUURUUURUR, RUUUURUUUR, RUUUURUUUR, URUUURUUURUU, URUUURUUUURU, URUUUURUUURU, RUUUURUUUR, RUUUURUUUR, RUUUURUUUR, RU UUURUUUUUR, UUURUUUUURUU, UUURUURUURUU et UURUURUURUUU ;

et/ou

lorsque la quantité A est de 13 et que l'option 1 ou l'option 3 est utilisée, l'un des schémas suivants 28 à 29 est sélectionné :

schéma 28 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : UURUUUUUUURUU, UUURUUUU-RUUU, URUUUUUUUURU, RUUUURUUUUUU, RUUUUURUUUUU, UURUUUUUURUU, UUUUURRUUUUU et RUUUUUUUUUUR ;

schéma 29 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'une des structures PUCCH suivantes : UURURUUURURUU, URUURUUURUURU, URURUUUURURU, URUURUURUURUU, URUURUURUUURU, UUR-RUUUURRUU, UUURRUUURRUUU, RUURUURUURUU, RUURUUUURUUR, RUUURUU-RUUUR, RUUUURRUUUUR, URUUURURUUURU, RUUURUURUUURU, UURUUURUURUU, URUUUURUUUURU, RUUUUURUUUUUR, UUURUURUURUUU et UURUUUURUURUU ; ou

lorsque la quantité A est de 13 et que l'option 1 ou l'option 2 suivante est utilisée, le schéma 30 suivant est sélectionné :

schéma 30 : l'ensemble de structures PUCCH comprend deux structures PUCCH, une première structure PUCCH comprenant un ou deux emplacements de symboles utilisés pour transmettre des RS et étant l'une des structures PUCCH suivantes : UURUUUUUUURUU, UUURUUUUURUUU, URUUUUUUUURU, RUUUURUUUUUU, RUUUUURUUUUU, UURUUUUUURUU, UUUUURRUUUUU, RUUUUUUUUUUR, RUUUUUUUUUUU et UUUUUURUUUUU ; et une deuxième structure PUCCH comprend trois ou quatre emplacements de symboles utilisés pour transmettre des RS et est l'une des structures PUCCH suivantes : UURURUUURURUU, URUURUUURUURU, URURUUUURURU, URUURUURUURUU, URUURUURUUURU, UURRUUUUURRUU, UUURRUUURRUUU, RUURUURUURUUU, RUURUUUUU-RUUR, RUUURUURUUUR, RUUUURRUUUUR, URUUURURUUURU, RUUURUURUUURU, UURUUU-RUUURUU, URUUUURUUUURU, RUUUUURUUUUUR, UUURUURUURUUU et UURUUUURUURUU ;

et/ou

lorsque la quantité A est de 14 et que l'option 1 ou l'option 3 est utilisée, l'un des schémas suivants 31 à 32 est sélectionné :

schéma 31 : l'ensemble de structures PUCCH comprend une structure PUCCH, et la structure PUCCH comprise dans l'ensemble de structures PUCCH comprend deux emplacements de symboles utilisés pour transmettre des RS et est l'une des structures PUCCH suivantes : UURUUUUUUUURUU, UUUURUUUU-RUUUU, URUUUUUUUUURU, RUUUUUURUUUUU, UUURUUUUURUUU, UUUUUURRUUUUU et RUUUUUUUUUUUR ;

schéma 32 : l'ensemble de structures PUCCH comprend une structure PUCCH, et la structure PUCCH comprise dans l'ensemble de structures PUCCH comprend trois ou quatre emplacements de symboles utilisés pour transmettre des RS et est l'un des suivants : URUURUURUUURU, UURURUUUURURUU, URUURUUUURUURU, URUURUURUURUU, URURUUUUURURU, UURUURUURUURUU, UUR-RUUUUURRUU, UUURRUUURRUUU, RUURUUURUURUUU, RUURUUUUURUUR, RUUU-RUUUURUUUR, RUUUUURRUUUUUR, UURUURUURUURU, URUUUURUUUURUU, URUUU-RUUUUURU, URUUUURUUUURU, RUUUUURUUUUUR, RUUUUUURUUUUUR, RUUUU-RUUUURU, URUUUURUUUUR, UUURUURUURUUU, UUURUURUUURUUU, UURUURUUU-RUUU et UURUUUURUUURUU ; ou

lorsque la quantité A est de 14 et que l'option 1 ou l'option 2 est utilisée, le schéma suivant 33 est sélectionné :

schéma 33 : l'ensemble de structures PUCCH comprend deux structures PUCCH, une première structure PUCCH comprenant un ou deux emplacements de symboles utilisés pour transmettre des RS et étant l'une des structures PUCCH suivantes : UURUUUUUUUURUU, UUUURUUUURUUUU, URUUUUUUUUUURU, RUUUUUURUUUUUU, UUURUUUUURUUU, UUUUUURRUUUUU, RUUUUUUUUUUUUR, RUUUUUUUUUUUUU et UUUUUURUUUUUU ; et une deuxième structure PUCCH comprend trois ou quatre emplacements de symboles utilisés pour transmettre des RS et est l'une des structures PUCCH suivantes : R, URUUURUURUUURU, UURURUUUURURUU, URUURUUUURUURU, URUURUURUURUU, URU-RUUUUURURU, UURUURUURUURU, UURRUUUUUURRUU, UUURRUUURRUUU, RUURUUURUU-RUUU, RUURUUUUURUUR RUUURUUURUUUR, RUUUUURRUUUUR, UURUURUURUURU, URUUURUUURUU, URUUUURUUUUURU, URUUUURUUUURU, RUUUUURUUUUUR, RUUUU-RUUUUUR, RUUUUURUUUURU, URUUUURUUUUUR, UUURUUURUURUUU, UUURUUURUURUUU, UURUUURUUURUU et UURUUUURUUURUU ; et,

dans une structure PUCCH, U représente un emplacement de symbole utilisé pour transmettre des UCI, et R représente un emplacement de symbole utilisé pour transmettre des RS.

**9.** Équipement utilisateur comprenant des moyens pour mettre en oeuvre le procédé selon l'une quelconque des revendications 1 à 4.

**10.** Dispositif comprenant des moyens pour mettre en oeuvre le procédé selon l'une quelconque des revendications 5 à 8.

**11.** Support de stockage lisible par ordinateur comprenant des instructions qui, lorsqu'elles sont exécutées par un ordinateur, amènent l'ordinateur à mettre en oeuvre le procédé selon l'une quelconque des revendications 1 à 4 ou le procédé selon l'une quelconque des revendications 5 à 8.

Determine the number A of symbols occupied by a PUCCH — 101

Determine a PUCCH structure set that is defined in correspondence to the number A of the symbols, wherein a PUCCH structure included in the PUCCH structure set includes the number A of symbol locations, the PUCCH structure set including one or more PUCCH structures, and when multiple PUCCH structures are included, the number of symbol locations used for transmitting pilot (RS) information in different PUCCH structures is different; and a PUCCH structure is a distribution rule for symbol locations used for transmitting uplink control information (UCI) and symbol locations used for transmitting RS — 102

Determine a PUCCH structure corresponding to the PUCCH from the PUCCH structure set, and perform PUCCH transmission on the basis of the corresponding PUCCH structure — 103

Fig. 1

Determine the number A of symbols occupied by a PUCCH

201

Determine a PUCCH structure set that is defined in correspondence to the number A of the symbols, wherein a PUCCH structure included in the PUCCH structure set includes the number A of symbol locations, the PUCCH structure set includes one or more PUCCH structures, and when multiple PUCCH structures are included, the number of symbol locations used for transmitting pilot (RS) information in different PUCCH structures is different; and a PUCCH structure is a distribution rule for symbol locations used for transmitting uplink control information (UCI) and symbol locations used for transmitting RS

202

Determine a PUCCH structure corresponding to the PUCCH from the PUCCH structure set, and perform PUCCH reception on the basis of the corresponding PUCCH structure

203

Fig. 2

User Equipment

| Determination unit 301 | Transmission unit 302 |

Fig. 3

Device

| Determination unit 401 | Transceiving unit 402 |

Fig. 4

501

Processor

502

Memory

Bus interface

503

Transceiver

504

User
interface

Fig. 5

601

Processor

602

Memory

Bus interface

603

Transceiver

Fig. 6

**EP 3 667 983 B1**

## REFERENCES CITED IN THE DESCRIPTION

**Patent documents cited in the description**

- CN 201710687285